(19) Europäisches Patentamt
European Patent Office
Office européen des brevets

(11) EP 3 129 829 B1

(12) **EUROPÄISCHE PATENTSCHRIFT**

(45) Veröffentlichungstag und Bekanntmachung des Hinweises auf die Patenterteilung:
**30.10.2019 Patentblatt 2019/44**

(21) Anmeldenummer: **15711429.9**

(22) Anmeldetag: **20.03.2015**

(51) Int Cl.:
***G02F 1/137*** (2006.01) ***C09K 19/60*** (2006.01)
***C09K 19/30*** (2006.01) ***C09K 19/34*** (2006.01)
***E06B 9/24*** (2006.01)

(86) Internationale Anmeldenummer:
**PCT/EP2015/000617**

(87) Internationale Veröffentlichungsnummer:
**WO 2015/154848 (15.10.2015 Gazette 2015/41)**

(54) **FLÜSSIGKRISTALLINES MATERIAL**

LIQUID CRYSTAL MATERIAL

MATÉRIAU À BASE DE CRISTAUX LIQUIDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.04.2014 EP 14001335**

(43) Veröffentlichungstag der Anmeldung:
**15.02.2017 Patentblatt 2017/07**

(73) Patentinhaber: **Merck Patent GmbH**
**64293 Darmstadt (DE)**

(72) Erfinder:
- **JUNGE, Michael**
  **64319 Pfungstadt (DE)**
- **FISCHER, Mila**
  **64367 Muehltal (DE)**
- **PATWAL, Ursula**
  **64353 Reinheim (DE)**
- **KIRSCH, Peer**
  **64342 Seeheim-Jugenheim (DE)**
- **BECK, Susann**
  **64283 Darmstadt (DE)**

(56) Entgegenhaltungen:
**WO-A1-2009/141295** **WO-A1-2013/097919**
**WO-A1-2014/180525** **WO-A2-2014/135240**
**JP-A- 2003 104 976** **US-A- 5 762 824**
**US-A1- 2007 218 216**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 129 829 B1

## Beschreibung

Die vorliegende Erfindung betrifft ein flüssigkristallines Material, enthaltend mindestens einen Farbstoff F und mindestens eine Verbindung einer Formel (IA) oder (IB), die im Folgenden näher charakterisiert ist. Die vorliegende Erfindung betrifft auch eine optische Schaltvorrichtung, insbesondere eine Vorrichtung zur homogenen Regulierung des Lichtdurchtritts durch eine Fläche, enthaltend das oben beschriebene flüssigkristalline Material.

Unter dem Begriff Licht wird im Rahmen der vorliegenden Erfindung insbesondere elektromagnetische Strahlung im UV-A-, VIS-, sowie NIR-Bereich verstanden, d.h. gemäß üblicher Definitionen Licht einer Wellenlänge von 320 nm bis 2000 nm. Nochmals insbesondere wird darunter Licht einer Wellenlänge verstanden, welche von den üblicherweise in Fenstern verwendeten Materialien (z. B. Glas) nicht oder nur geringfügig absorbiert wird.

Bevorzugt wird unter dem Licht, dessen Durchtritt von der erfindungsgemäßen Vorrichtung reguliert wird, Tageslicht verstanden. Tageslicht stellt Licht dar, welches von der Sonne ausgeht. Tageslicht geht bevorzugt direkt von der Sonne aus. Es kann jedoch auch über Spiegelung, Brechung, oder über Absorption und anschließende Emission durch beliebige Materialien indirekt von der Sonne ausgehen.

Unter einem flüssigkristallinen Material wird ein Material verstanden, das unter bestimmten Bedingungen flüssigkristalline Eigenschaften aufweist. Der Terminus flüssigkristalline Eigenschaften ist dem Fachmann geläufig und wird so verstanden wie auf dem Gebiet der physikalischen Chemie üblich. Im engeren Sinne wird darunter verstanden, dass das Material sowohl flüssig ist, als auch richtungsabhängige Eigenschaften aufweist. Typischerweise sind die flüssigkristallinen Eigenschaften von der Temperatur abhängig. Im engeren Sinne wird daher unter einem flüssigkristallinen Material ein Material verstanden, das in einem Temperaturbereich, der die Raumtemperatur einschließt, flüssigkristalline Eigenschaften aufweist.

Eine optische Schaltvorrichtung ist eine Vorrichtung, welche den Lichtdurchtritt regulieren kann. Insbesondere weist sie zwei oder mehr unterschiedliche Schaltzustände auf, von denen mindestens ein Schaltzustand einen relativ gesehen geringen Energiedurchtritt zulässt, und mindestens ein anderer Schaltzustand einen relativ gesehen hohen Energiedurchtritt zulässt. Eine solche optische Schaltvorrichtung kann beispielsweise in Anzeigevorrichtungen oder in schaltbaren Fenstern eingesetzt werden.

Schaltbare Fenster werden zur Regulierung des Lichteintritts in einen Raum hinein eingesetzt und sind im Überblick beispielsweise in B. Jelle et al., Solar Energy Materials & Solar Cells 2012, S. 1 - 28, beschrieben.

Eine Vorrichtung zur homogenen Regulierung des Lichtdurchtritts durch eine Fläche ist eine spezielle Variante einer optischen Schaltvorrichtung, bei der der Lichtdurchtritt innerhalb einer größeren Fläche homogen, d.h. gleichmäßig stark ist. Bevorzugt hat die genannte größere Fläche eine Ausdehnung von mindestens 0.01 $m^2$, besonders bevorzugt von mindestens 0.1 $m^2$, ganz besonders bevorzugt von mindestens 0.5 $m^2$, und am stärksten bevorzugt von mindestens 1 $m^2$. Homogen, d.h. gleichmäßig, ist dabei in Abgrenzung von gemustert oder nach Domänen unterteilt (gepixelt) zu verstehen, wie es bei optischen Schaltvorrichtungen der Fall ist, die in Anzeigevorrichtungen verwendet werden. Geringfügige Abweichungen von der Homogenität, insbesondere wenn sie durch Defekte entstehen, werden bei dieser Definition vernachlässigt. Vorrichtungen zur homogenen Regulierung des Lichtdurchtritts werden bevorzugt in schaltbaren Fenstern verwendet.

Im Stand der Technik sind flüssigkristalline Materialien enthaltend mindestens eine Farbstoffverbindung beschrieben, die in Vorrichtungen zur homogenen Regulierung des Lichtdurchtritts durch eine Fläche eingesetzt werden. Beispiele hierfür sind WO 2009/141295, WO 2014/090367 und die noch nicht offengelegte Anmeldung EP 14000141.3.

WO 2013/097919 A1 beschreibt eine Vorrichtung zur temperaturabhängigen Regulierung des Energiedurchtritts, welche eine Schaltschicht und zwei Polarisationsschichten umfasst. US 2007/0218216 A1 beschreibt ein Lichtmodulationsmaterial umfassend ein flüssigkristallines Host-Medium mit negativer dielektrischer Anisotropie, mindestens einen dichroitischen Farbstoff und mindestens ein Polymermaterial zur Verwendung in einer Flüssigkristallvorrichtung. JP 2003-104976 A beschreibt Benzothiadiazolderivate zur Verwendung in unter anderem Flüssigkristallanzeigeelementen. WO 2014/135240 A2 bildet Stand der Technik gemäß Artikel 54(3) EPÜ und beschreibt eine Vorrichtung zur Regulierung des Lichtdurchtritts durch eine lichtdurchlässige Fläche, welche eine Schaltschicht aufweist, die ein flüssigkristallines Medium enthaltend mindestens einen dichroitischen Farbstoff enthält. WO 2014/180525 A1 bildet ebenfalls Stand der Technik gemäß Artikel 54(3) EPÜ und beschreibt eine Vorrichtung mit zwei flüssigkristallinen Schaltschichten zur Regulierung des Energiedurchtritts, wobei die Schaltschichten ein flüssigkristallines Medium enthaltend mindestens eine dichroitische Verbindung enthalten.

Weiterhin sind im Stand der Technik flüssigkristalline Materialien enthaltend mindestens eine Farbstoffverbindung beschrieben, die in optischen Schaltvorrichtungen für Anzeigevorrichtungen eingesetzt werden (US 5762824).

Es besteht jedoch weiterhin Bedarf an flüssigkristallinen Materialien für die genannten Verwendungen. Insbesondere besteht Bedarf an flüssigkristallinen Materialien zur Verwendung in Vorrichtungen zur homogenen Regulierung des Lichtdurchtritts. Erwünschte technische Eigenschaften sind dabei gute Löslichkeit der Farbstoffverbindungen im flüssigkristallinen Material, gute Lösungsstabilität der Farbstoffverbindungen im flüssigkristallinen Material, insbesondere zeitlich lang andauernde gute und vollständige Löslichkeit im flüssigkristallinen Material, sowie eine hohe Lichtstabilität

des flüssigkristallinen Materials. Desweiteren besteht Bedarf, dass das flüssigkristalline Material über längere Zeiten seines Einsatzes in der oben genannten Schaltvorrichtung eine möglichst geringe Änderung des elektrischen Widerstands erfährt. Hierzu ist es wünschenswert, Materialien mit möglichst hohen spezifischen Widerständen und damit korrespondierend hohen sogenannten Voltage Holding Ratios einzusetzen.

Überraschend wurde gefunden, dass flüssigkristalline Materialien, wie unten beschrieben, wenigstens eine, bevorzugt mehrere, der oben genannten wünschenswerten Eigenschaften aufweisen.

Gegenstand der vorliegenden Erfindung ist somit ein flüssigkristallines Material mit einem Klärpunkt von höher als 95°C und mit einer positiven dielektrischen Anisotropie Δε, enthaltend eine oder mehrere Farbstoffverbindungen F, und eine oder mehrere Verbindungen einer Formel (IA) oder (IB)

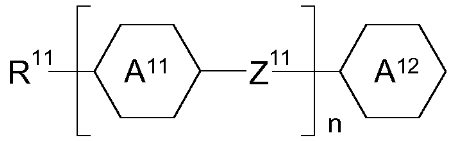

Formel (IA)

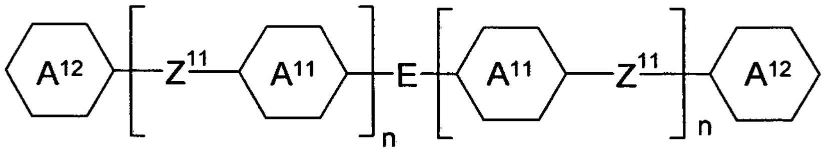

Formel (IB),

wobei für die auftretenden Gruppen und Indices gilt:

$A^{11}$ ist bei jedem Auftreten gleich oder verschieden gewählt aus

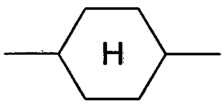 , 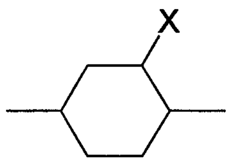 , 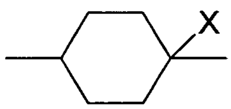 , 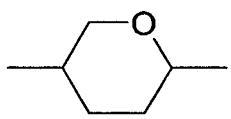 ,

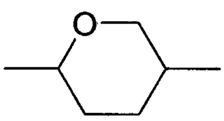 , 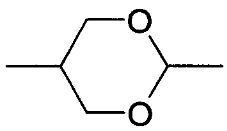 , 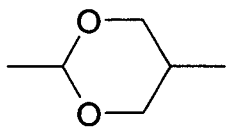 , 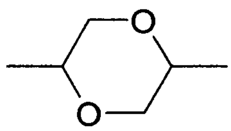 ,

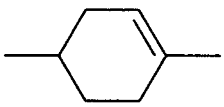 , 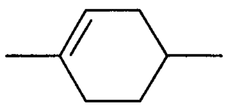 , 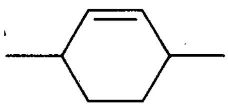 , 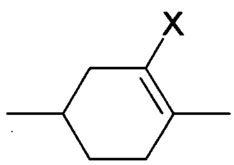 ,

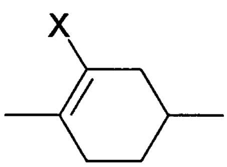 , 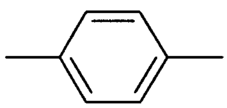 , 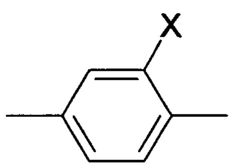 , 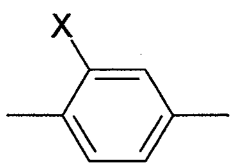 ,

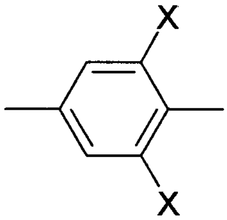 , 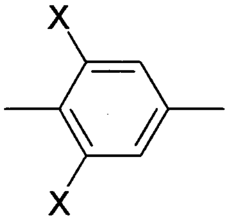 , 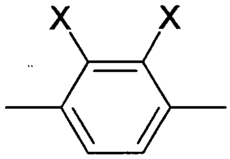 , 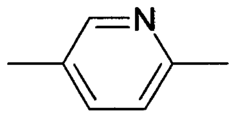 ,

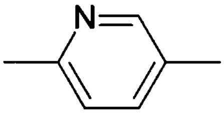 , 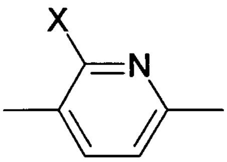 , 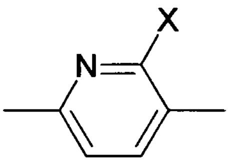 , 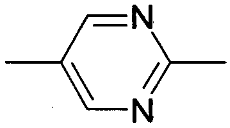 ,

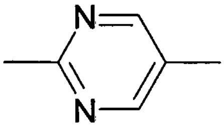 , 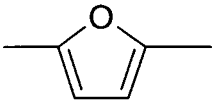 , 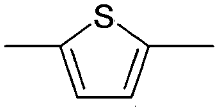 ,

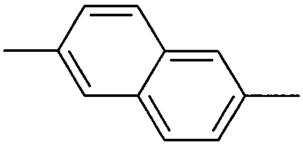 , 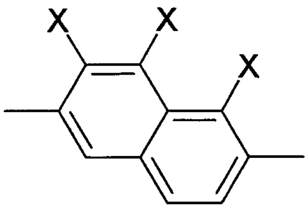 , 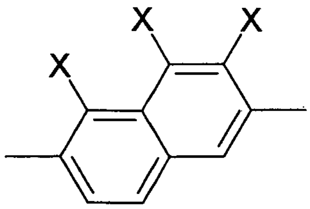 ,

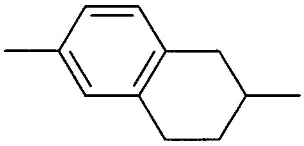 , 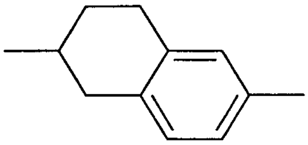 , 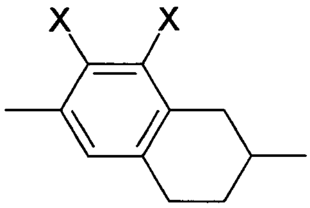 ,

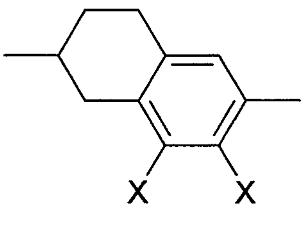 , 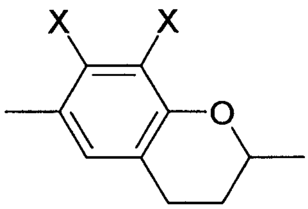 , 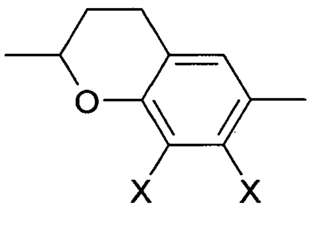 ,

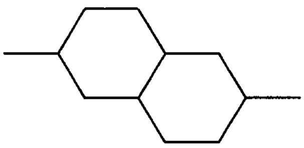 , 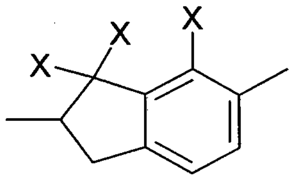 ,

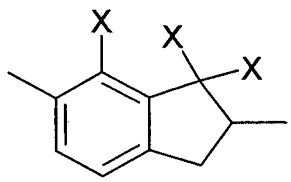, 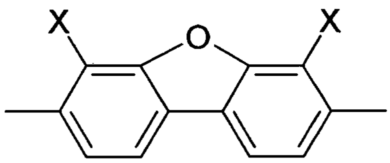,

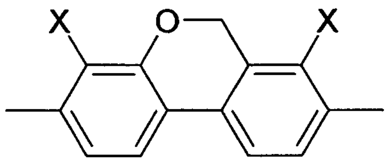, und 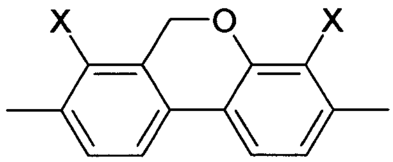;

X ist bei jedem Auftreten gleich oder verschieden gewählt aus F, Cl, CN, Alkylgruppen mit 1 bis 10 C-Atomen, Alkoxygruppen mit 1 bis 10 C-Atomen und Thioalkoxygruppen mit 1 bis 10 C-Atomen, wobei ein oder mehrere Wasserstoffatome in den Alkyl-, Alkoxy- und Thioalkoxygruppen durch F oder Cl ersetzt sein können, und wobei eine oder mehrere $CH_2$-Gruppen in den Alkyl-, Alkoxy- und Thioalkoxygruppen durch O oder S ersetzt sein können;

$A^{12}$ ist bei jedem Auftreten gleich oder verschieden eine Gruppe einer Formel (A12A) oder (A12B)

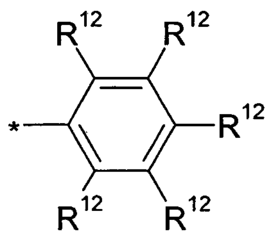

Formel (A12A)

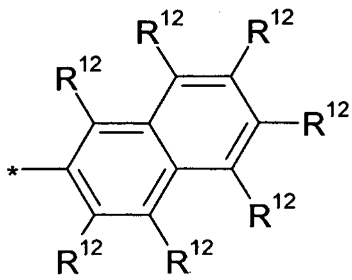

Formel (A12B),

wobei die mit * gekennzeichnete Bindung die Bindung an die Gruppe $Z^{11}$ bezeichnet;

$Z^{11}$ ist bei jedem Auftreten gleich oder verschieden gewählt aus -CO-O-, -O-CO-, $-CF_2-CF_2-$, $-CF_2-O-$, $-O-CF_2-$, $-CH_2-CH_2-$, -CH=CH-, -CF=CF-, -CF=CH-, -CH=CF-, -C=C-, $-OCH_2-$, $-CH_2O-$, und Einfachbindungen;

E ist gewählt aus Alkylengruppen mit 3 bis 12 C-Atomen, wobei ein oder mehrere H-Atome in den Alkylengruppen durch F, Cl, $-Si(R^1)_2OSi(R^1)_2OSi(R^1)_3$, $Si(R^1)_3$ oder CN ersetzt sein können, und wobei ein oder mehrere $CH_2$-Gruppen in den Alkylengruppen durch $CR^1=CR^1$, C≡C, $Si(R^1)_2$, $Si(R^1)_2O$, O, S, -O-CO- oder -CO-O- ersetzt sein können;

$R^{11}$ ist gewählt aus H, F, Cl, CN, NCS, $R^1$-O-CO-, $R^1$-CO-O-, Alkylgruppen mit 1 bis 10 C-Atomen, Alkoxygruppen mit 1 bis 10 C-Atomen, Thioalkoxygruppen mit 1 bis 10 C-Atomen, Alkenylgruppen mit 2 bis 10 C-Atomen, Alkenyloxygruppen mit 2 bis 10 C-Atomen und Thioalkenyloxygruppen mit 2 bis 10 C-Atomen, wobei ein oder mehrere H-Atome in den Alkyl-, Alkoxy-, Thioalkoxy-, Alkenyl- und Alkenyloxygruppen durch F, Cl, $-Si(R^1)_2OSi(R^1)_2OSi(R^1)_3$, $Si(R^1)_3$ oder CN ersetzt sein können, und wobei eine oder mehrere $CH_2$-Gruppen in den Alkyl-, Alkoxy-, Thioalkoxy-, Alkenyl- und Alkenyloxygruppen durch $Si(R^1)_2$, $Si(R^1)_2O$, O, S, -O-CO-, -CO-O- oder eine Einheit $A^{11}$ ersetzt sein können;

$R^1$ ist bei jedem Auftreten gleich oder verschieden gewählt aus Alkylgruppen mit 1 bis 10 C-Atomen, bei denen eine oder mehrere Wasserstoffatome durch F, Cl, $-Si(R^1)_2OSi(R^1)_2OSi(R^1)_3$, $Si(R^1)_3$ oder CN ersetzt sein können, und bei denen eine oder mehrere $CH_2$-Gruppen durch $Si(R^1)_2$, $Si(R^1)_2O$, O oder S ersetzt sein können;

$R^{12}$ ist bei jedem Auftreten gleich oder verschieden gewählt aus H, F, Cl, CN, NCS, $CF_3$, $CF_2CF_3$, $CHF_2$, $CH_2F$, $CH=CF_2$, CH=CFH, CH=CH(CN), $OCF_3$, $OC(CF_3)_3$, $OCF_2CF_3$, $OCHF_2$, $OCH_2F$, $O-CH=CF_2$, O-CH=CFH, O-

$CF_2$-CF=$CF_2$, $OSF_5$, $SF_5$, $SCF_3$, $SCF_2CF_3$,$SCHF_2$, $SCH_2F$, S-CH=$CF_2$, S-CH=CFH, $R^1$-O-CO-, $R^1$-CO-O-, Alkylgruppen mit 1 bis 10 C-Atomen, Alkoxygruppen mit 1 bis 10 C-Atomen, Thioalkoxygruppen mit 1 bis 10 C-Atomen, Alkenylgruppen mit 2 bis 10 C-Atomen, Alkenyloxygruppen mit 2 bis 10 C-Atomen und Thioalkenyloxygruppen mit 2 bis 10 C-Atomen, wobei ein oder mehrere H-Atome in den Alkyl-, Alkoxy-, Thioalkoxy-, Alkenyl- und Alkenyloxygruppen durch F, Cl oder CN ersetzt sein können, und wobei eine oder mehrere $CH_2$-Gruppen in den Alkyl-, Alkoxy-, Thioalkoxy-, Alkenyl- und Alkenyloxygruppen durch O, S, -O-CO- oder -CO-O- ersetzt sein können;
wobei mindestens ein Rest $R^{12}$ in der Gruppe $A^{12}$ gewählt ist aus F, Cl, CN, NCS, $CF_3$, $CF_2CF_3$, $CHF_2$, $CH_2F$, CH=$CF_2$, CH=CFH, CH=CH(CN), $OCF_3$, $OC(CF_3)_3$, $OCF_2CF_3$, $OCHF_2$, $OCH_2F$, O-CH=$CF_2$, O-CH=CFH, O-$CF_2$-CF=$CF_2$, $OSF_5$, $SF_5$, $SCF_3$, $SCF_2CF_3$,$SCHF_2$, $SCH_2F$, S-CH=$CF_2$ und S-CH=CFH; und

n ist bei jedem Auftreten gleich oder verschieden 1, 2, 3 oder 4,

wobei das flüssigkristalline Material die Verbindung

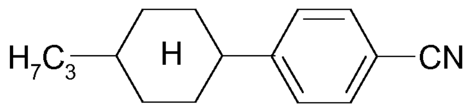

überhaupt nicht oder in einem Anteil von höchstens 10 Gew.-% enthält.

Die dielektrische Anisotropie $\Delta\varepsilon$ wird bestimmt wie in den Ausführungsbeispielen angegeben.

Ringe

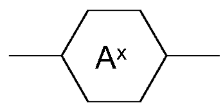

,

beispielsweise

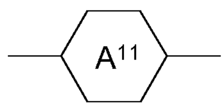

,

werden in der vorliegenden Anmeldung zur Verbesserung der Lesbarkeit im Fließtext als "$A^x$", beispielsweise "$A^{11}$", abgekürzt.

Im Rahmen der vorliegenden Erfindung werden unter Alkylgruppen, Alkoxygruppen, Thioalkoxygruppen, Alkenylgruppen, Alkenyloxygruppen und Thioalkenyloxygruppen, in denen jeweils ein oder mehrere H-Atome in durch F, Cl oder CN ersetzt sein können, und in denen jeweils eine oder mehrere $CH_2$-Gruppen durch O, S, -O-CO- oder -CO-O- ersetzt sein können, bevorzugt die folgenden Gruppen verstanden: Methyl, Ethyl, n-Propyl, i-Propyl, n-Butyl, i-Butyl, s-Butyl, t-Butyl, 2-Methylbutyl, n-Pentyl, s-Pentyl, Cyclopentyl, neo-Pentyl, n-Hexyl, Cyclohexyl, neo-Hexyl, n-Heptyl, Cycloheptyl, n-Octyl, Cyclooctyl, 2-Ethylhexyl, Trifluormethyl, Pentafluorethyl, 2,2,2-Trifluorethyl, Ethenyl, Propenyl, Butenyl, Pentenyl, Cyclopentenyl, Hexenyl, Cyclohexenyl, Heptenyl, Cycloheptenyl, Octenyl, Cyclooctenyl, Methoxy, Trifluormethoxy, Ethoxy, n-Propoxy, i-Propoxy, n-Butoxy, i-Butoxy, s-Butoxy, t-Butoxy, n-Pentoxy, s-Pentoxy, 2-Methylbutoxy, n-Hexoxy, Cyclohexyloxy, n-Heptoxy, Cycloheptyloxy, n-Octyloxy, Cyclooctyloxy, 2-Ethylhexyloxy, Pentafluorethoxy, 2,2,2-Trifluorethoxy, Methylthio, Ethylthio, n-Propylthio, i-Propylthio, n-Butylthio, i-Butylthio, s-Butylthio, t-Butylthio, n-Pentylthio, s-Pentylthio, n-Hexylthio, Cyclohexylthio, n-Heptylthio, Cycloheptylthio, n-Octylthio, Cyclooctylthio, 2-Ethylhexylthio, Trifluormethylthio, Pentafluorethylthio, 2,2,2-Trifluorethylthio, Ethenylthio, Propenylthio, Butenylthio, Pentenylthio, Cyclopentenylthio, Hexenylthio, Cyclohexenylthio, Heptenylthio, Cycloheptenylthio, Octenylthio, Cyclooctenylthio, Ethinylthio, Propinylthio, Butinylthio, Pentinylthio, Hexinylthio, Heptinylthio und Octinylthio.

Allgemein ist X bevorzugt bei jedem Auftreten gleich oder verschieden gewählt aus F, Cl, CN, Alkylgruppen mit 1 bis 10 C-Atomen, in denen ein oder mehrere Wasserstoffatome durch F ersetzt sind, und Alkoxygruppen mit 1 bis 10 C-Atomen, in denen ein oder mehrere Wasserstoffatome durch F ersetzt sind. Allgemein ist X besonders bevorzugt gleich F.

E ist bevorzugt eine unsubstituierte Alkylengruppe mit 3 bis 8 C-Atomen.

Der Index n ist bevorzugt bei jedem Auftreten gleich oder verschieden 2 oder 3.

$R^{11}$ ist bevorzugt gewählt aus H, F, CN, $R^1$-O-CO-, $R^1$-CO-O-, Alkylgruppen mit 1 bis 10 C-Atomen, Alkoxygruppen mit 1 bis 10 C-Atomen, Thioalkoxygruppen mit 1 bis 10 C-Atomen, Alkenylgruppen mit 2 bis 10 C-Atomen, Alkenyloxygruppen mit 2 bis 10 C-Atomen und Thioalkenyloxygruppen mit 2 bis 10 C-Atomen, wobei ein oder mehrere H-Atome in den Alkyl-, Alkoxy-, Thioalkoxy-, Alkenyl- und Alkenyloxygruppen durch F oder CN ersetzt sein können, und wobei eine oder mehrere $CH_2$-Gruppen in den Alkyl-, Alkoxy-, Thioalkoxy-, Alkenyl- und Alkenyloxygruppen durch O, S, -O-CO-, -CO-O- oder eine Einheit $A^{11}$, welche beschränkt ist auf

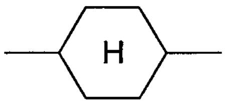 , 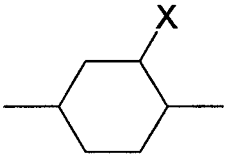 , 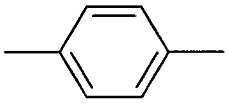 , 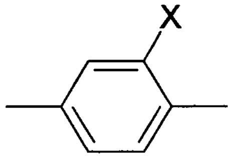 ,

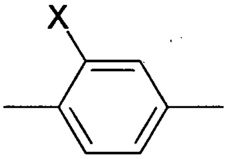 , 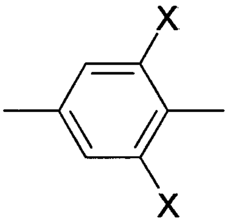 , 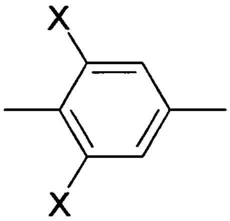 , 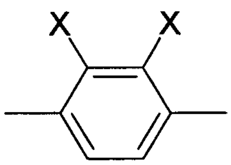 ,

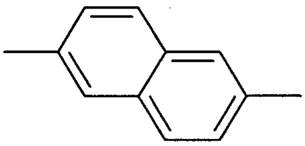 , 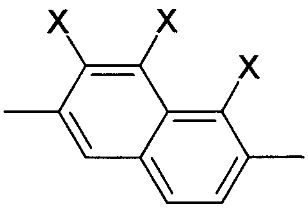 , 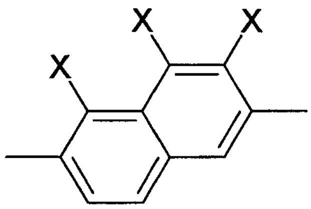 ,

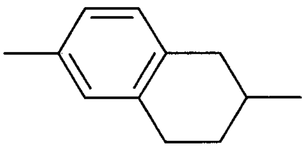 , 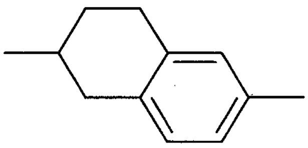 , 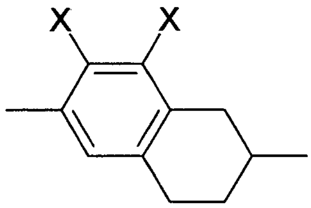 ,

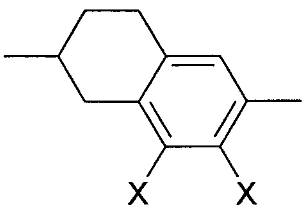 , und 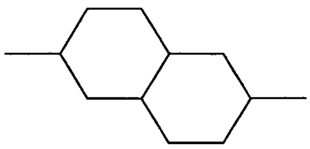

ersetzt sein können, wobei X definiert ist wie oben.

Bevorzugt ist in dem Fall, dass in $R^{11}$ eine oder mehrere $CH_2$-Gruppen in den Alkyl-, Alkoxy-, Thioalkoxy-, Alkenyl- und Alkenyloxygruppen durch eine Einheit $A^{11}$ ersetzt sind, mindestens 2, bevorzugt 2, 3 oder 4 $CH_2$-Gruppen zwischen der ersetzenden Einheit $A^{11}$ und der Einheit $A^{11}$, an die $R^{11}$ bindet. vorhanden. Auf diese Weise ist gewährleistet, dass die Ringe $A^{11}$ jeweils durch ausreichend lange Abstandsgruppen voneinander getrennt sind.

Beispiele für bevorzugte Gruppen $R^{11}$, in denen Einheiten $A^{11}$ enthalten sind, sind im Folgenden abgebildet:

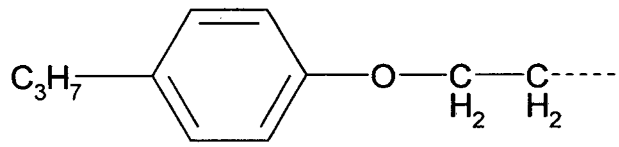

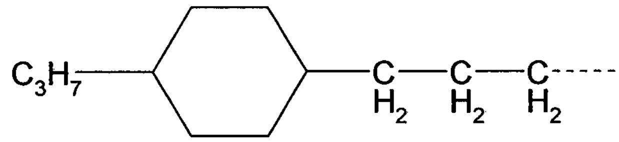

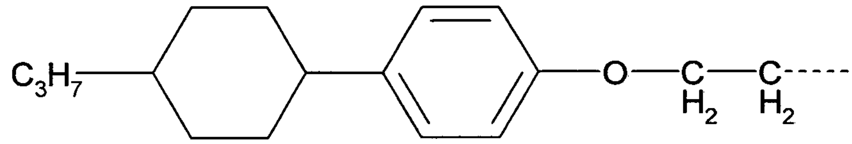

Hierbei steht die gestrichelte Linie für die Bindung von $R^{11}$ an den Rest der Formel (IA).

Unter den Formeln (A12A) und (A12B) ist Formel (A12A) bevorzugt.

Bevorzugt ist mindestens ein Rest $R^{12}$ in der Verbindung der Formel (IA) oder (IB) gewählt aus F, $CF_3$, $CF_2CF_3$, $CHF_2$, $CH_2F$, $OCF_3$, $OCF_2CF_3$, $OCHF_2$, $OCH_2F$, SFs und $OSF_5$.

Bevorzugt unter den Verbindungen der Formel (IA) und (IB) sind Verbindungen der Formel (IA).

Die Verbindung der Formel (IA) entspricht bevorzugt einer Formel (IA-1), (IA-2), (IA-3) oder (IA-4)

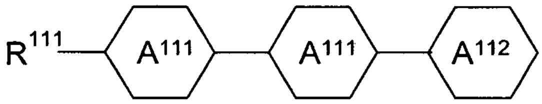

Formel (IA-1)

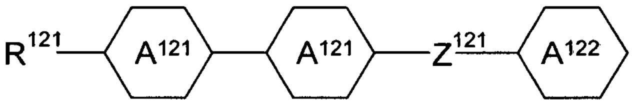

Formel (IA-2)

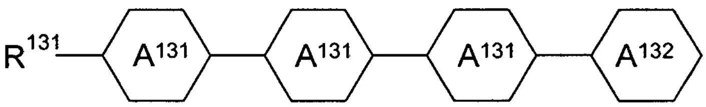

Formel (IA-3)

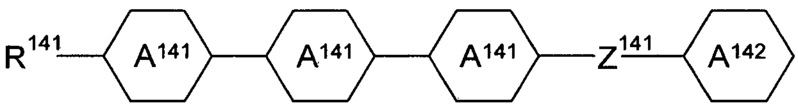

Formel (IA-4)

wobei für die auftretenden Gruppen gilt:

$R^{111}$, $R^{121}$, $R^{131}$, $R^{141}$ sind definiert wie $R^{11}$;

$Z^{121}$, $Z^{141}$ sind gewählt aus -CO-O-, -O-CO-, $-CF_2-CF_2-$, $-CF_2-O-$, $-O-CF_2-$,$-CH_2-CH_2-$, $-OCH_2-$ und $-CH_2O-$;

$A^{111}$, $A^{121}$, $A^{131}$, $A^{141}$ sind bei jedem Auftreten gleich oder verschieden und definiert wie $A^{11}$;

$A^{112}$, $A^{122}$, $A^{132}$, $A^{142}$ sind gewählt aus

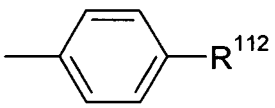 , 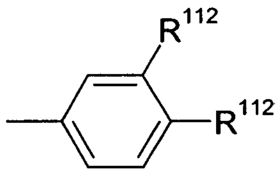 , und 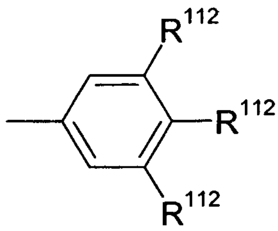 ;

$R^{112}$ ist bei jedem Auftreten gleich oder verschieden gewählt aus F, $CF_3$, $CF_2CF_3$, $CHF_2$, $CH_2F$, $OCF_3$, $OCF_2CF_3$, $OCHF_2$, $OCH_2F$, $SF_5$ und $OSF_5$.

$R^{111}$, $R^{121}$, $R^{131}$, $R^{141}$ sind bevorzugt gewählt aus Alkylgruppen mit 1 bis 10 C-Atomen und Alkenylgruppen mit 2 bis 10 C-Atomen.

$A^{111}$, $A^{121}$, $A^{131}$, $A^{141}$ sind bevorzugt bei jedem Auftreten gleich oder verschieden gewählt aus

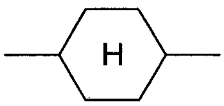 , 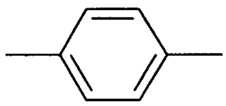 , 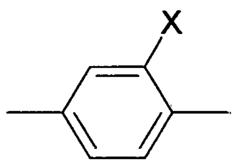 , 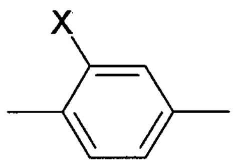 ,

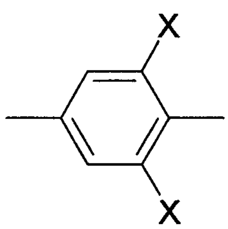 , 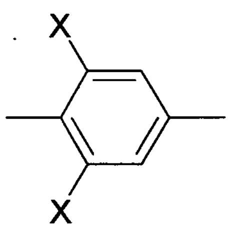 , 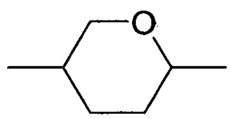 , 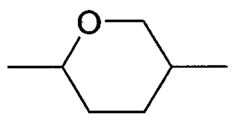 .

Besonders bevorzugt sind $A^{111}$, $A^{121}$, $A^{131}$, $A^{141}$ bei jedem Auftreten gleich oder verschieden gewählt aus

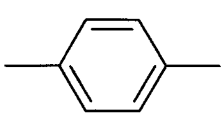 , 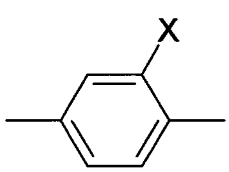 , 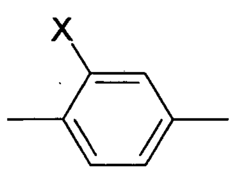 , 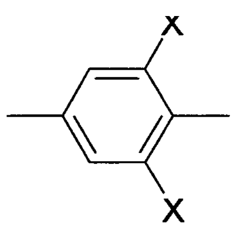 ,

und

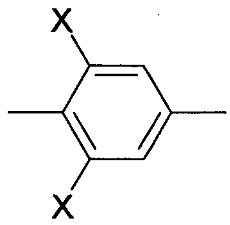.

$A^{112}$, $A^{122}$, $A^{132}$, $A^{142}$ sind bevorzugt gewählt aus

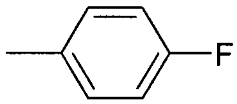, 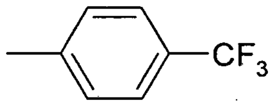, 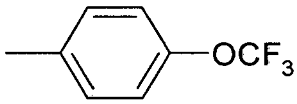,

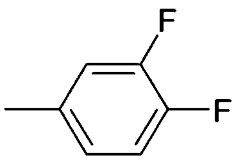, 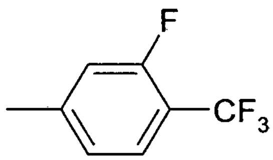, 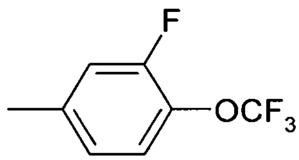,

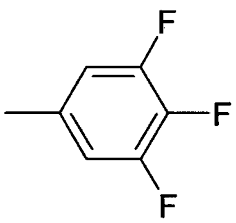, 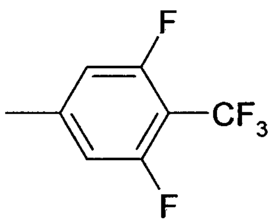 und 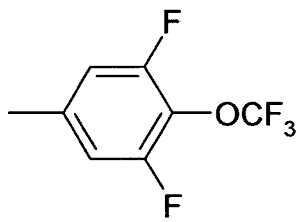.

Beispiele für Verbindungen der Formel (IA) und (IB) sind im Folgenden gezeigt:

| |
|---|
| 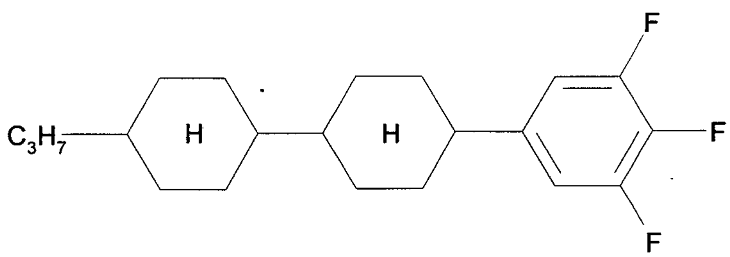 |
| CCU-3-F |
| 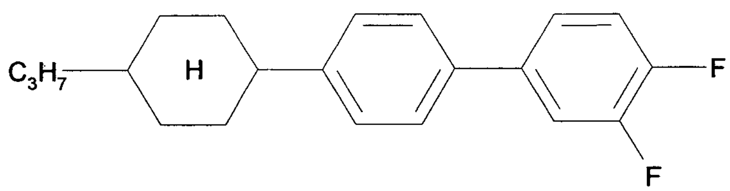 |
| CPG-3-F |

(fortgesetzt)

| |
|---|
| 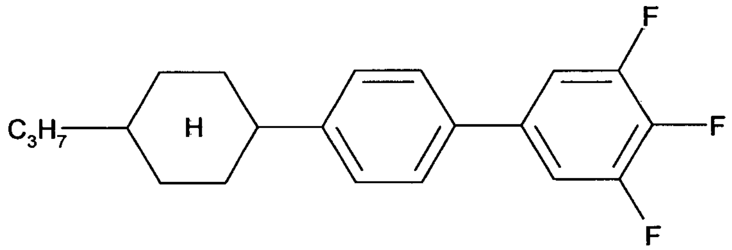 |
| CPU-3-F |
| 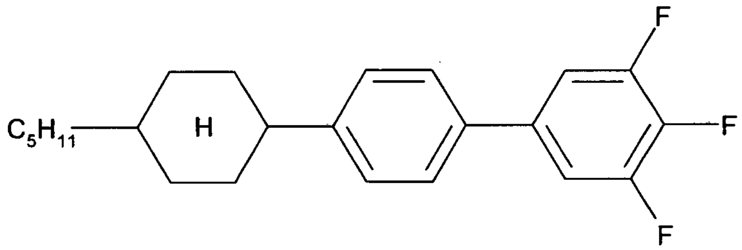 |
| CPU-5-F |
| 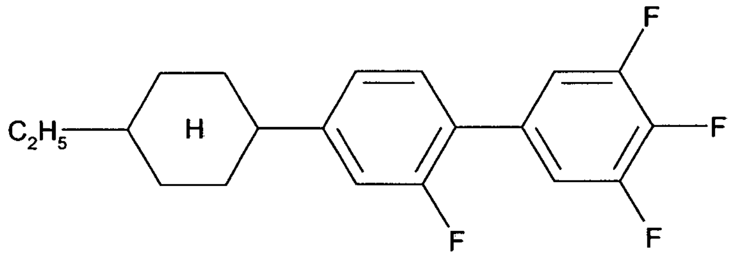 |
| CGU-2-F |
| 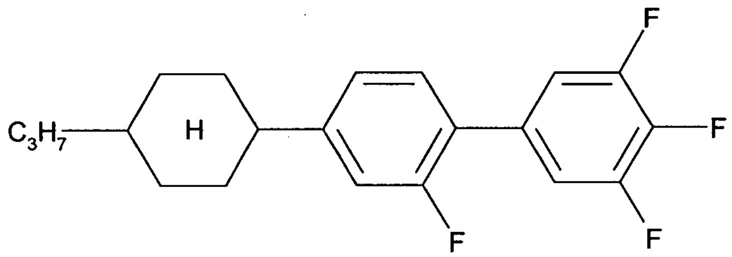 |
| CGU-3-F |
| 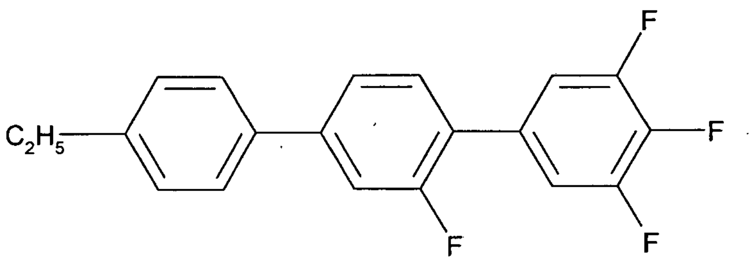 |
| PGU-2-F |

(fortgesetzt)

| |
|---|
| 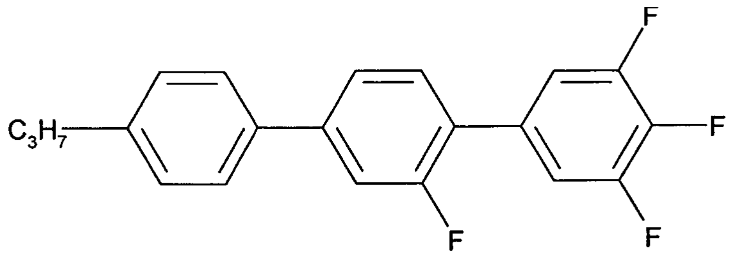 |
| PGU-3-F |
| 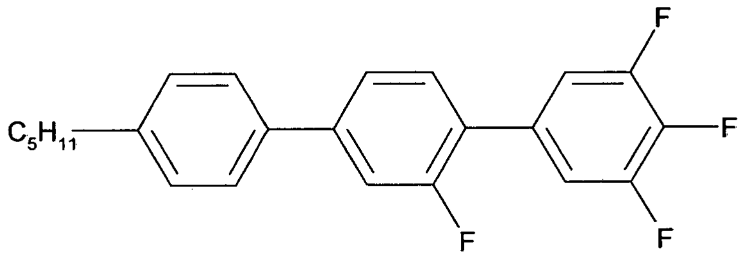 |
| PGU-5-F |
| 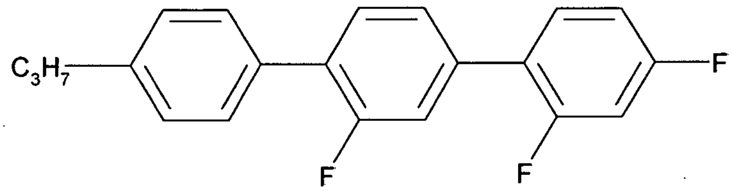 |
| PGIGI-3-F |
| 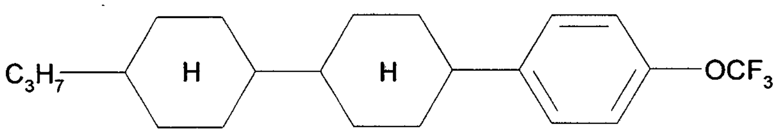 |
| CCP-3-OT |
| 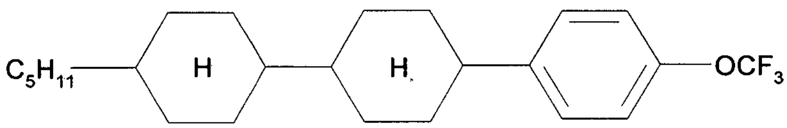 |
| CCP-5-OT |
| 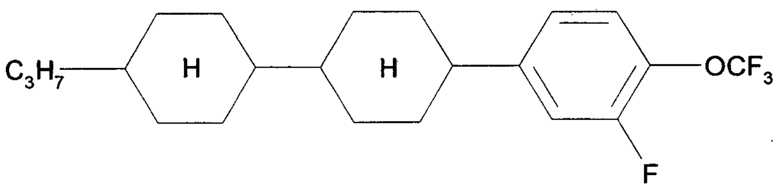 |
| CCG-3-OT |

(fortgesetzt)

| |
|---|
| 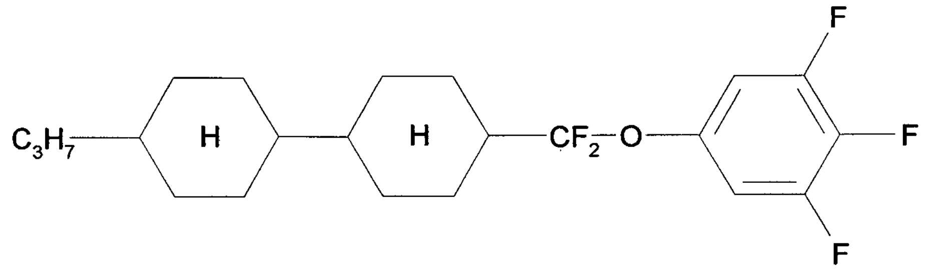 |
| CCQU-3-F |
| 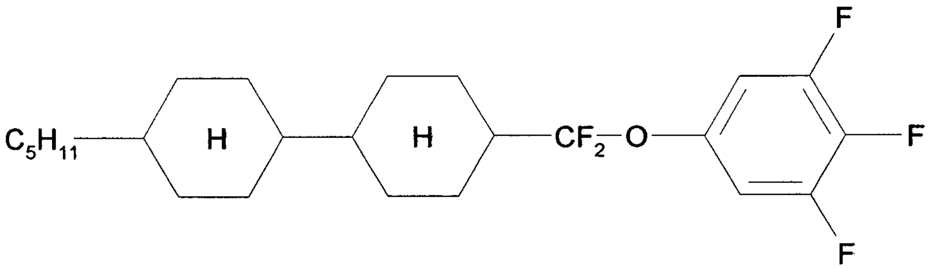 |
| CCQU-5-F |
| 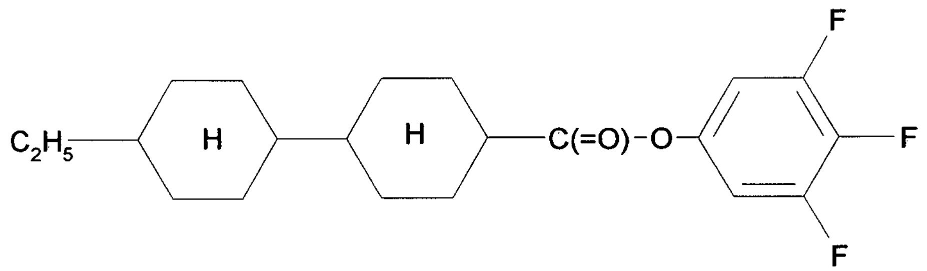 |
| CCZU-2-F |
| 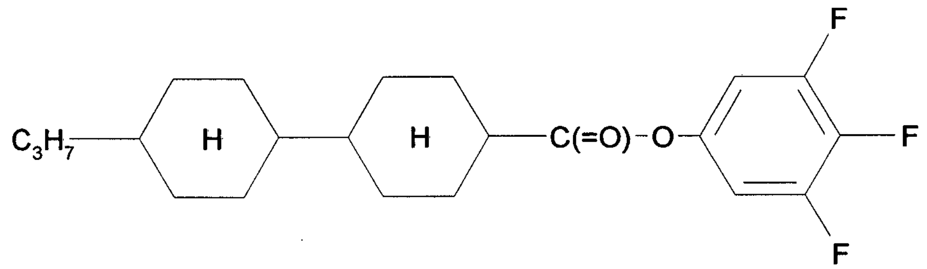 |
| CCZU-3-F |
| 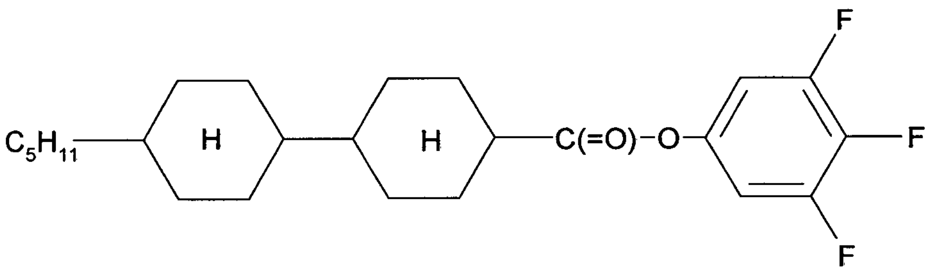 |
| CCZU-5-F |

(fortgesetzt)

| |
|---|
| 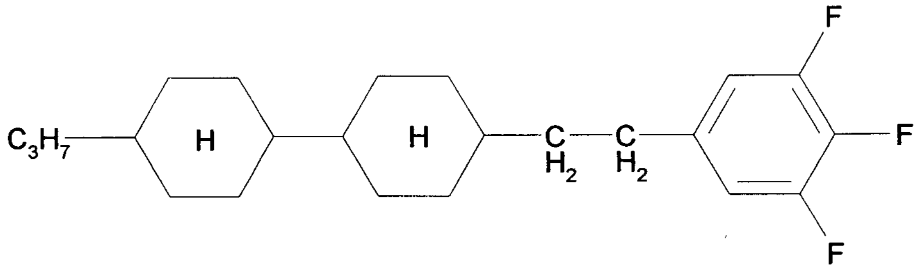 |
| CCEU-3-F |
| 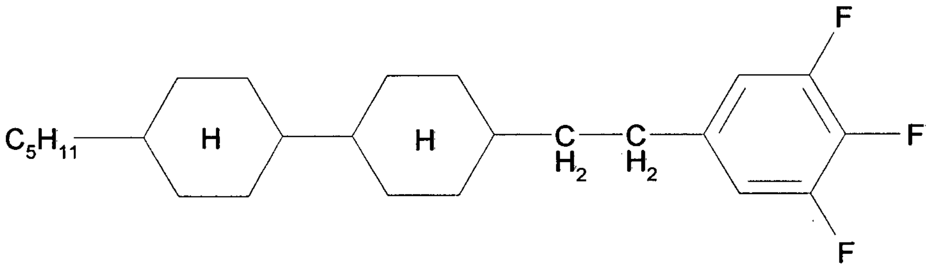 |
| CCEU-5-F |
| 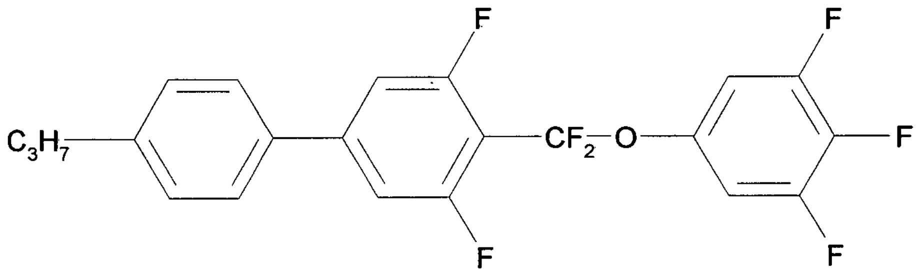 |
| PUQU-3-F |
| 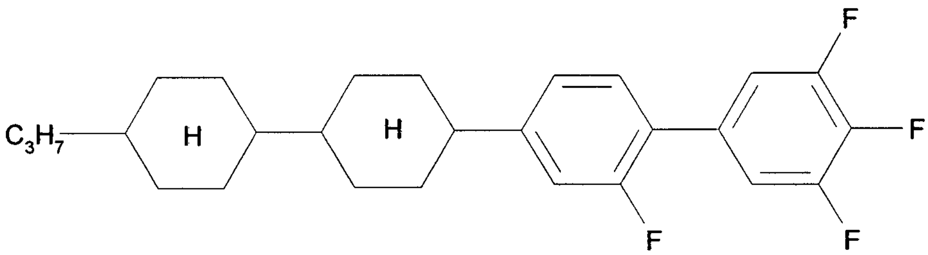 |
| CCGU-3-F |
| 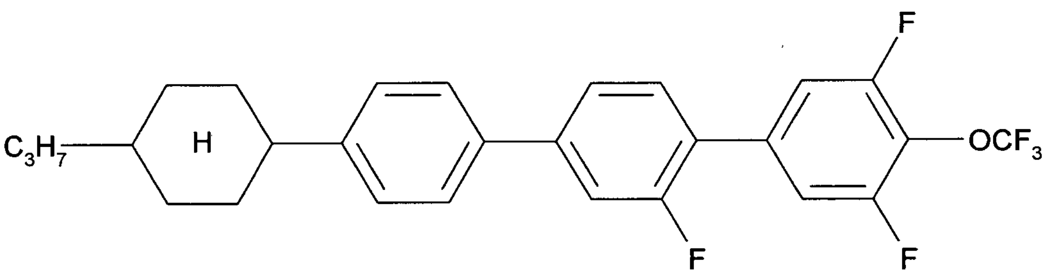 |
| CPGU-3-OT |

(fortgesetzt)

| |
|---|
| 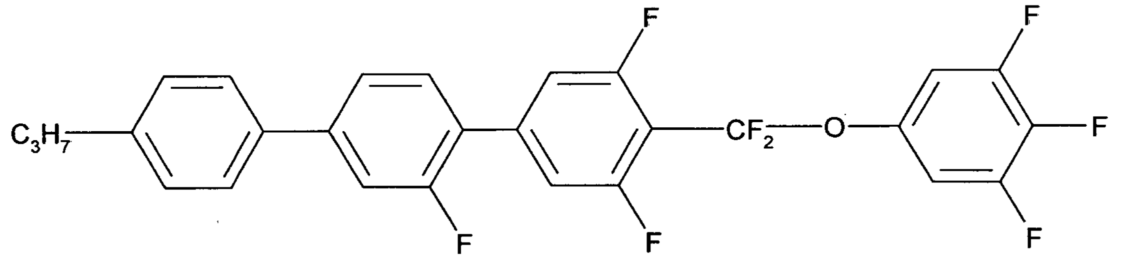 |
| PGUQU-3-F |
| 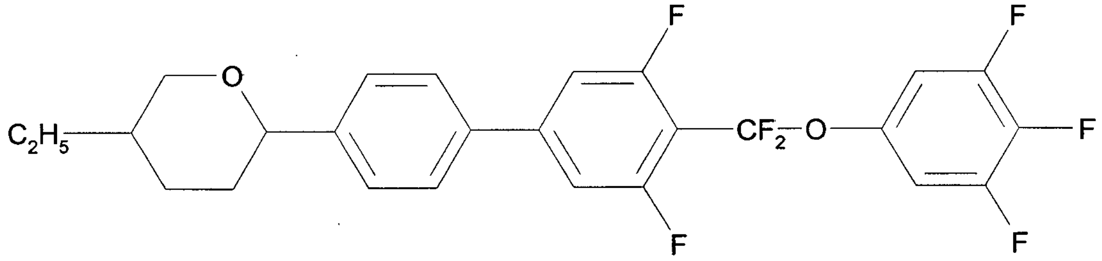 |
| APUQU-2-F |
| 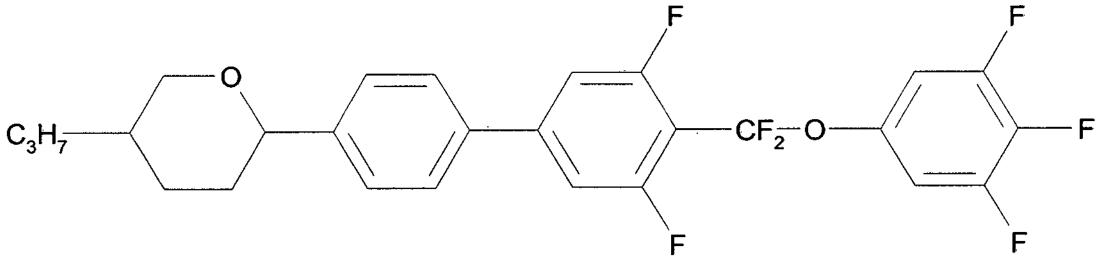 |
| APUQU-3-F |
| 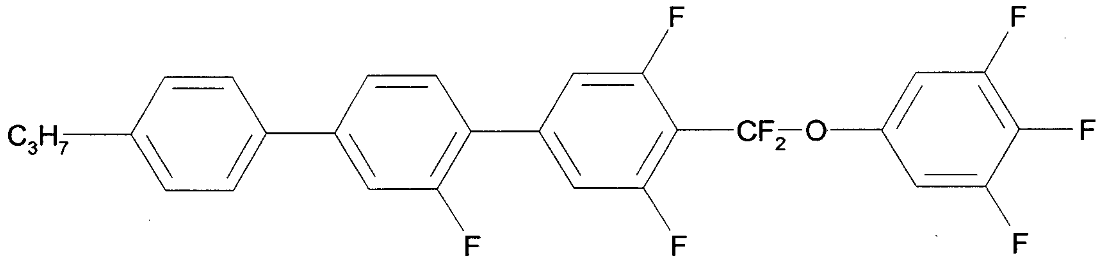 |
| PGUQU-3-F |
| 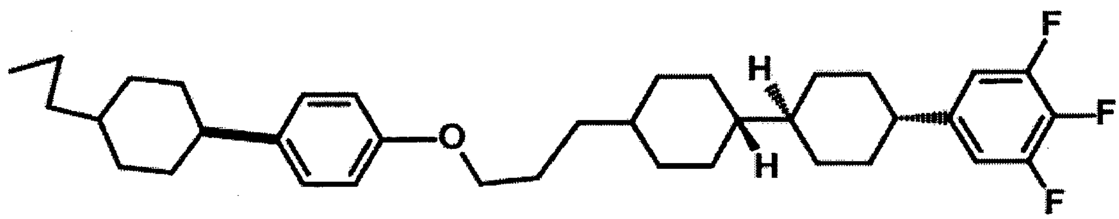 und Enantiomer |

(fortgesetzt)

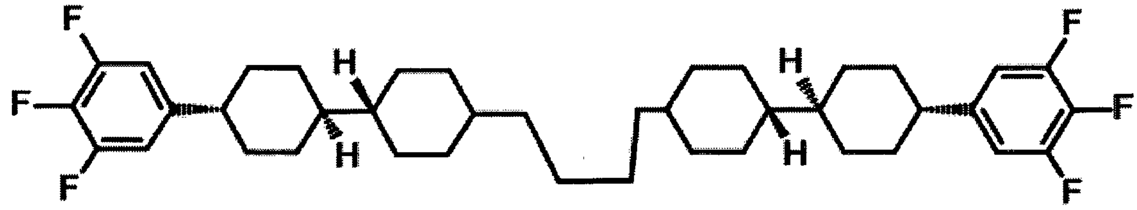

und Enantiomer

Die eine oder mehreren Verbindungen der Formel (IA) oder (IB) sind bevorzugt in einem Gesamtanteil von 60 Gew.-% bis 95 Gew.-%, besonders bevorzugt in einem Gesamtanteil von 70 Gew.-% bis 90 Gew.-% im flüssigkristallinen Material vorhanden.

Gemäß einer bevorzugten Ausführungsform enthält das flüssigkristalline Material eine oder mehrere dreikernige Verbindungen, in denen alle drei Kerne aromatisch sind. Bevorzugt sind diese dreikernigen Verbindungen, in denen alle drei Kerne aromatisch sind, in einem Gesamtanteil von mindestens 1 Gew.-% im flüssigkristallinen Material vorhanden, besonders bevorzugt in einem Gesamtanteil von mindestens 2 Gew.-%, und ganz besonders bevorzugt in einem Gesamtanteil von mindestens 3 Gew.-%. Solche Verbindungen sind bevorzugt höchstens in einem Gesamtanteil von 50 Gew.-% im flüssigkristallinen Material vorhanden, besonders bevorzugt höchstens in einem Gesamtanteil von 40 Gew.-%.

Wenn das flüssigkristalline Material keine dreikernigen Verbindungen enthält, in denen alle drei Kerne aromatisch sind, ist es bevorzugt, dass es weniger als 20 Gew.-% an Verbindungen enthält, welche der folgenden Formel (N) entsprechen

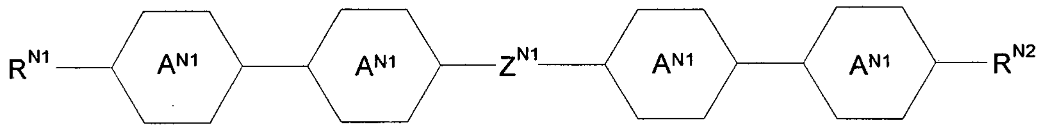

Formel (N),

wobei für die auftretenden Gruppen gilt:

$R^{N1}$, $R^{N2}$ sind bei jedem Auftreten gleich oder verschieden gewählt aus Alkylgruppen mit 1 bis 10 C-Atomen;

$A^{N1}$ ist bei jedem Auftreten gleich oder verschieden gewählt aus

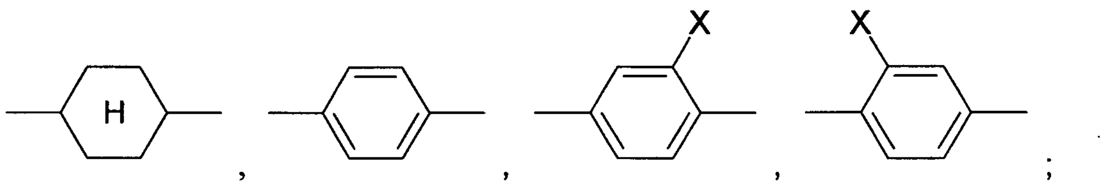

$Z^{N1}$ ist gewählt aus -CO-O-, -O-CO-, und eine Einfachbindung.

Bevorzugte Ausführungsformen der Verbindungen der Formel (N) sind die im Folgenden gezeigten Verbindungen:

| |
|---|
| 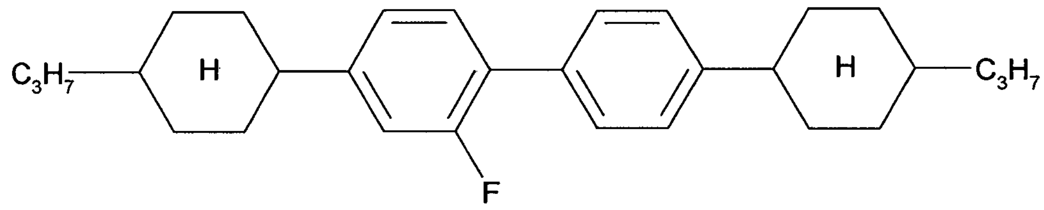 |
| CGPC-3-3 |
| |
| 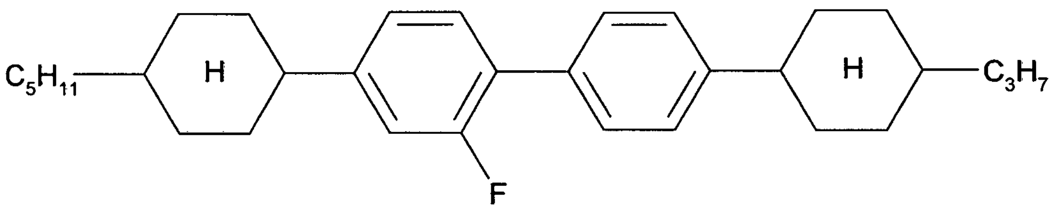 |
| CGPC-5-3 |
| |
| 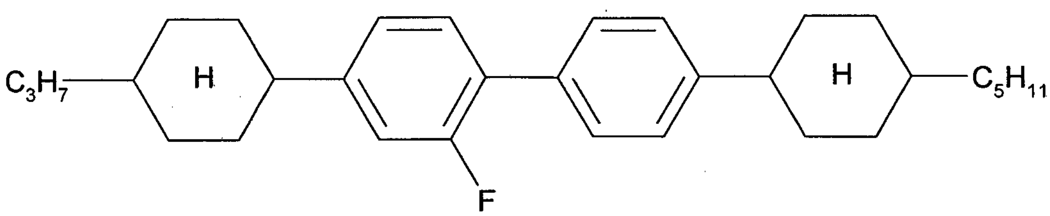 |
| CGPC-5-5 |
| 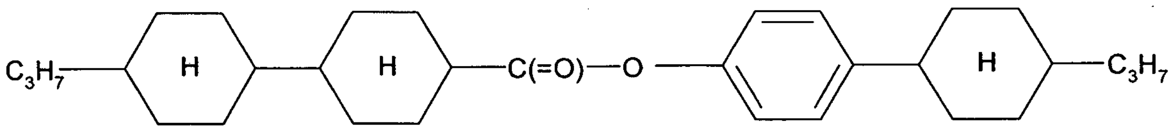 |
| CCZPC-3-3 |
| |
| 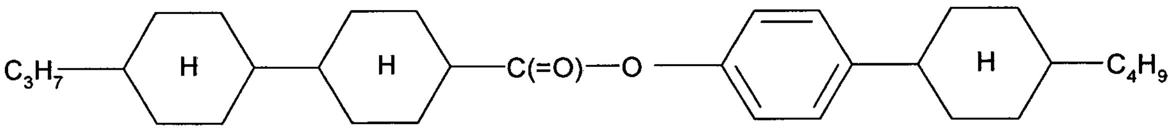 |
| CCZPC-3-4 |
| |
| 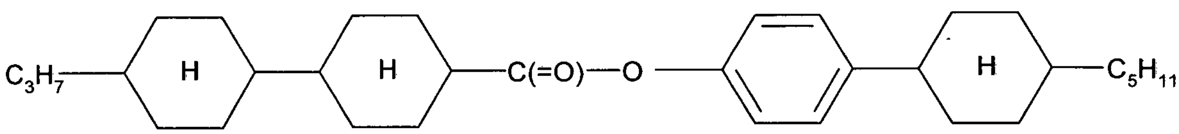 |
| CCZPC-3-5 |

Wenn das flüssigkristalline Material keine dreikernigen Verbindungen enthält, in denen alle drei Kerne aromatisch sind, enthält sie besonders bevorzugt weniger als 18 Gew.-% an Verbindungen der Formel (N), ganz besonders bevorzugt weniger als 10 Gew.-%, stärker bevorzugt weniger als 5 Gew.-%, und am stärksten bevorzugt überhaupt

keine Verbindungen der Formel (N).

Unter dreikernigen Verbindungen werden solche Verbindungen verstanden, welche genau drei Ringe aufweisen, wobei vom Begriff Ringe aromatische, heteroaromatische, aliphatische und heteroaliphatische Ringe umfasst sind. Insbesondere sind von dem Begriff Ringe alle oben in der Definition von $A^{11}$ aufgeführten Gruppen umfasst.

Unter dem Begriff aromatischer Kern sind dabei alle Ringe zu verstehen, welche ein aromatisches oder heteroaromatisches, inbesondere ein aromatisches System aufweisen. Der Begriff aromatischer Kern ist dabei abgrenzend von aliphatischen Ringen, wie beispielsweise

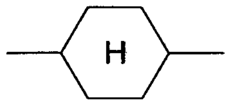

,

und heteroaliphatischen Ringen, wie beispielsweise

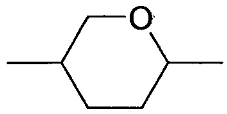

,

zu verstehen.

Bevorzugt enthält das flüssigkristalline Material eine oder mehrere Verbindungen einer Formel (II)

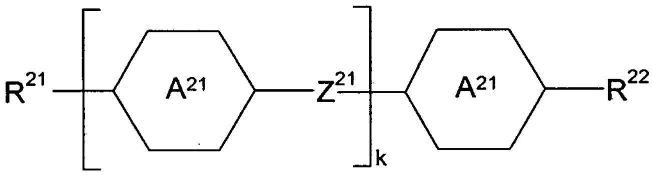

Formel (II),

wobei für die auftretenden Gruppen und Indices gilt:

$A^{21}$ ist bei jedem Auftreten gleich oder verschieden gewählt aus

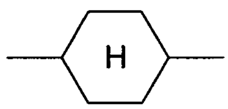 , 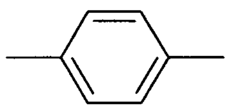 ;

$Z^{21}$ ist bei jedem Auftreten gleich oder verschieden gewählt aus -CO-O-, -O-CO-, $-CF_2-CF_2-$, $-CF_2-O-$, $-O-CF_2-$, $-CH_2-CH_2-$, -CH=CH-, und Einfachbindungen;

$R^{21}$, $R^{22}$ sind bei jedem Auftreten gleich oder verschieden gewählt aus Alkylgruppen mit 1 bis 10 C-Atomen und Alkenylgruppen mit 1 bis 10 C-Atomen;

k ist gleich 1, 2, 3, oder 4.

Bevorzugt ist k gleich 1, 2 oder 3.

Bevorzugt ist $Z^{21}$ eine Einfachbindung.

Beispiele für Verbindungen der Formel (II) sind:

| |
|---|
| 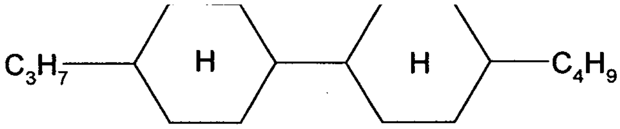 |
| CC-3-4 |
| |
| 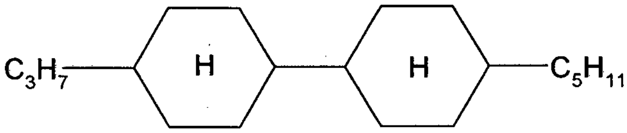 |
| CC-3-5 |
| |
| 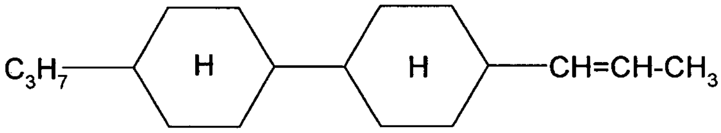 |
| CC-3-V1 |
| |
| 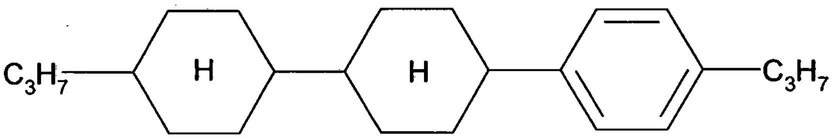 |
| CCP-3-3 |
| |
| 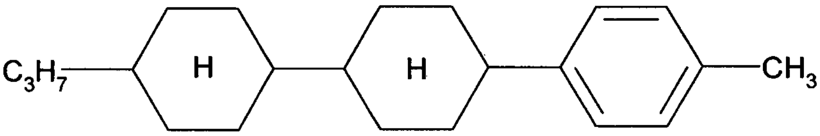 |
| CCP-3-1 |
| |
| 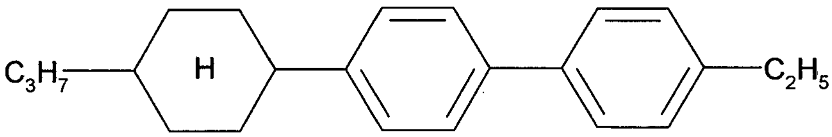 |
| CPP-3-2 |
| 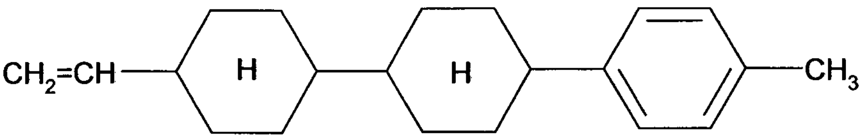 |
| CCP-V-1 |
| |

(fortgesetzt)

| |
|---|
| 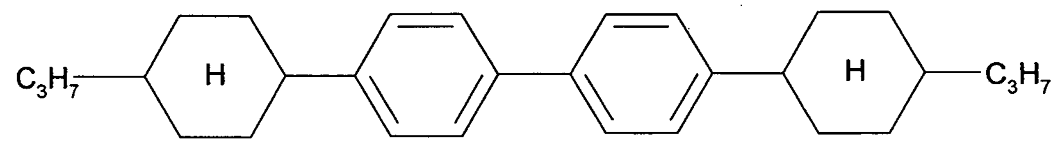 |
| CPPC-3-3 |
| |
| 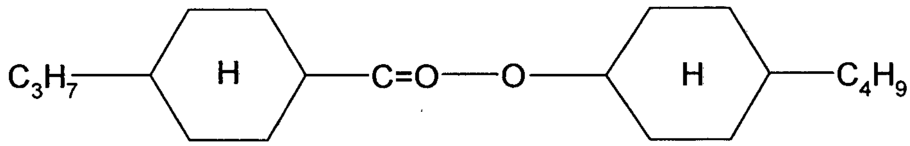 |
| CZC-3-4 |
| |
| 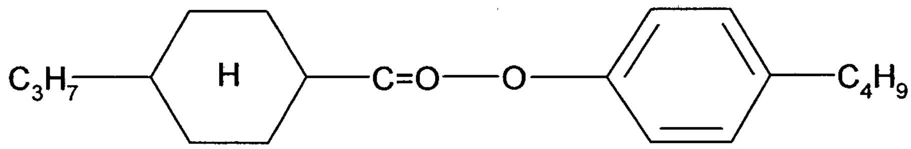 |
| CZP-3-4 |
| |
| 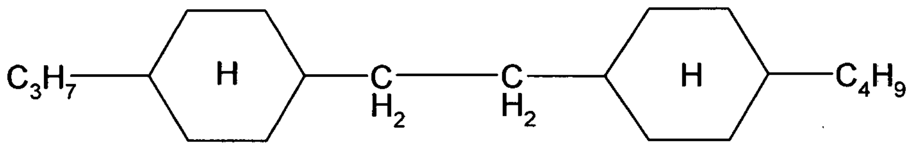 |
| CEC-3-4 |
| |
| 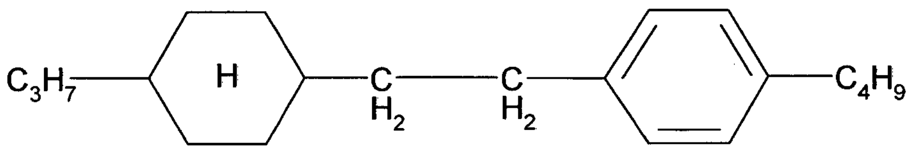 |
| CEP-3-4 |
| 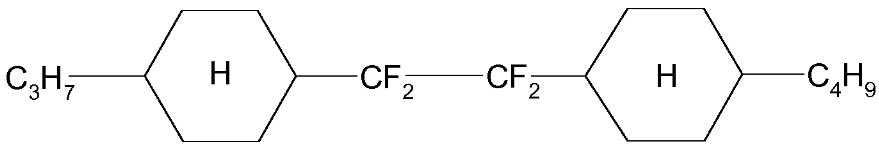 |
| CWC-3-4 |
| |
| 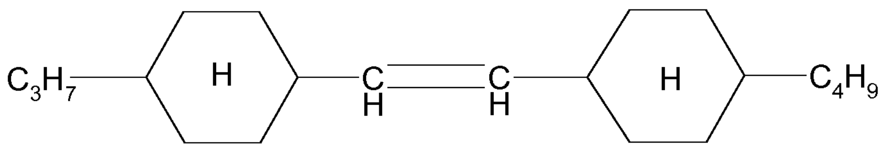 |
| CVC-3-4 |

Die eine oder mehreren Verbindungen der Formel (II) sind im flüssigkristallinen Material bevorzugt in einem Gesamtanteil von 3 Gew.-% bis 35 Gew.-%, besonders bevorzugt in einem Gesamtanteil von 8 Gew.-% bis 25 Gew.-% vorhanden.

Erfindungsgemäß enthält das flüssigkristalline Material die folgende Verbindung in einem Anteil von höchstens 10 Gew.-% oder überhaupt nicht:

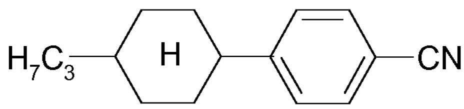

.

Es ist bevorzugt, dass das flüssigkristalline Material die folgende Verbindung in einem Anteil von höchstens 10 Gew.-%, besonders bevorzugt von höchstens 5 Gew.-%, ganz besonders bevorzugt von höchstens 1 Gew.-%, und am stärksten bevorzugt überhaupt nicht enthält:

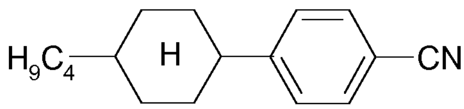

.

Es ist bevorzugt, dass das flüssigkristalline Material die folgende Verbindung in einem Anteil von höchstens 10 Gew.-%, besonders bevorzugt von höchstens 5 Gew.-%, ganz besonders bevorzugt von höchstens 1 Gew.-%, und am stärksten bevorzugt überhaupt nicht enthält:

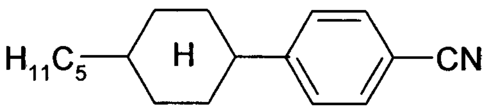

.

Es ist bevorzugt, dass eine Verbindung einer Formel (C1)

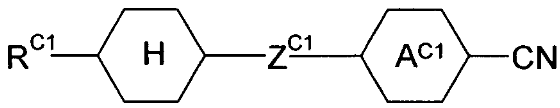

Formel (C1),

wobei für die auftretenden Gruppen gilt:

$A^{C1}$ ist gewählt aus

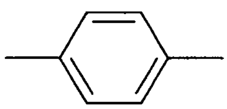 , 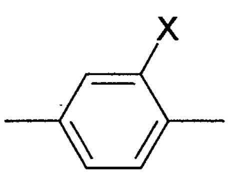 , 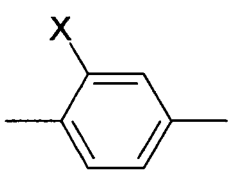 , 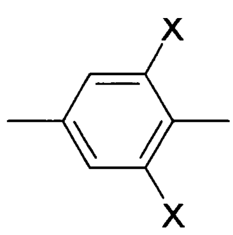 ,

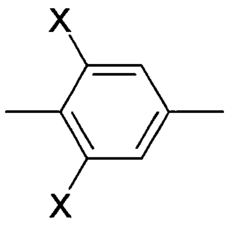

, und

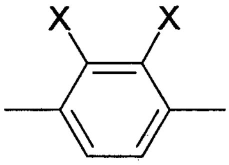

;

$Z^{C1}$ ist gewählt aus -CO-O-, -O-CO-, $-CF_2-CF_2-$, $-CF_2-O-$, $-O-CF_2-$, $-CH_2-CH_2-$, -CH=CH-, -CF=CF-, -CF=CH-, -CH=CF-, -C=C-, $-OCH_2-$, $-CH_2O-$, und eine Einfachbindung;

$R^{C1}$ ist gewählt aus H, F, Cl, CN, NCS, $R^1$-O-CO-, $R^1$-CO-O-, Alkylgruppen mit 1 bis 10 C-Atomen, Alkoxygruppen mit 1 bis 10 C-Atomen, Thioalkoxygruppen mit 1 bis 10 C-Atomen, Alkenylgruppen mit 2 bis 10 C-Atomen, Alkenyloxygruppen mit 2 bis 10 C-Atomen und Thioalkenyloxygruppen mit 2 bis 10 C-Atomen, wobei ein oder mehrere H-Atome in den Alkyl-, Alkoxy-, Thioalkoxy-, Alkenyl- und Alkenyloxygruppen durch F, Cl oder CN ersetzt sein können, und wobei eine oder mehrere $CH_2$-Gruppen in den Alkyl-, Alkoxy-, Thioalkoxy-, Alkenyl- und Alkenyloxygruppen durch O, S, -O-CO- oder -CO-O- ersetzt sein können;

$R^1$ ist definiert wie oben;

X ist definiert wie oben;

höchstens in einem Anteil von 10 Gew.-% im flüssigkristallinen Material vorhanden ist. Besonders bevorzugt ist eine solche Verbindung höchstens in einem Anteil von 5 Gew.-% im flüssigkristallinen Material vorhanden, ganz besonders bevorzugt höchstens in einem Anteil von 1 Gew.-%, und am stärksten bevorzugt überhaupt nicht vorhanden.

Es ist bevorzugt, dass das flüssigkristalline Material die folgende Verbindung in einem Anteil von höchstens 10 Gew.-%, besonders bevorzugt von höchstens 5 Gew.-%, ganz besonders bevorzugt von höchstens 1 Gew.-%, und am stärksten bevorzugt überhaupt nicht enthält:

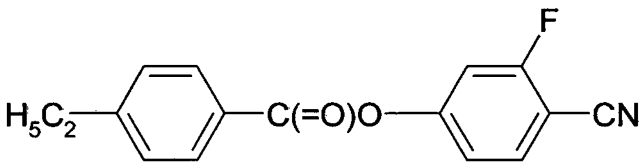

.

Es ist bevorzugt, dass das flüssigkristalline Material die folgende Verbindung in einem Anteil von höchstens 10 Gew.-%, besonders bevorzugt von höchstens 5 Gew.-%, ganz besonders bevorzugt von höchstens 1 Gew.-%, und am stärksten bevorzugt überhaupt nicht enthält:

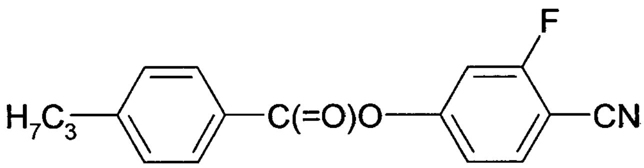

.

Es ist bevorzugt, dass das flüssigkristalline Material die folgende Verbindung in einem Anteil von höchstens 10 Gew.-%, besonders bevorzugt von höchstens 5 Gew.-%, ganz besonders bevorzugt von höchstens 1 Gew.-%, und am stärksten bevorzugt überhaupt nicht enthält:

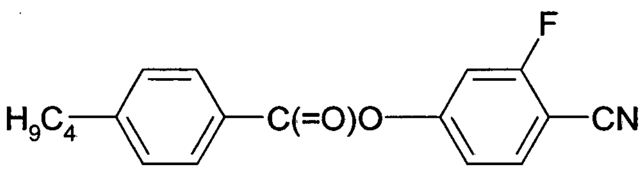

.

Es ist bevorzugt, dass das flüssigkristalline Material die folgende Verbindung in einem Anteil von höchstens 10 Gew.-%, besonders bevorzugt von höchstens 5 Gew.-%, ganz besonders bevorzugt von höchstens 1 Gew.-%, und am stärksten bevorzugt überhaupt nicht enthält:

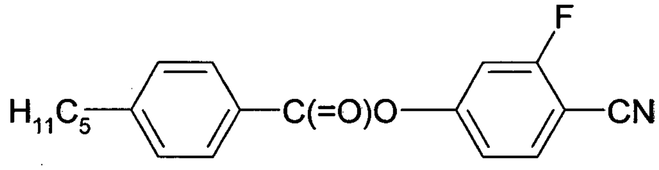

Bevorzugt enthält das flüssigkristalline Material Verbindungen mit einer oder mehreren Cyanogruppen in einem Anteil von höchstens 10 Gew.-%, besonders bevorzugt von höchstens 5 Gew.-%, ganz besonders bevorzugt von höchstens 1 Gew.-%, und am stärksten bevorzugt überhaupt nicht.

Bevorzugt enthält das flüssigkristalline Material mindestens 8 unterschiedliche Verbindungen, besonders bevorzugt mindestens 10 unterschiedliche Verbindungen. Wie oben ausgeführt, ist mindestens eine dieser unterschiedlichen Verbindungen eine Verbindung der Formel (IA) oder (IB), und mindestens eine dieser unterschiedlichen Verbindungen ist ein Farbstoff F. Bevorzugt ist unter diesen unterschiedlichen Verbindungen mindestens eine Verbindung einer Formel (II), wie oben beschrieben. Weiterhin ist es bevorzugt, dass unter den unterschiedlichen Verbindungen eine oder mehrere Verbindungen sind, die weder Formel (IA) oder (IB) entsprechen, noch Formel (II) entsprechen, noch ein Farbstoff F sind. Diese eine oder mehrere Verbindungen weisen bevorzugt eine langgestreckte Form auf, d.h. sie weisen in einer der drei Raumrichtungen eine deutlich größere Ausdehnung auf als in den beiden anderen Raumrichtungen. Dem Fachmann sind eine Vielzahl solcher organischen Verbindungen bekannt. Beispiele dafür sind organische Verbindungen, die eine para-Verknüpfung von zwei oder mehr, bevorzugt zwei, drei oder vier wahlweise substituierten Sechsringen, insbesondere Cyclohexanringen, Cyclohexenringen, Benzolringen, Pyridinringen, Pyrimidinringen und Tetrahydropyranringen, aufweisen.

Das flüssigkristalline Material enthält eine oder mehrere Farbstoffverbindungen F. Die Farbstoffverbindungen F sind bevorzugt organische Verbindungen, besonders bevorzugt organische Verbindungen enthaltend mindestens eine kondensierte Aryl- oder Heteroarylgruppe.

Bevorzugt enthält das flüssigkristalline Material mindestens zwei, besonders bevorzugt mindestens drei und ganz besonders bevorzugt drei oder vier verschiedene Farbstoffverbindungen F. Bevorzugt decken die mindestens zwei Farbstoffverbindungen F jeweils verschiedene Bereiche des Lichtspektrums ab.

Wenn zwei oder mehr Farbstoffverbindungen F im flüssigkristallinen Material vorliegen, ergänzen sich die Absorptionsspektren der Verbindungen bevorzugt derart, dass im Wesentlichen das gesamte sichtbare Spektrum des Lichts absorbiert wird. Dadurch entsteht für das menschliche Auge der Eindruck von schwarzer Farbe. Bevorzugt wird dies dadurch erreicht, dass drei oder mehr Farbstoffverbindungen F verwendet werden, von denen mindestens eine blaues Licht absorbiert, mindestens eine grünes bis gelbes Licht absorbiert, und mindestens eine rotes Licht absorbiert. Lichtfarbe ist dabei entsprechend B. Bahadur, Liquid Crystals - Applications and Uses, Vol. 3, 1992, World Scientific Publishing, Abschnitt 11.2.1, definiert.

Der Gesamtanteil der Farbstoffverbindungen F im flüssigkristallinen Material beträgt bevorzugt 0.01 bis 20 Gew.-%, besonders bevorzugt 0.1 bis 15 Gew.-% und ganz besonders bevorzugt 0.2 bis 12 Gew.-%. Der Anteil jeder einzelnen der einen oder mehreren Farbstoffverbindungen F beträgt bevorzugt 0.01 bis 15 Gew.-%, bevorzugt 0.05 bis 12 Gew.-% und ganz besonders bevorzugt 0.1 bis 10 Gew.-%.

Die im flüssigkristallinen Material enthaltene Farbstoffverbindung F ist bevorzugt in diesem gelöst. Die Farbstoffverbindung F wird bevorzugt in ihrer Ausrichtung durch die Ausrichtung der Moleküle des flüssigkristallinen Materials beeinflusst.

Bevorzugt ist die Farbstoffverbindung F eine dichroitische Farbstoffverbindung, besonders bevorzugt eine positiv dichroitische Farbstoffverbindung. Unter positiv dichroitisch wird verstanden, dass die Farbstoffverbindung einen positiven Anisotropiegrad R, ermittelt wie in den Ausführungsbeispielen angegeben, aufweist. Besonders bevorzugt ist der Anisotropiegrad R größer als 0.4, ganz besonders bevorzugt größer als 0.5 und am stärksten bevorzugt größer als 0.6.

Es kann in einer alternativen Ausführungsform auch bevorzugt sein, dass die Farbstoffverbindung F eine negativ dichroitische Farbstoffverbindung ist. Unter negativ dichroitisch wird verstanden, dass die Farbstoffverbindung einen negativen Anisotropiegrad R, ermittelt wie in den Ausführungsbeispielen angegeben, aufweist.

Es ist bevorzugt, dass für den Fall, in dem zwei oder mehr unterschiedliche Farbstoffverbindungen im flüssigkristallinen Material vorhanden sind, diese entweder alle positiv dichroitisch sind, oder alle negatic dichroitisch sind.

Bevorzugt erreicht die Absorption der Farbstoffverbindung F ein Maximum, wenn die Polarisationsrichtung des Lichts parallel zur Richtung der längsten Ausdehnung des Moleküls der Farbstoffverbindung F ist, und sie erreicht ein

Minimum, wenn die Polarisationsrichtung des Lichts senkrecht zur Richtung der längsten Ausdehnung des Moleküls der Farbstoffverbindung F ist.

Weiterhin bevorzugt absorbiert die Farbstoffverbindung F gemäß der vorliegenden Anmeldung vorwiegend Licht im UV-VIS-NIR-Bereich, d. h. in einem Wellenlängenbereich von 320 bis 1500 nm. Besonders bevorzugt absorbiert die Farbstoffverbindung F vorwiegend Licht im VIS -Bereich, d. h. in einem Wellenlängenbereich von 380 bis 780 nm. Besonders bevorzugt hat die Farbstoffverbindung F ein oder mehrere Absorptionsmaxima im wie oben definierten UV-VIS-NIR-Bereich, bevorzugt im VIS-Bereich, d.h. von 380 nm bis 780 nm Wellenlänge.

Weiterhin bevorzugt ist die Farbstoffverbindung eine fluoreszierende Farbstoffverbindung. Unter Fluoreszenz wird dabei verstanden, dass eine Verbindung durch Absorption von Licht einer bestimmten Wellenlänge in einen elektronisch angeregten Zustand versetzt wird, wobei die Verbindung anschließend unter Emission von Licht in den Grundzustand übergeht. Bevorzugt hat das emittierte Licht längere Wellenlänge als das absorbierte Licht. Weiterhin bevorzugt ist der Übergang vom angeregten Zustand in den Grundzustand spin-erlaubt, erfolgt also ohne Änderung des Spins. Weiterhin bevorzugt ist die Lebensdauer des angeregten Zustands der fluoreszierenden Verbindung kürzer als $10^{-5}$ s, besonders bevorzugt kürzer als $10^{-6}$ s, ganz besonders bevorzugt zwischen $10^{-9}$ und $10^{-7}$ s.

Weiterhin bevorzugt ist die Farbstoffverbindung F gewählt aus den in B. Bahadur, Liquid Crystals - Applications and Uses, Vol. 3, 1992, World Scientific Publishing, Abschnitt 11.2.1 angegebenen Farbstoffklassen und besonders bevorzugt aus den in der Tabelle aufgeführten expliziten Verbindungen.

Bevorzugt sind die Farbstoffverbindungen F gewählt aus Azoverbindungen, Anthrachinonen, Methinverbindungen, Azomethinverbindungen, Merocyaninverbindungen, Naphthochinonen, Tetrazinen, Benzothiadiazolen, Pyrromethenen und Diketopyrrolopyrrolen. Besonders bevorzugt sind darunter Azoverbindungen, Anthrachinone, Benzothiadiazole, insbesondere wie in WO 2014/187529 offenbart, und Diketopyrrolopyrrole, insbesondere wie in der noch nicht offengelegten Anmeldung EP 13005918.1 offenbart.

Die genannten Farbstoffverbindungen sind vielfach in der Literatur beschrieben. So sind z.B. Anthrachinonfarbstoffe beschrieben in EP 34832, EP 44893, EP 48583, EP 54217, EP 56492, EP 59036, GB 2065158, GB 2065695, GB 2081736, GB 2082196, GB 2094822, GB 2094825, JP-OS 55-123673, DE 3017877, DE 3040102, DE 3115147, DE 3115762, DE 3150803, DE 3201120 und DE 3307238, Naphthochinonfarbstoffe beschrieben in DE 3126108 und DE 3202761, und Azofarbstoffe in EP 43904, DE 3123519, WO 82/2054, GB 2079770, JP-OS 56-57850, JP-OS 56-104984, US 4308161, US 4308162, US 4340973, T. Uchida, C. Shishido, H. Seki und M. Wada: Mol. Cryst. Lig. Cryst. 39, 39-52 (1977) und H. Seki, C. Shishido, S. Yasui und T. Uchida: Jpn. J. Appl. Phys. 21, 191-192 (1982).

Bevorzugt entsprechen die Farbstoffverbindungen F einer Formel (F)

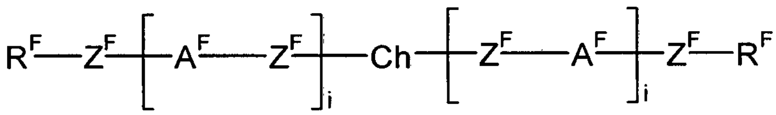

Formel (F),

wobei für die auftretenden Gruppen gilt:

Ch ist eine beliebige chromophore Gruppe;

$A^F$ ist bei jedem Auftreten gleich oder verschieden gewählt aus

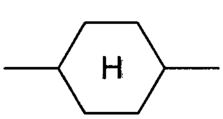 , 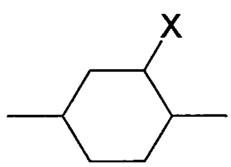 , 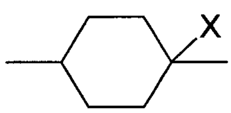 , 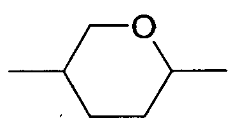 ,

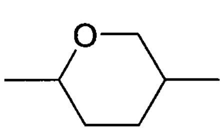 , 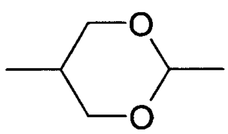 , 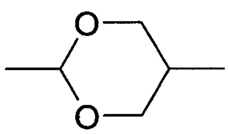 , 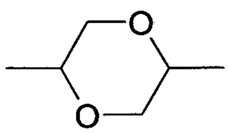 ,

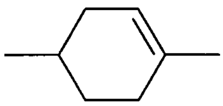, 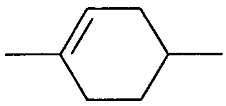, 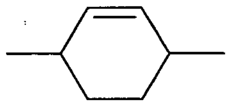, 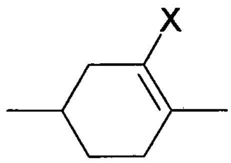,

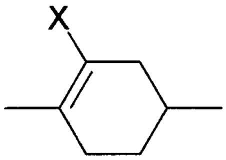, 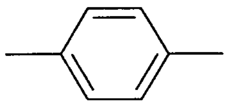, 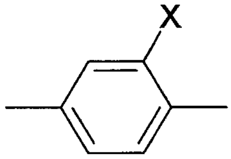, 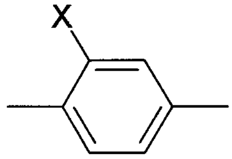,

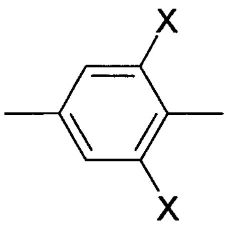, 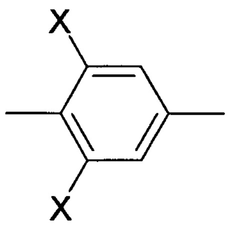, 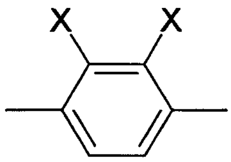, 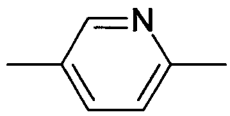,

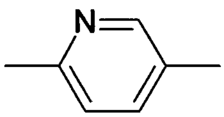, 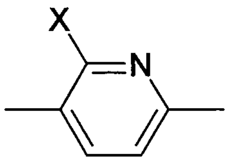, 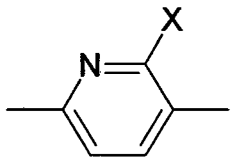, 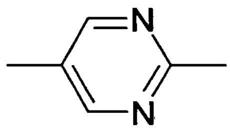,

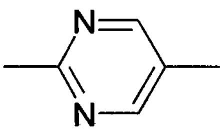, 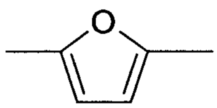, 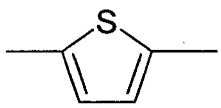,

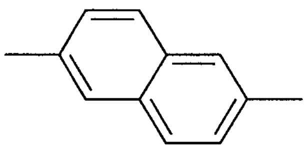, 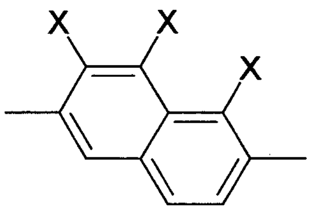, 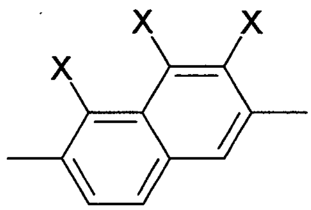,

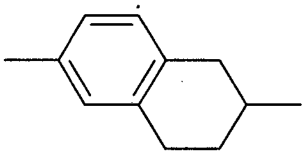, 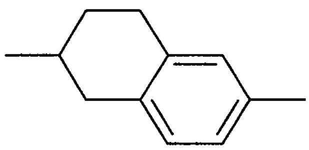, 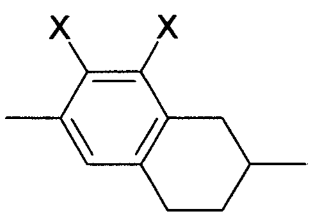,

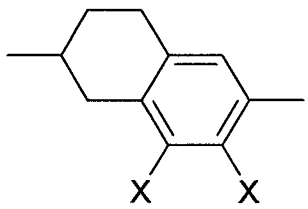,
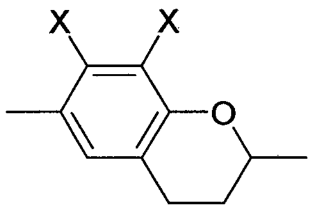,
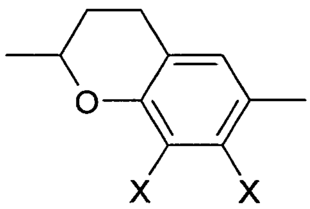,

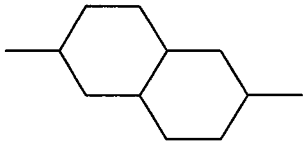,
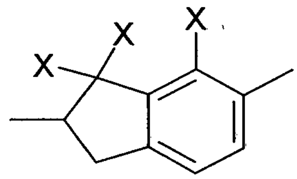,

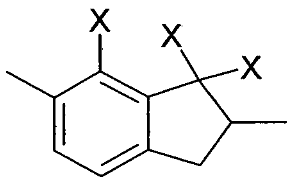,
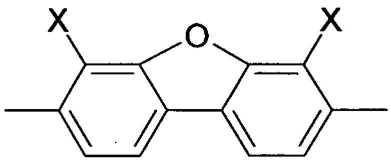,

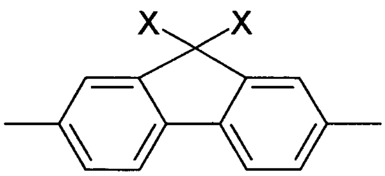,
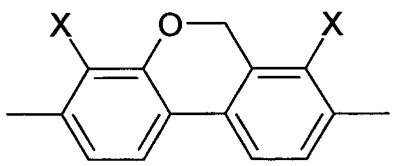,

und

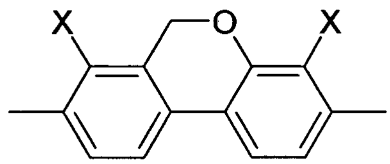;

X ist bei jedem Auftreten gleich oder verschieden gewählt aus F, Cl, CN, Alkylgruppen mit 1 bis 10 C-Atomen, Alkoxygruppen mit 1 bis 10 C-Atomen und Thioalkoxygruppen mit 1 bis 10 C-Atomen, wobei ein oder mehrere Wasserstoffatome in den Alkyl-, Alkoxy- und Thioalkoxygruppen durch F oder Cl ersetzt sein können, und wobei eine oder mehrere $CH_2$-Gruppen in den Alkyl-, Alkoxy- und Thioalkoxygruppen durch O oder S ersetzt sein können;

$R^F$ ist bei jedem Auftreten gleich oder verschieden und gewählt aus H, F, Cl, CN, NCS, $R^1$-O-CO-, $R^1$-CO-O-, Alkylgruppen mit 1 bis 10 C-Atomen, Alkoxygruppen mit 1 bis 10 C-Atomen, Thioalkoxygruppen mit 1 bis 10 C-Atomen, Alkenylgruppen mit 2 bis 10 C-Atomen, Alkenyloxygruppen mit 2 bis 10 C-Atomen und Thioalkenyloxygruppen mit 2 bis 10 C-Atomen, wobei ein oder mehrere H-Atome in den Alkyl-, Alkoxy-, Thioalkoxy-, Alkenyl- und Alkenyloxygruppen durch F, Cl oder CN ersetzt sein können, und wobei eine oder mehrere $CH_2$-Gruppen in den Alkyl-, Alkoxy-, Thioalkoxy-, Alkenyl- und Alkenyloxygruppen durch O, S, -O-CO- oder -CO-O- ersetzt sein können;

$R^1$ ist bei jedem Auftreten gleich oder verschieden gewählt aus Alkylgruppen mit 1 bis 10 C-Atomen, bei denen eine oder mehrere Wasserstoffatome durch F oder Cl ersetzt sein können, und bei denen eine oder mehrere $CH_2$-Gruppen durch O oder S ersetzt sein können;

$Z^F$ ist bei jedem Auftreten gleich oder verschieden gewählt aus -CO-O-, -O-CO-, $-CF_2-CF_2-$, $-CF_2-O-$, $-O-CF_2-$, $-CH_2-CH_2-$, -CH=CH-, -CF=CF-, -CF=CH-, -CH=CF-, -C≡C-, $-OCH_2-$, $-CH_2O-$, und eine Einfachbindung;

i ist bei jedem Auftreten gleich oder verschieden 1, 2, oder 3.

Die Gruppe Ch ist bevorzugt gewählt aus Gruppen enthaltend mindestens eine kondensierte Aryl- oder Heteroarylgruppe.

Unter einer kondensierten Aryl- oder Heteroarylgruppe wird eine Einheit aus mindestens zwei aromatischen oder heteroaromatischen Ringen verstanden, bei der mindestens zwei der Ringe mindestens eine Bindung miteinander teilen. Beispiele für kondensierte Arylgruppen sind Naphthalin und Anthracen, Beispiele für kondensierte Heteroarylgruppen sind Indol, Benzothiadiazol und Diketopyrrolopyrrol.

Bevorzugte Ausführungsformen der Gruppe Ch entsprechen den folgenden Formeln (Ch-1) und (Ch-2)

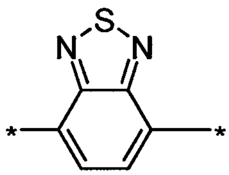

Formel (Ch-1)

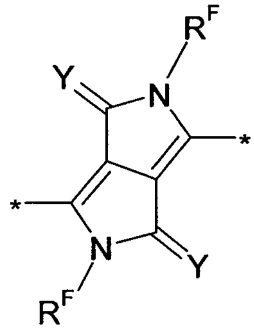

Formel (Ch-2),

wobei die Gruppen an den Rest der Verbindung der Formel (F) jeweils über die mit * markierten Bindungen gebunden sind,

wobei die Gruppen an den freien Positionen jeweils mit Resten $R^F$ substituiert sein können;

wobei Y bei jedem Auftreten gleich oder verschieden gewählt ist aus O und $NR^F$; und

wobei $R^F$ definiert ist wie oben.

Die Gruppe $A^F$ ist bevorzugt bei jedem Auftreten gleich oder verschieden gewählt aus

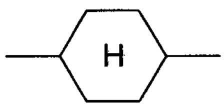 , 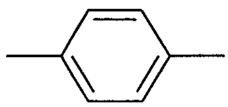 , 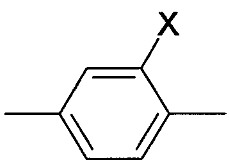 , 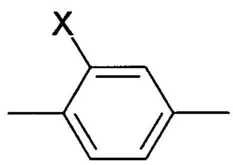 ,

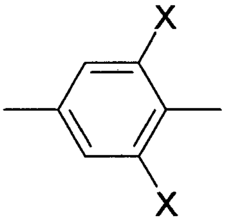, 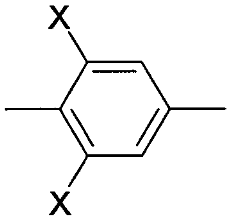, 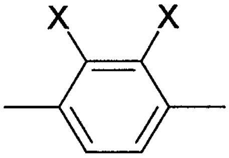, 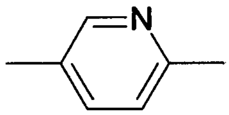,

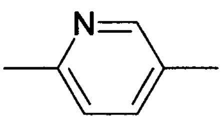, 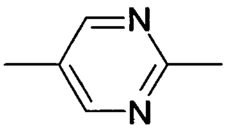, 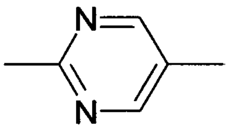, 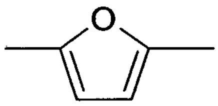,

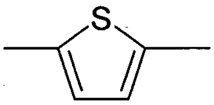, und 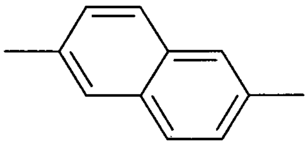.

Die Gruppe $Z^F$ ist bevorzugt eine Einfachbindung.

Der Index i ist bei jedem Auftreten gleich oder verschieden 1 oder 2.

Die folgenden Verbindungen sind Beispiele für Farbstoffverbindungen F:

| |
|---|
| 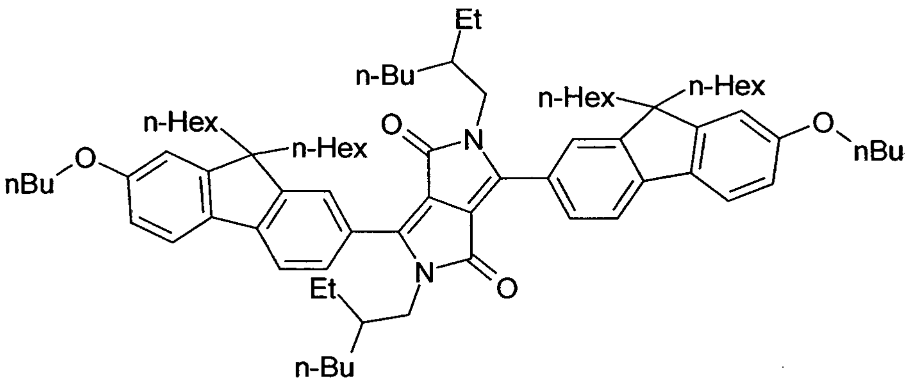 |
| 1 |
| 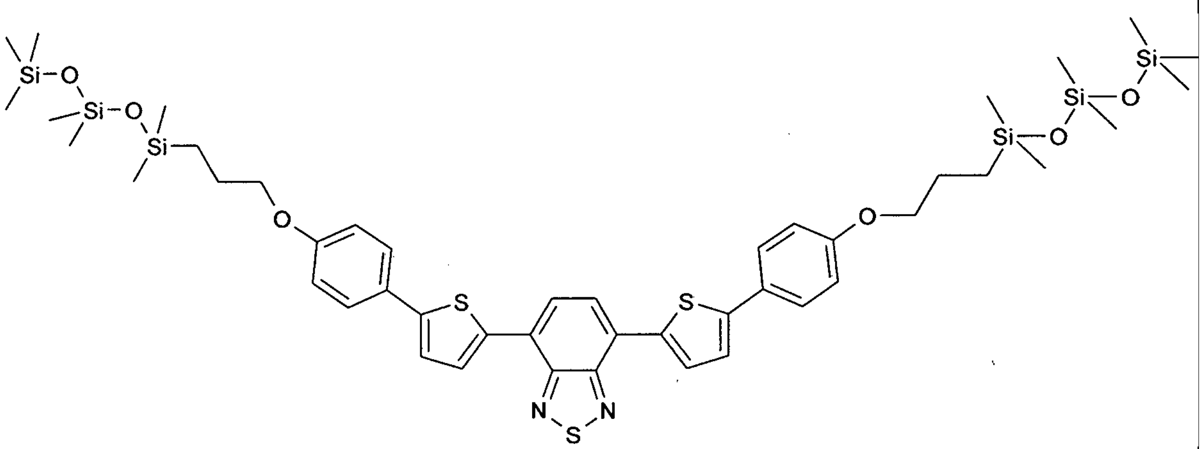 |
| 2 |

(fortgesetzt)

| | |
|---|---|
| 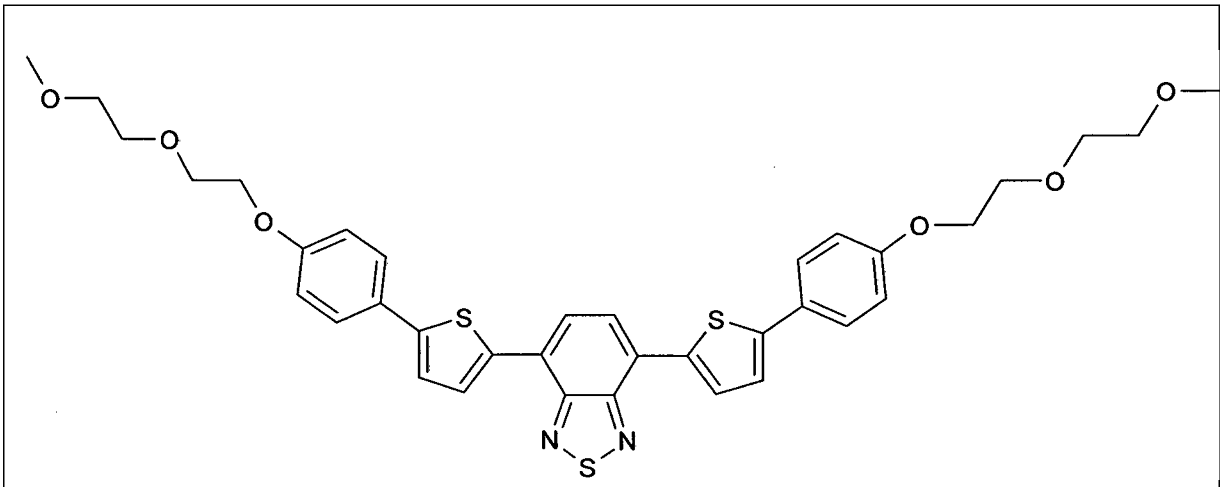 |
| 3 |
| 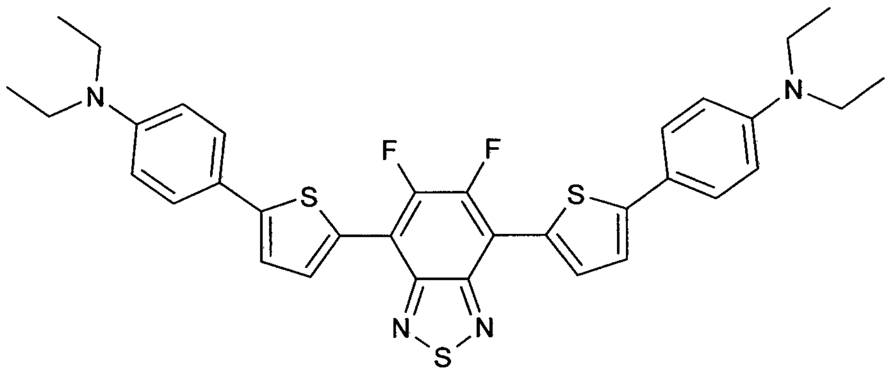 |
| 4 |
| 5 |
| 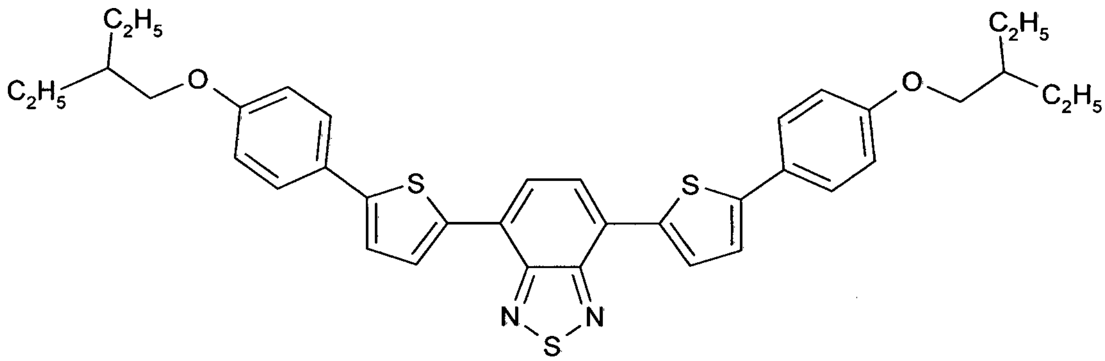 |
| 6 |

(fortgesetzt)

| | |
|---|---|
| 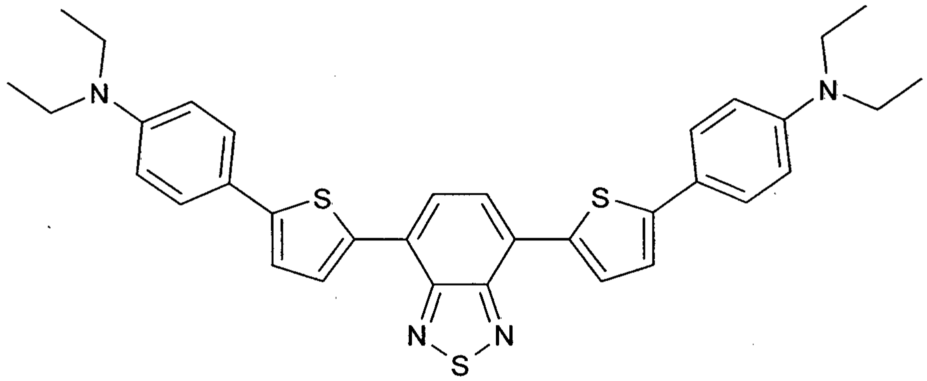 | |
| 7 | |
| 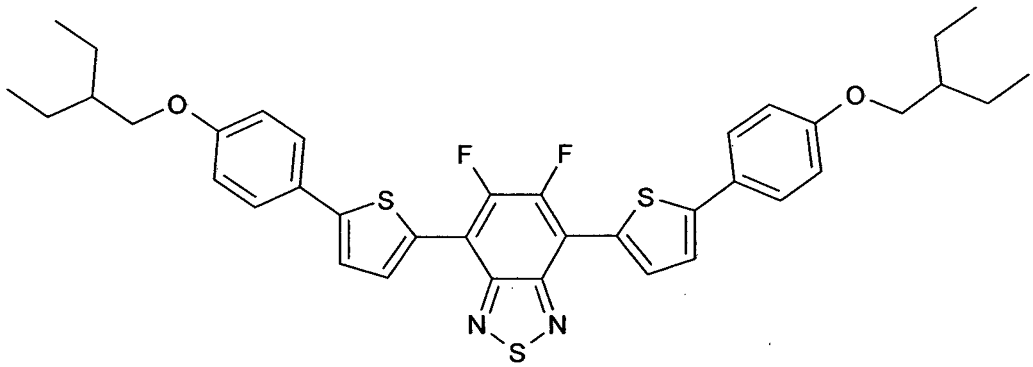 | |
| 8 | |
| 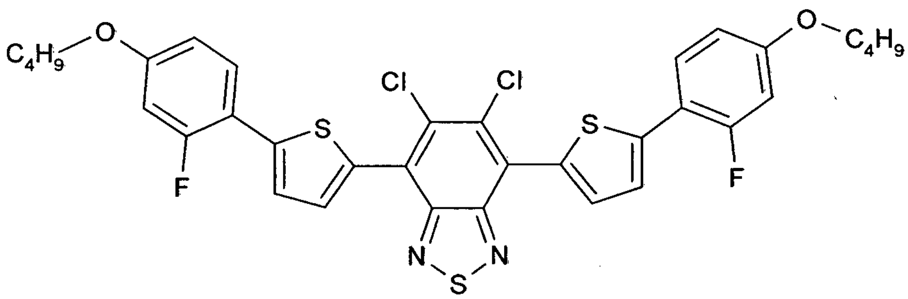 | |
| 9 | |
| 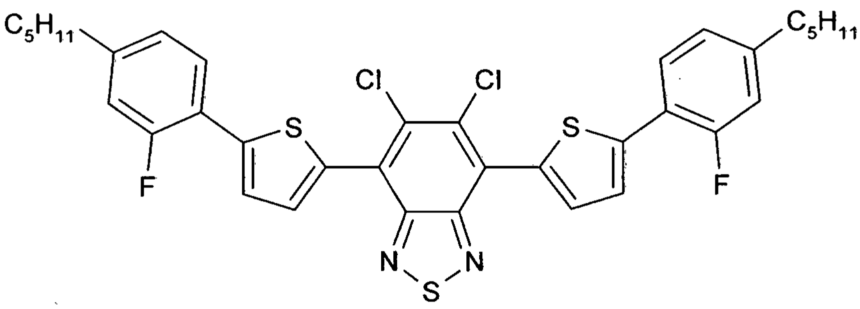 | |
| 10 | |

(fortgesetzt)

| |
|---|
| 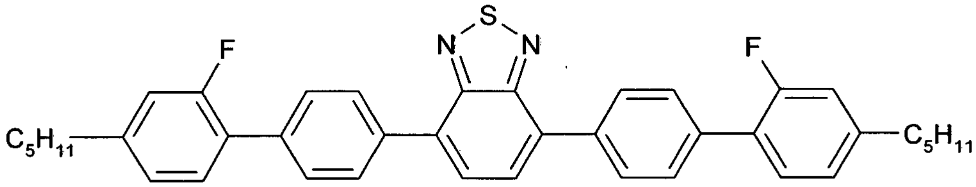 |
| 11 |
| 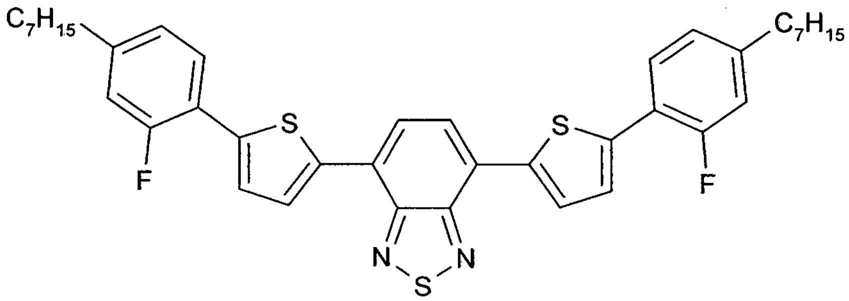 |
| 12 |
| 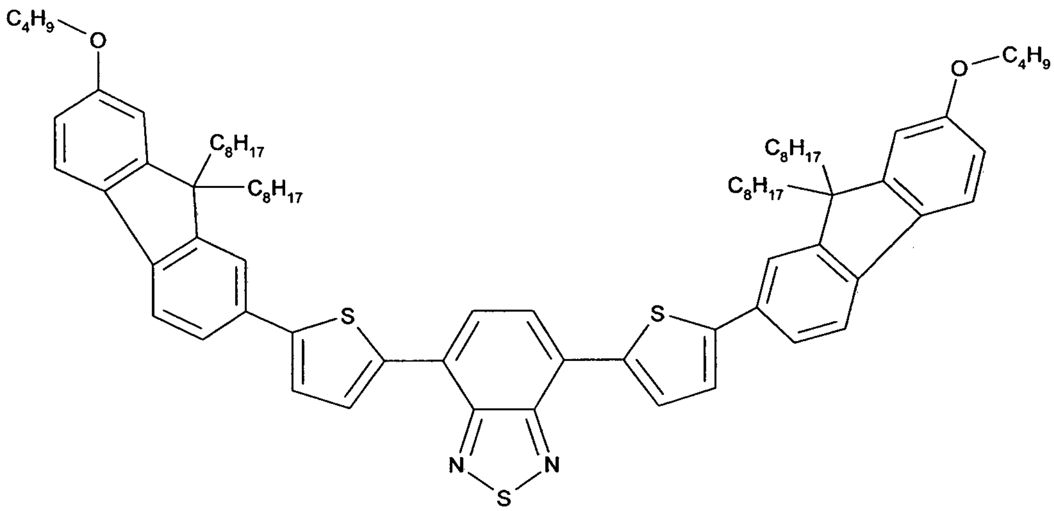 |
| 13 |
| 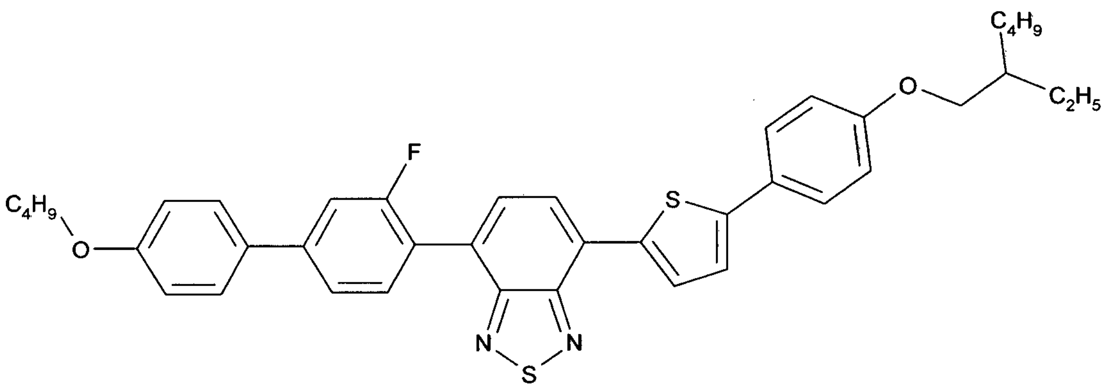 |
| 14 |

(fortgesetzt)

| |
|---|
| 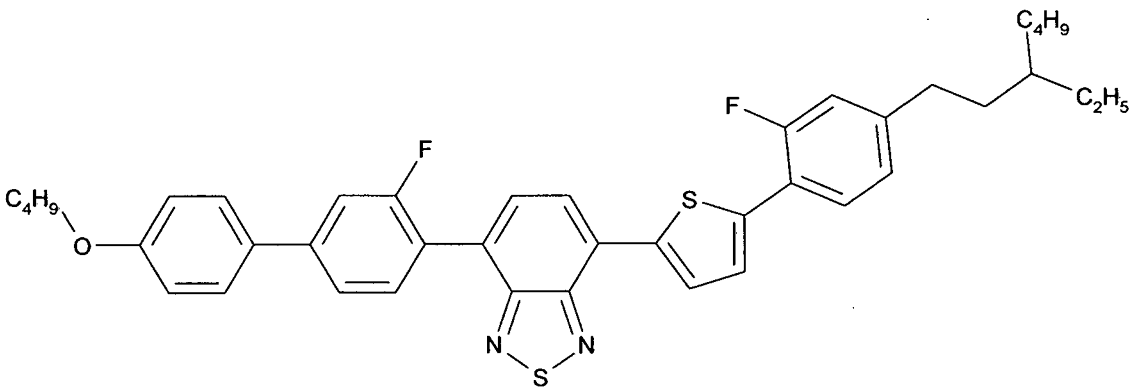 |
| 15 |
| 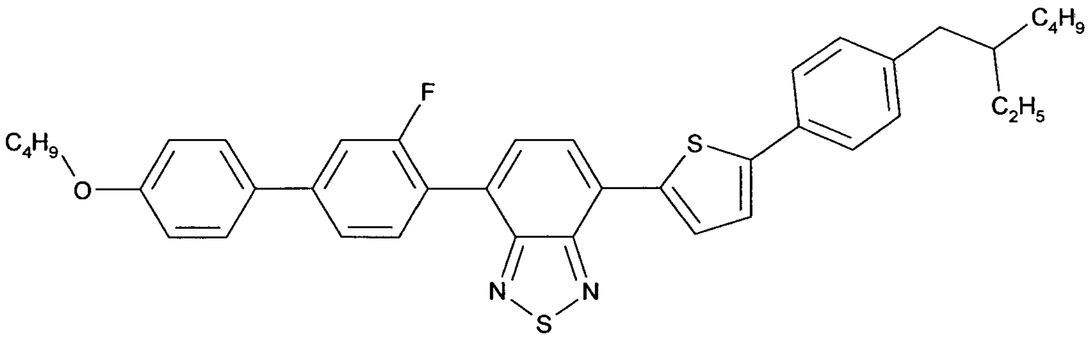 |
| 16 |
| 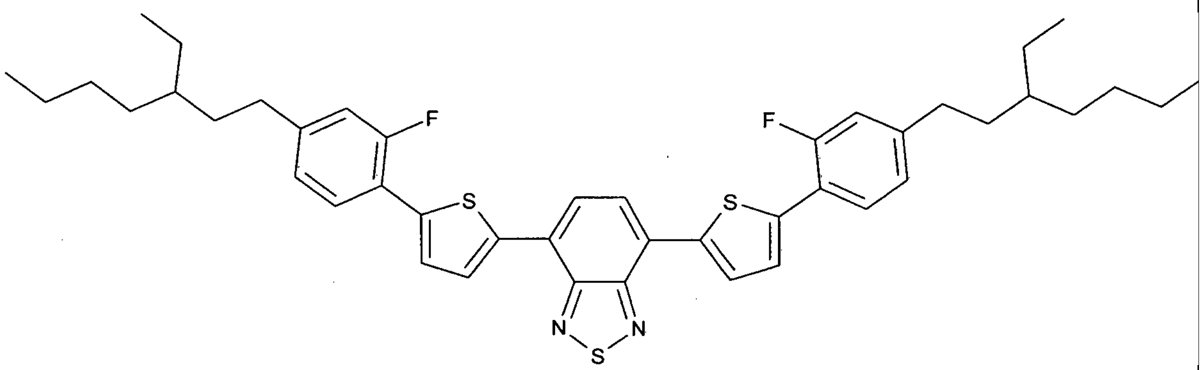 |
| 17 |
| 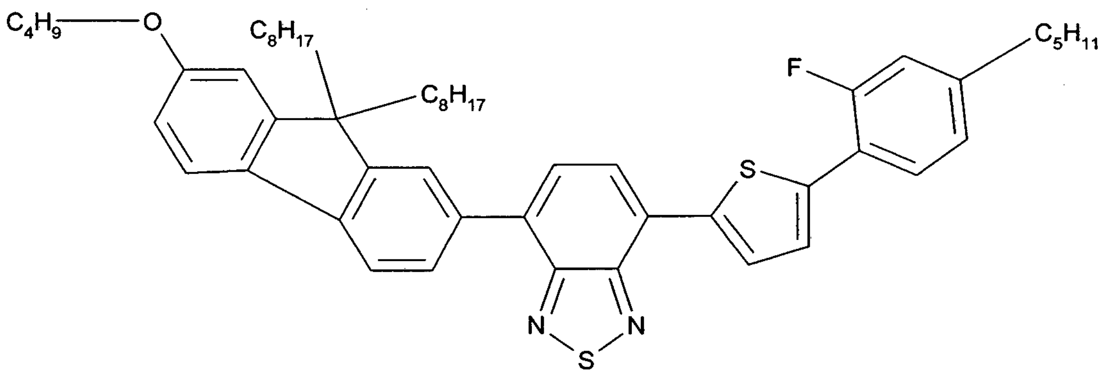 |
| 18 |

(fortgesetzt)

| | |
|---|---|
| 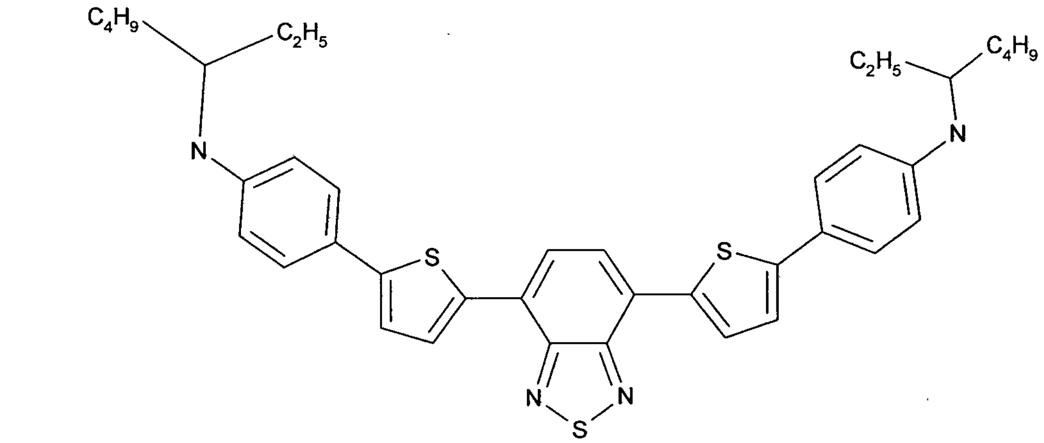 | |
| 19 | |
| 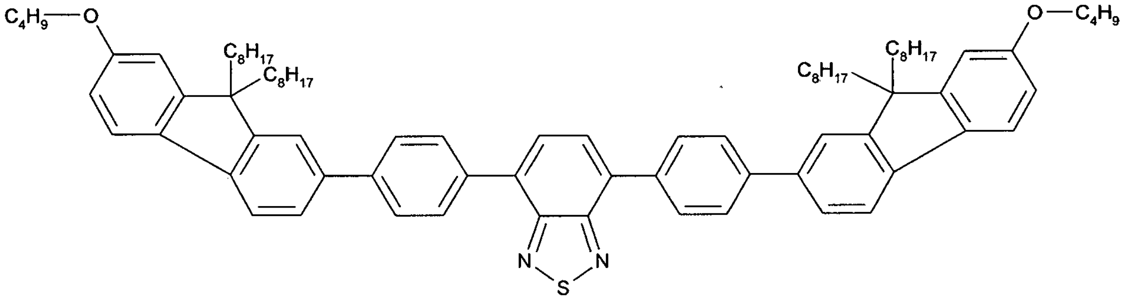 | |
| 20 | |
| 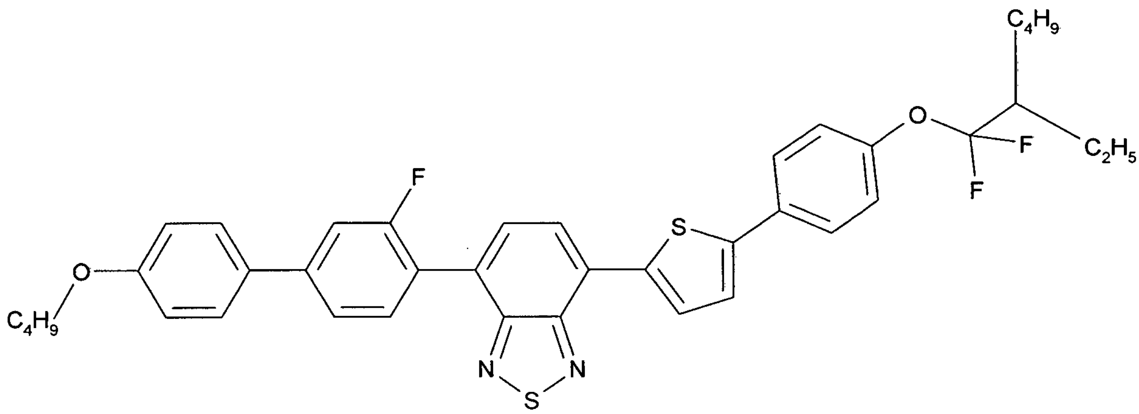 | |
| 21 | |

(fortgesetzt)

| |
|---|
| 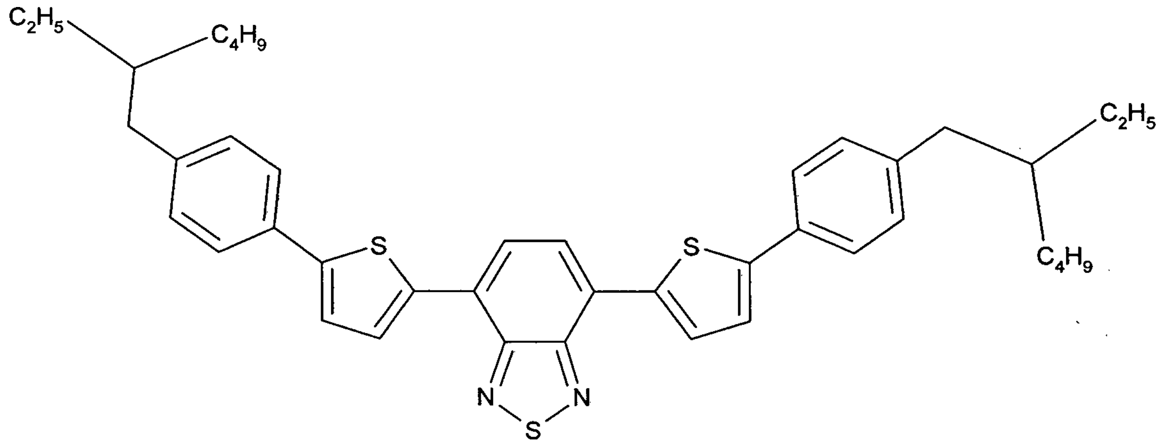 |
| 22 |
| 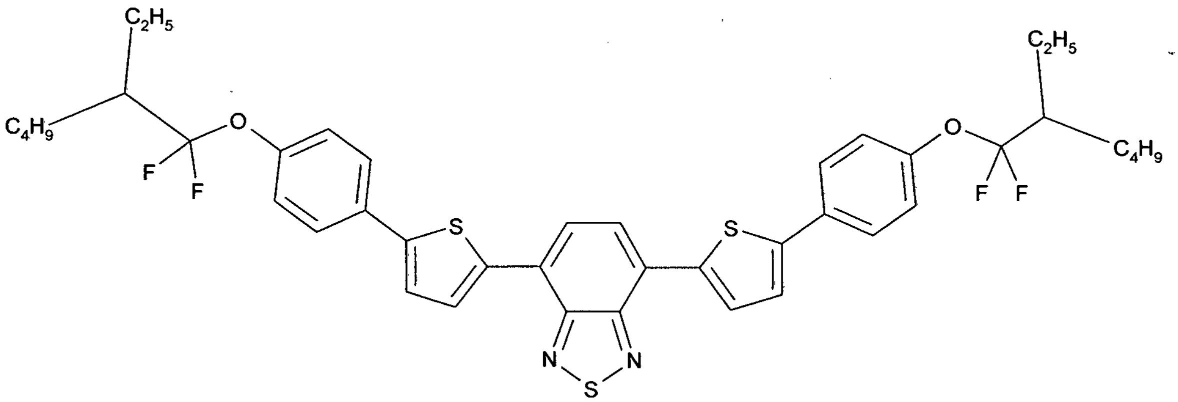 |
| 23 |
| 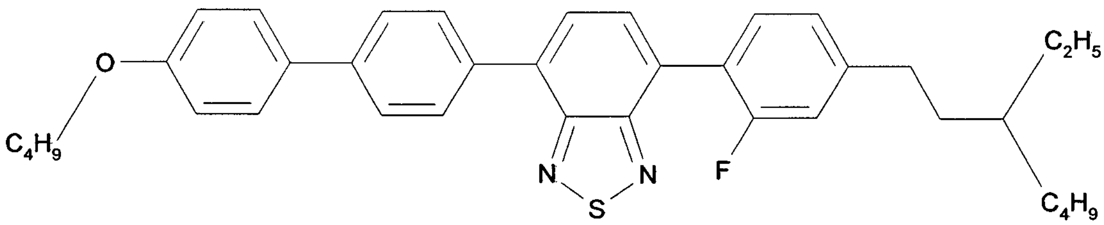 |
| 24 |

(fortgesetzt)

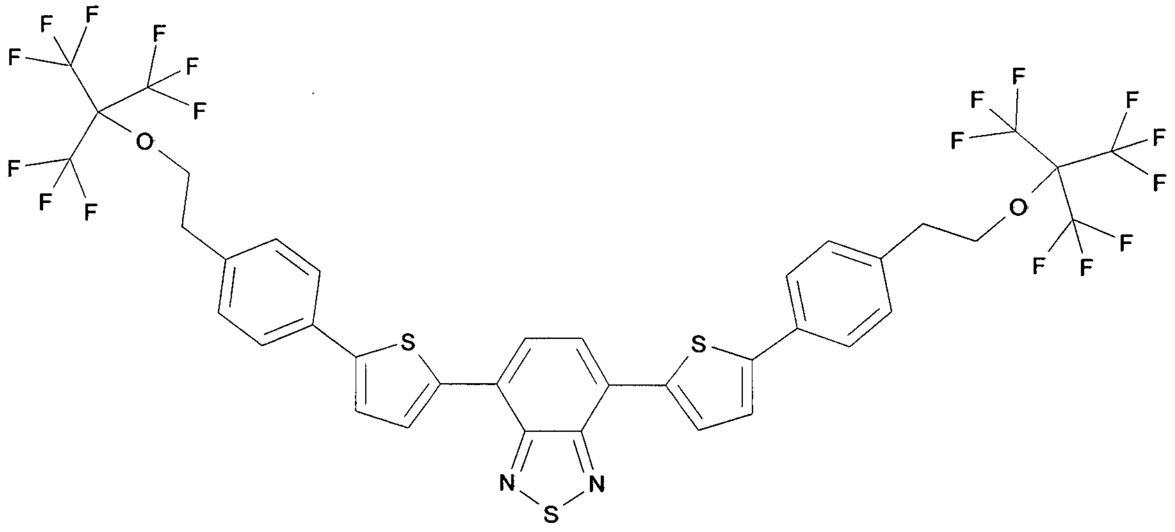

25

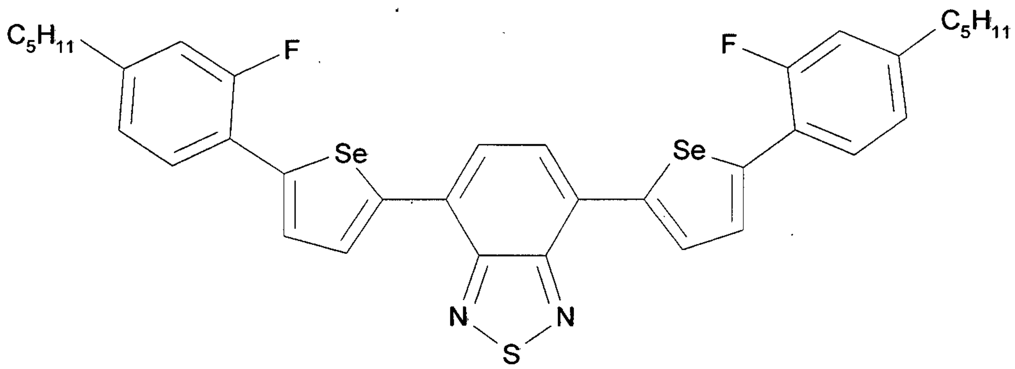

26

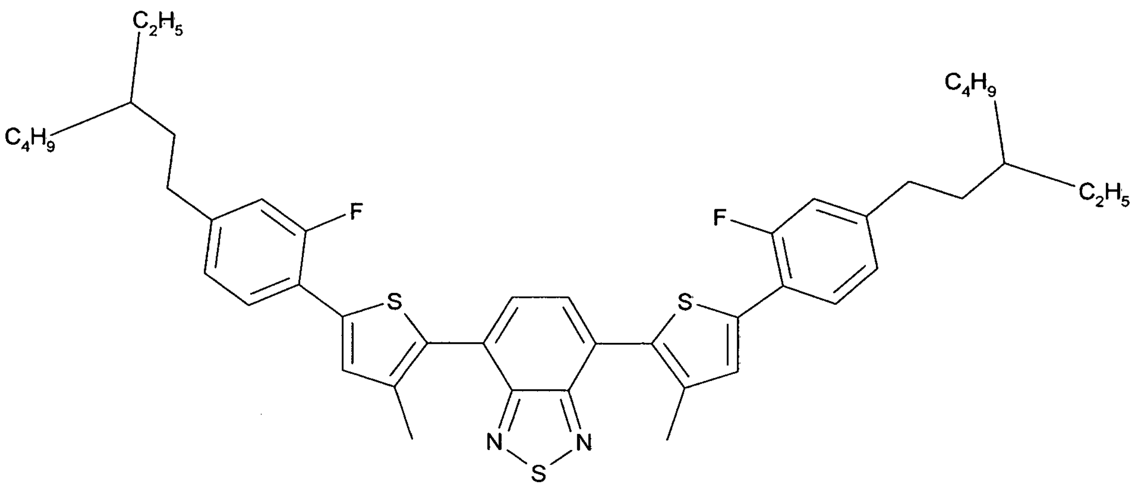

27

(fortgesetzt)

| | |
|---|---|
| 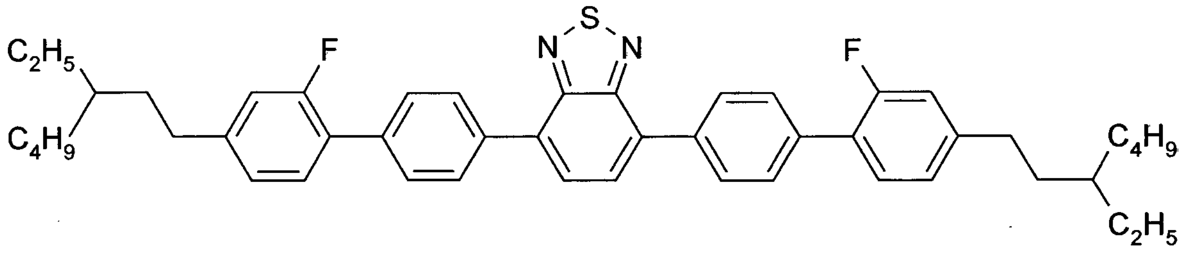 | |
| 28 | |
| 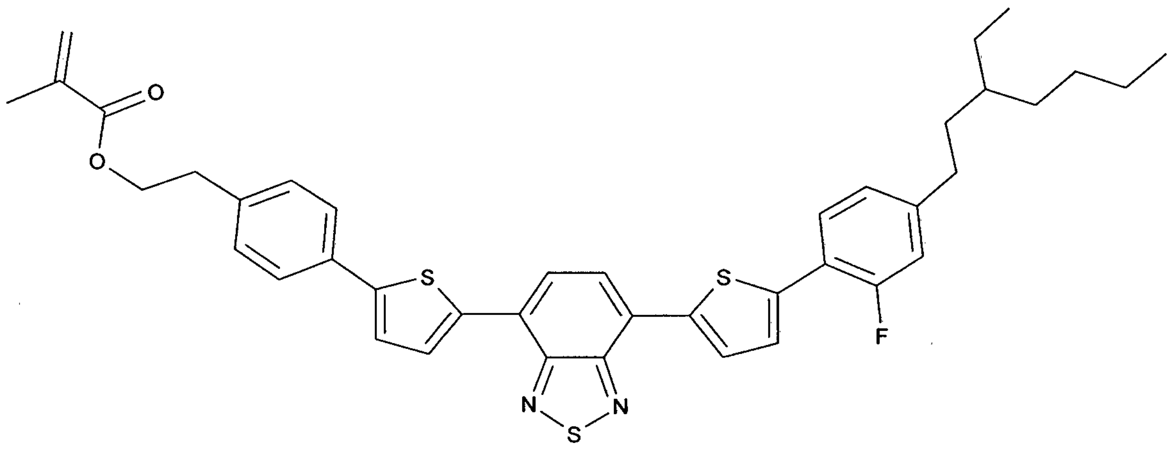 | |
| 29 | |
| 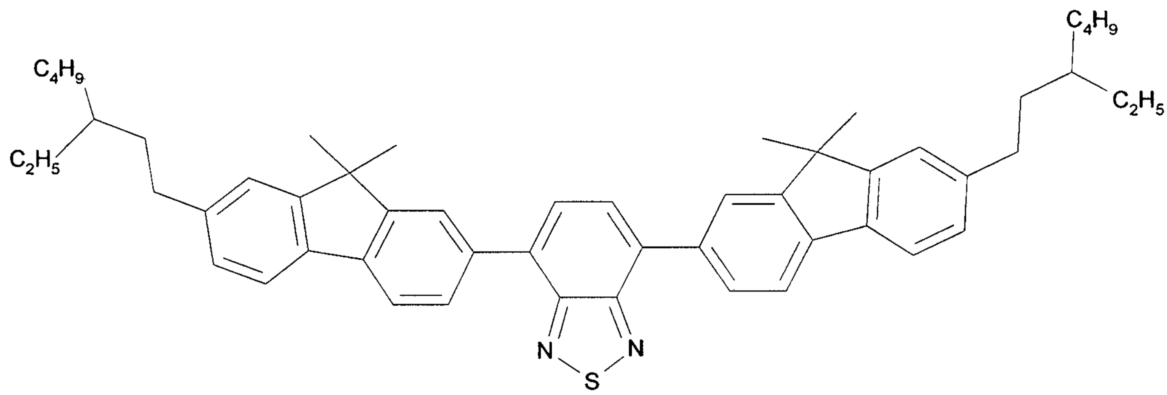 | |
| 30 | |

(fortgesetzt)

| |
|---|
| 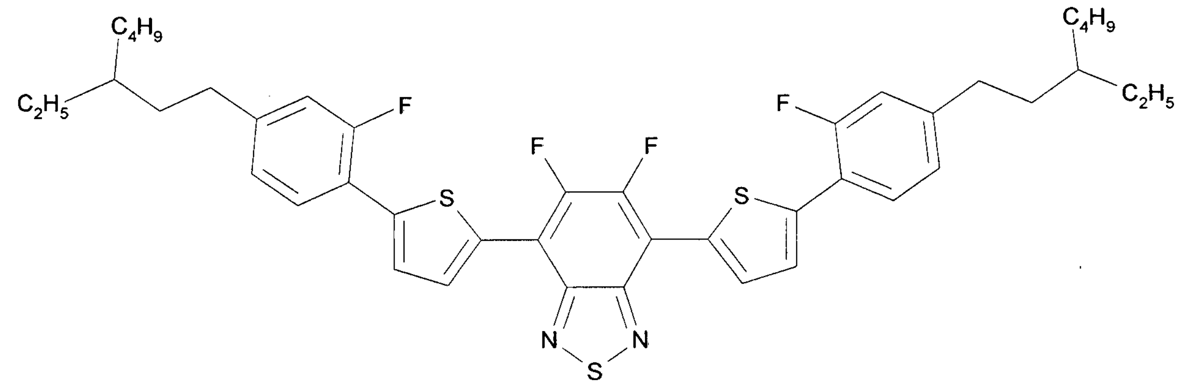 |
| 31 |
| 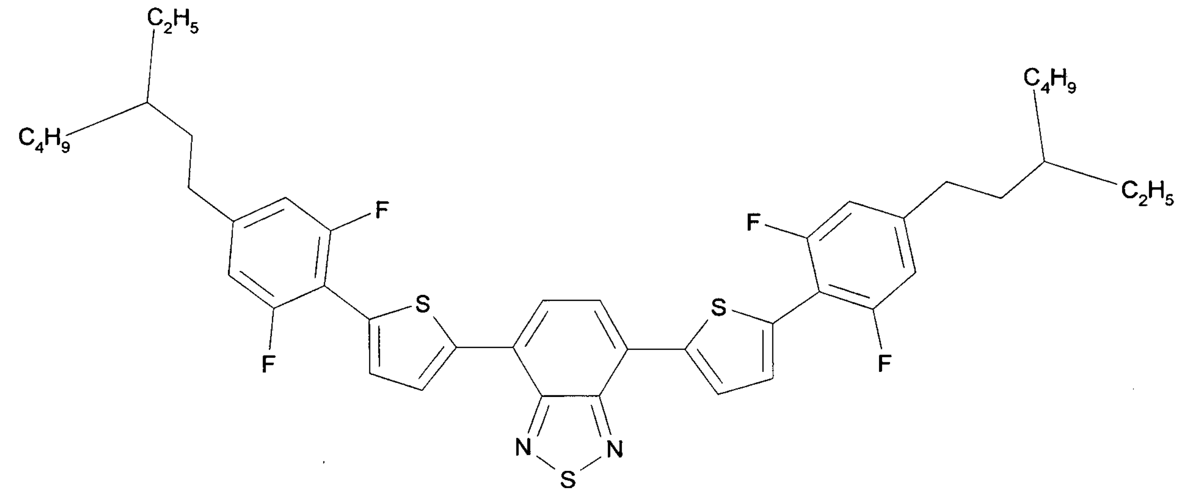 |
| 32 |
| 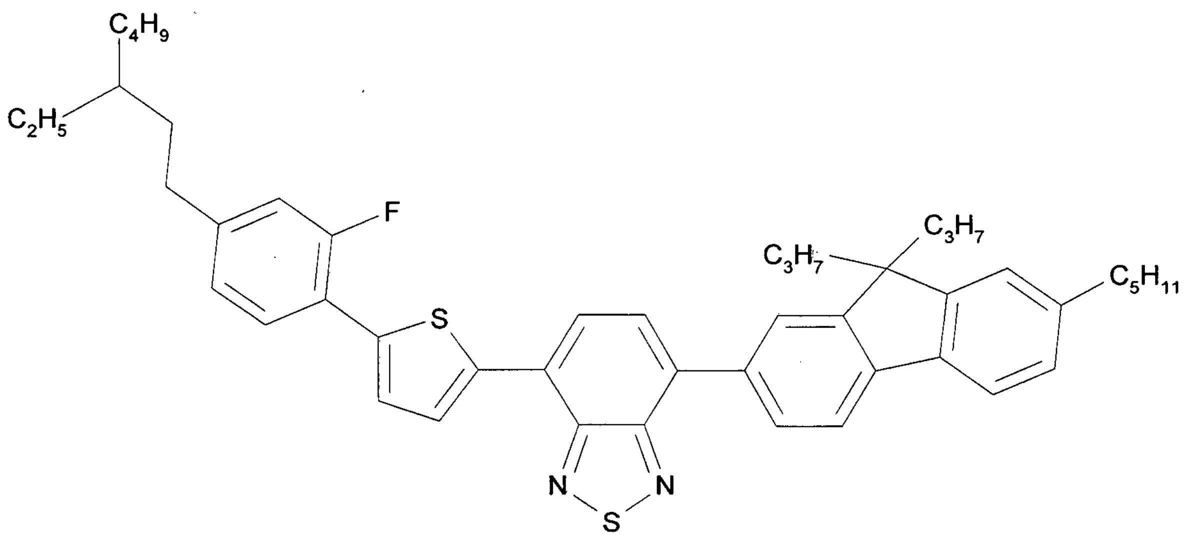 |
| 33 |

(fortgesetzt)

| |
|---|
| 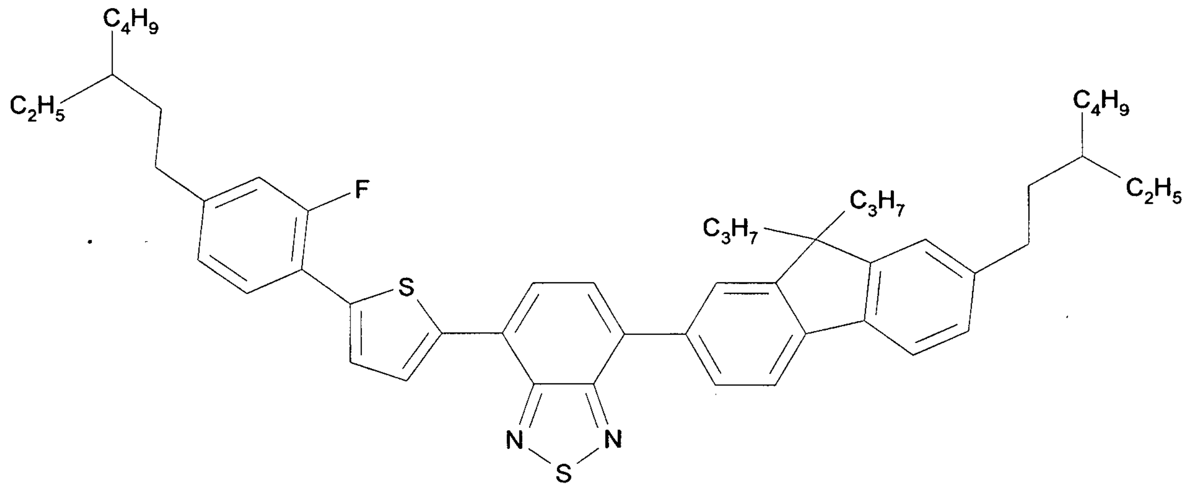 |
| 34 |
| 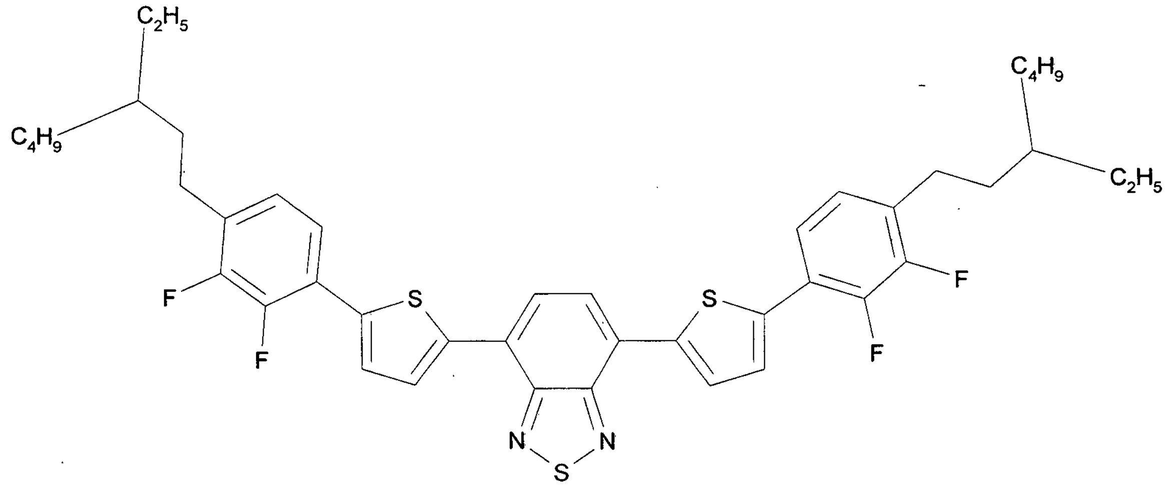 |
| 35 |
| 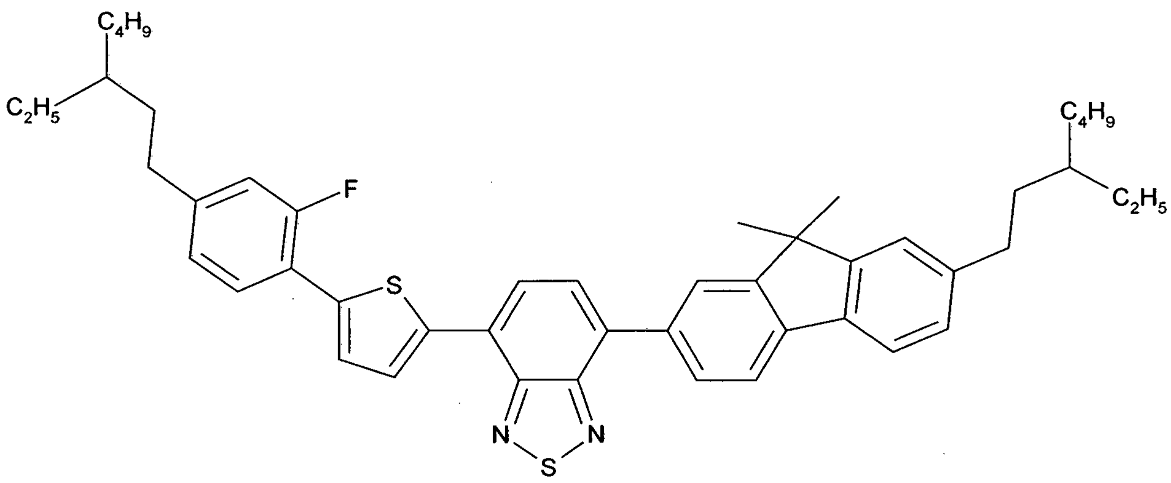 |

(fortgesetzt)

| 36 |
|---|
| 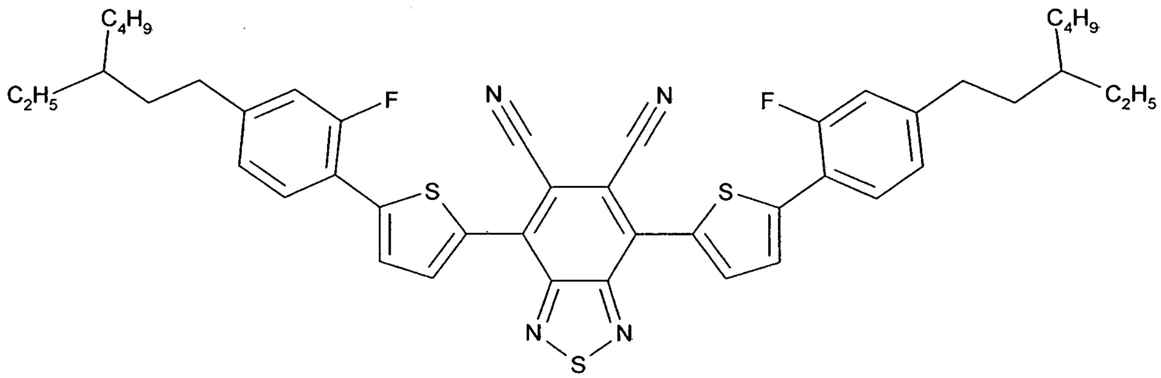 |
| 37 |
| 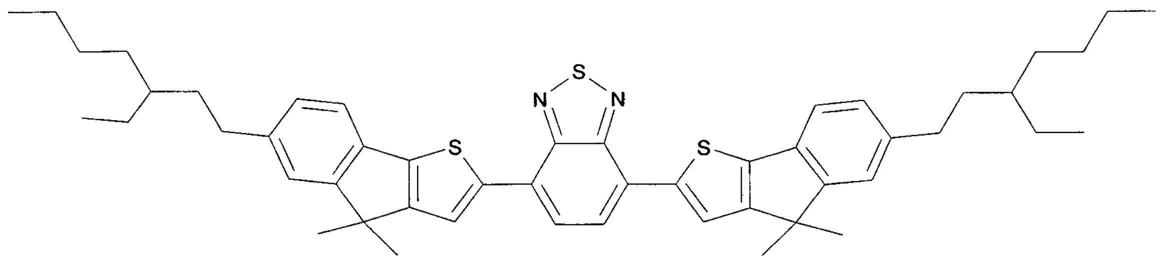 |
| 38 |
| 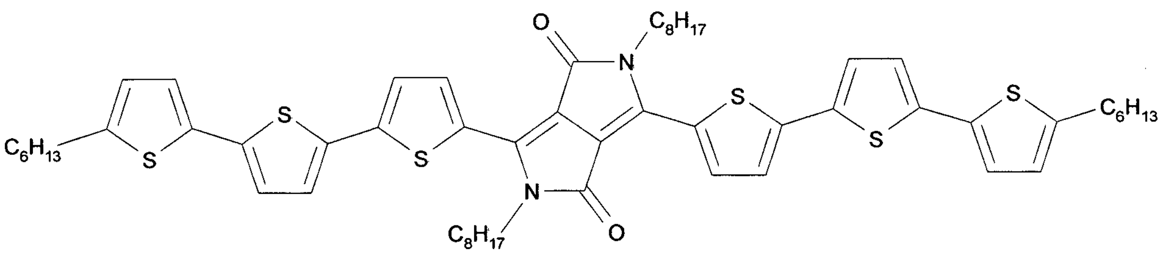 |
| 39 |

(fortgesetzt)

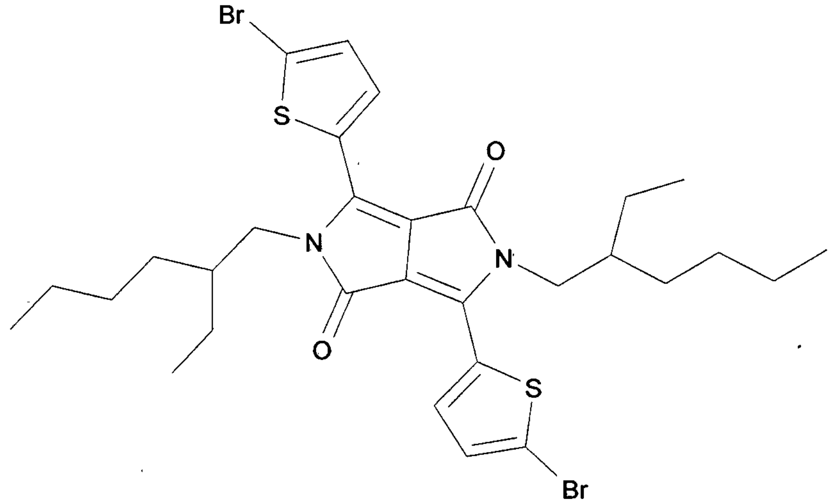

40

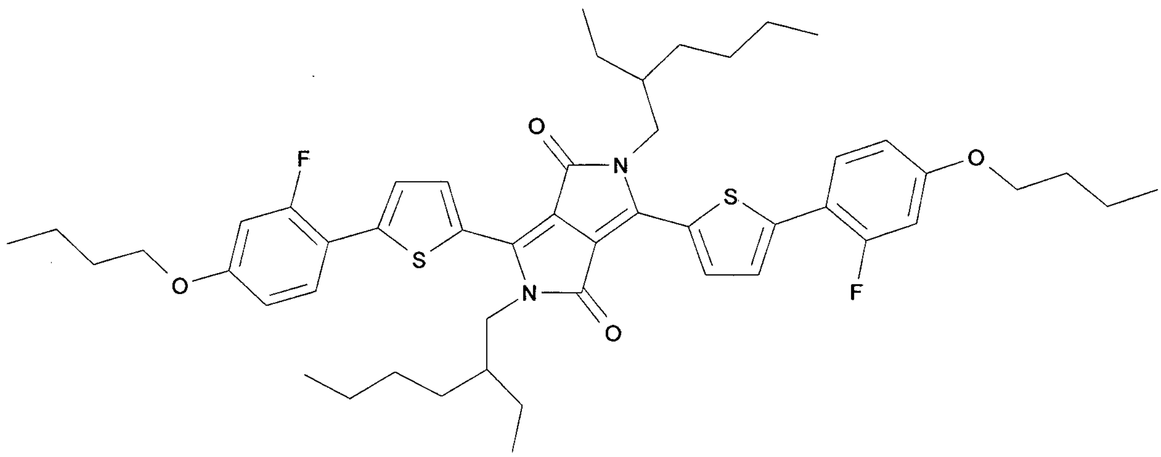

41

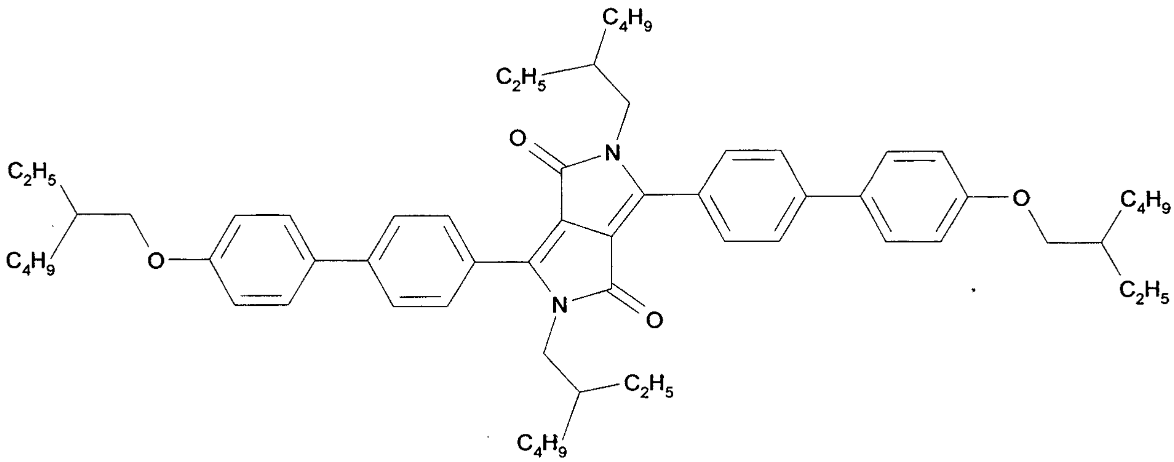

42

(fortgesetzt)

| |
|---|
| 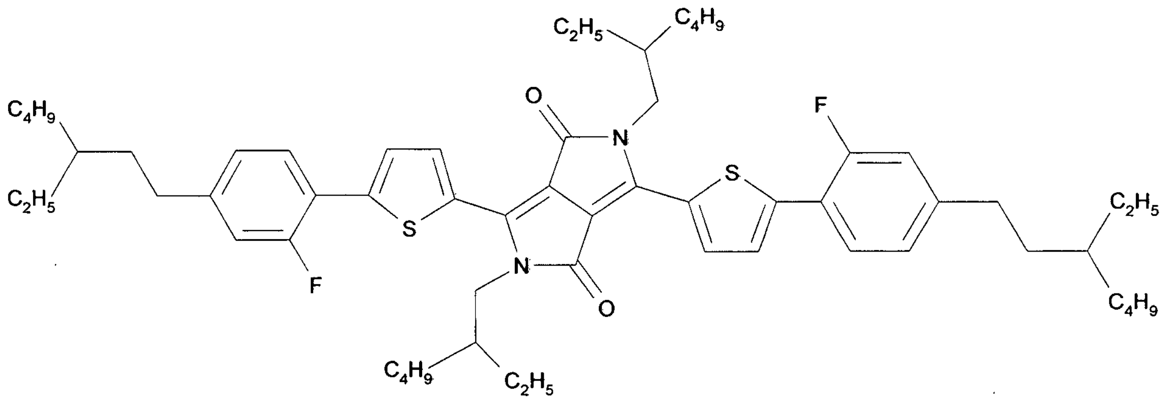 |
| 43 |
| 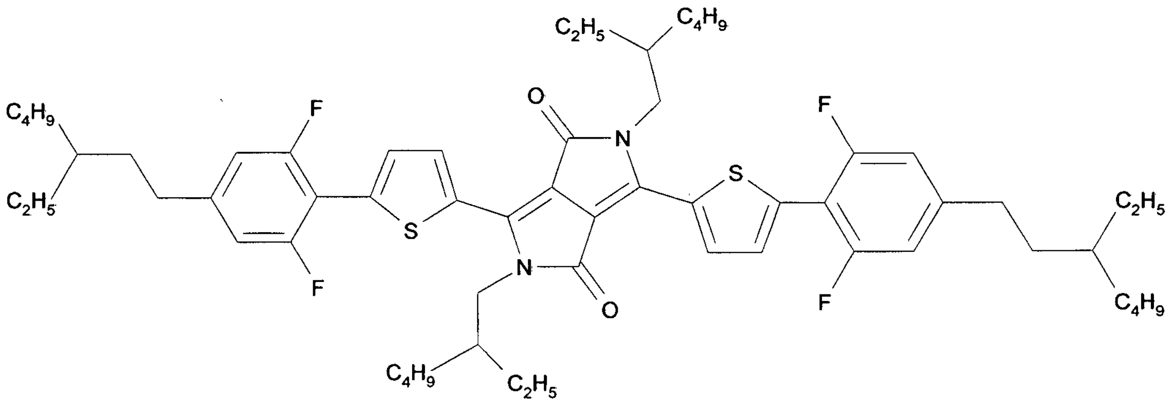 |
| 44 |
| 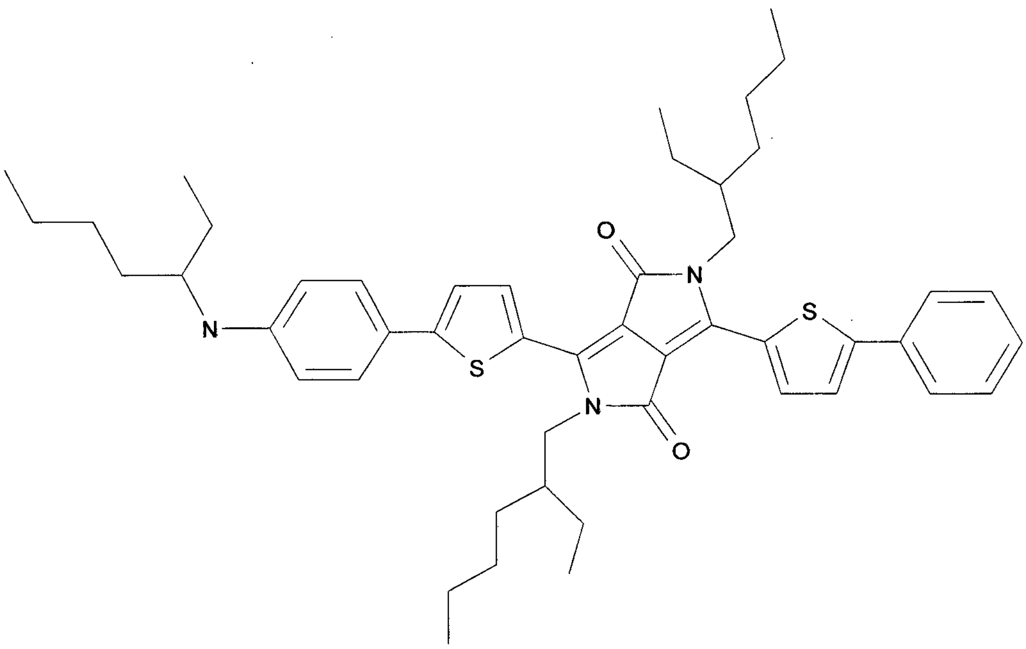 |
| 45 |

(fortgesetzt)

| |
|---|
| 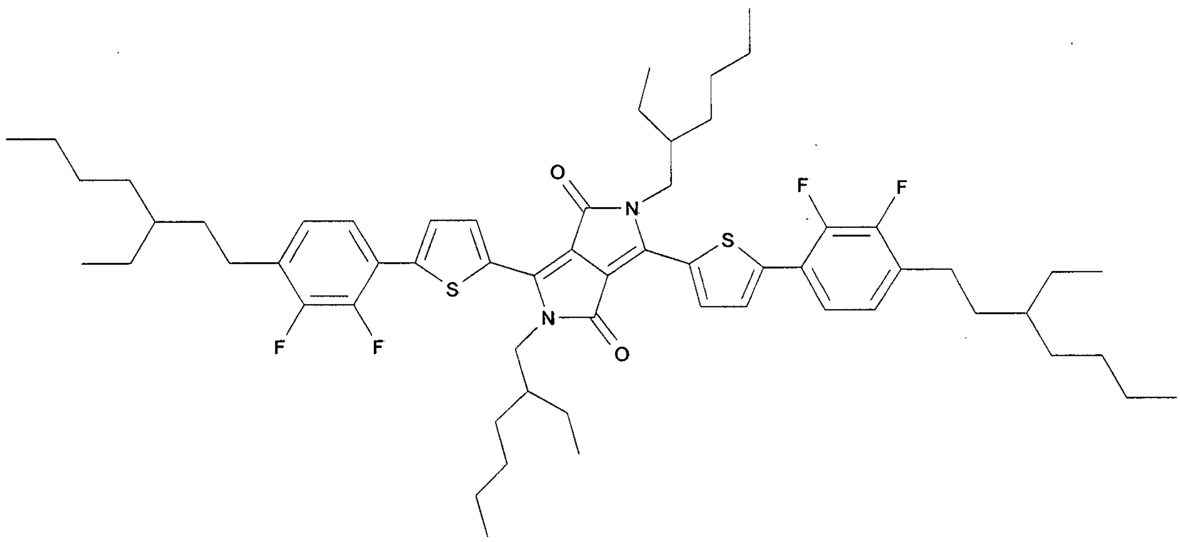 |
| 46 |
| 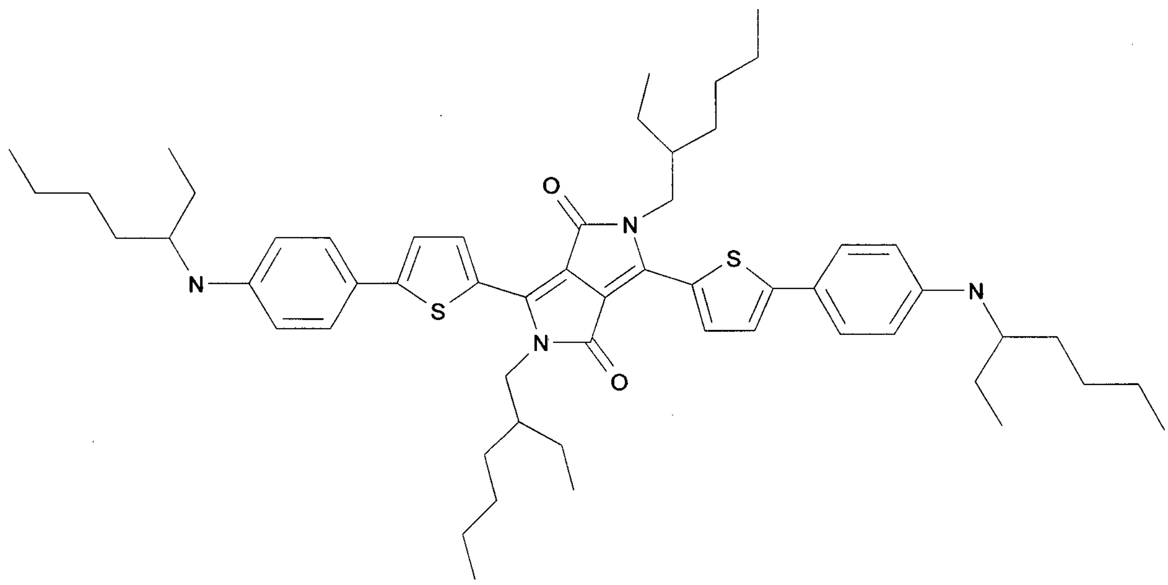 |
| 47 |

(fortgesetzt)

| |
|---|
| 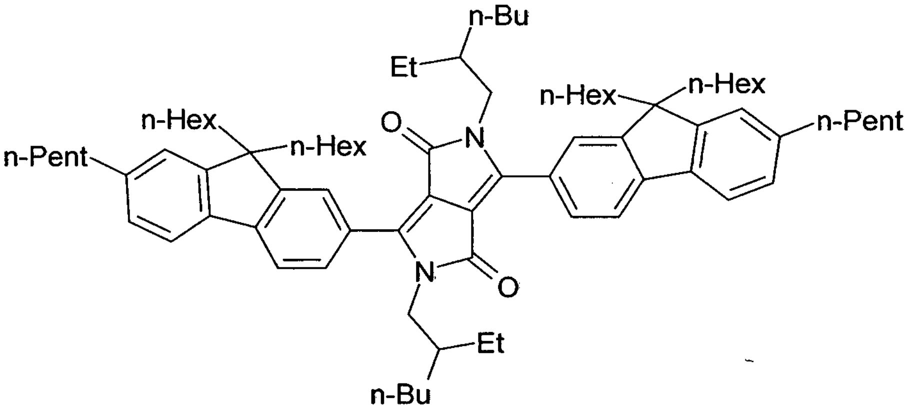 |
| 48 |
| 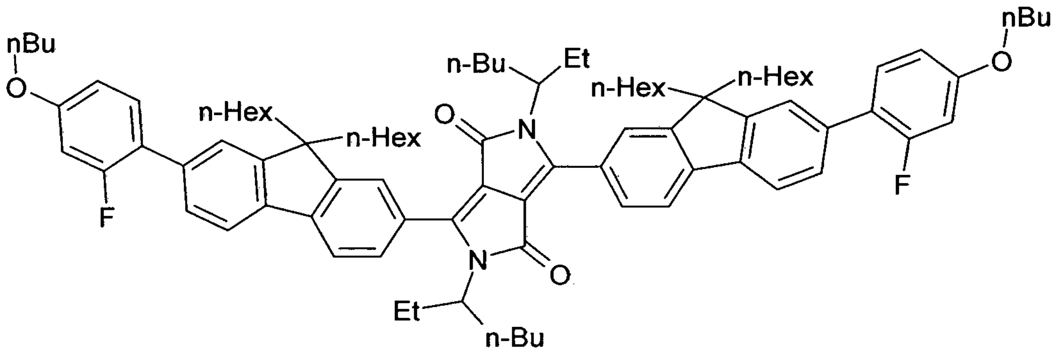 |
| 49 |
| 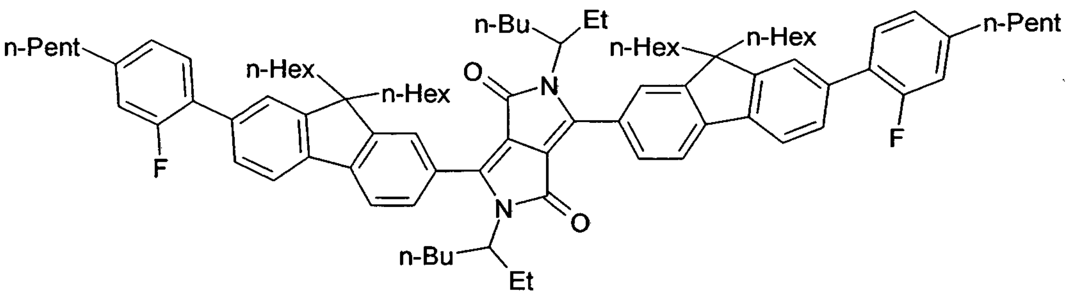 |
| 50 |
| 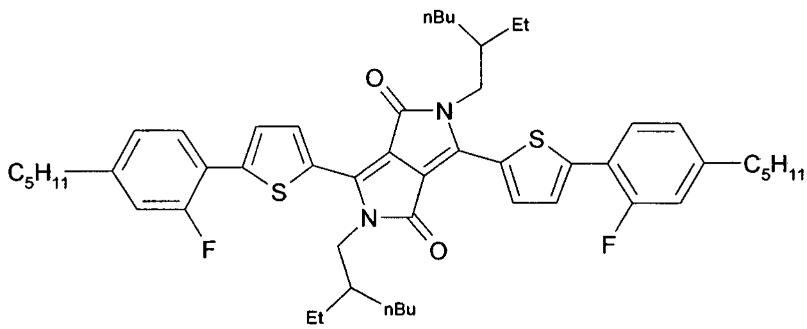 |
| 51 |

(fortgesetzt)

| |
|---|
| 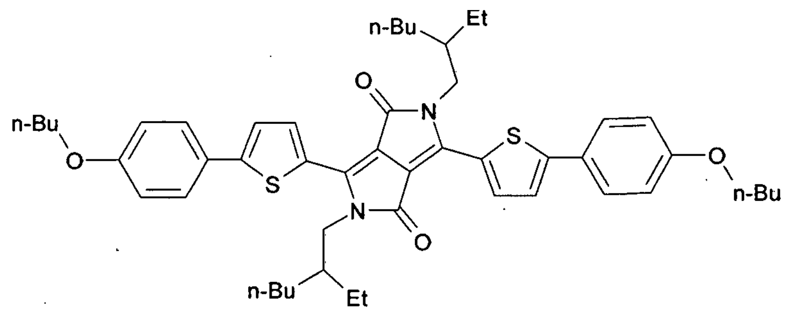 |
| 52 |
| 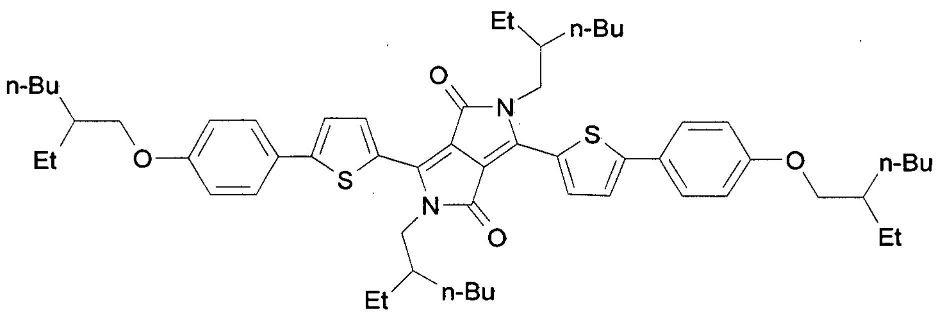 |
| 53 |
| 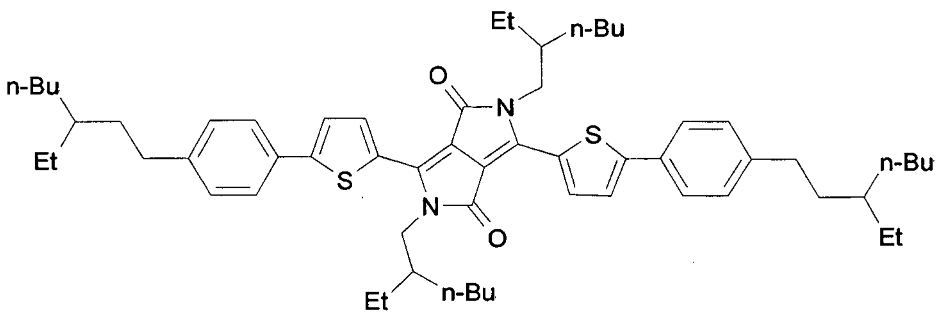 |
| 54 |
| 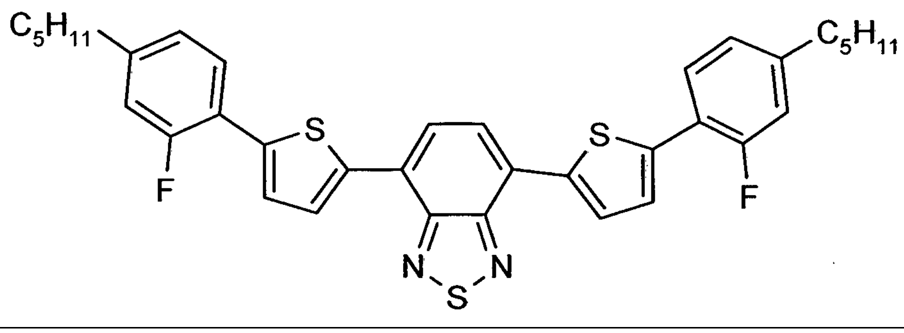 |
| 55 |

(fortgesetzt)

| |
|---|
| 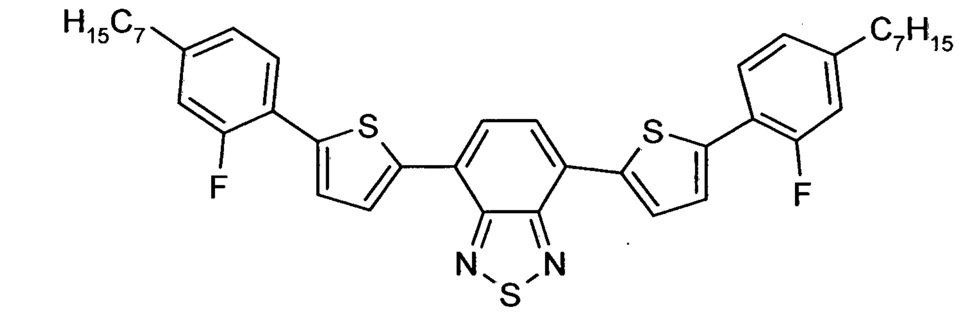 |
| 56 |
| 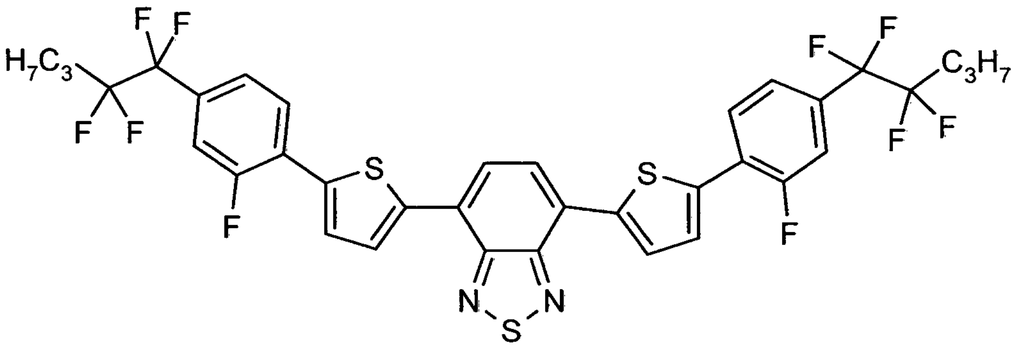 |
| 57 |
| 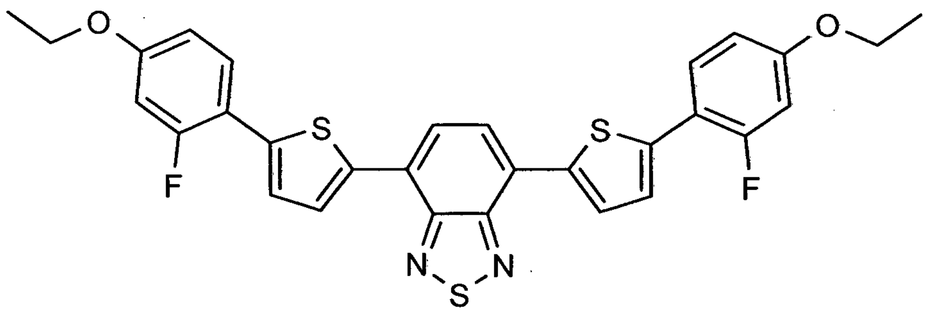 |
| 58 |
| 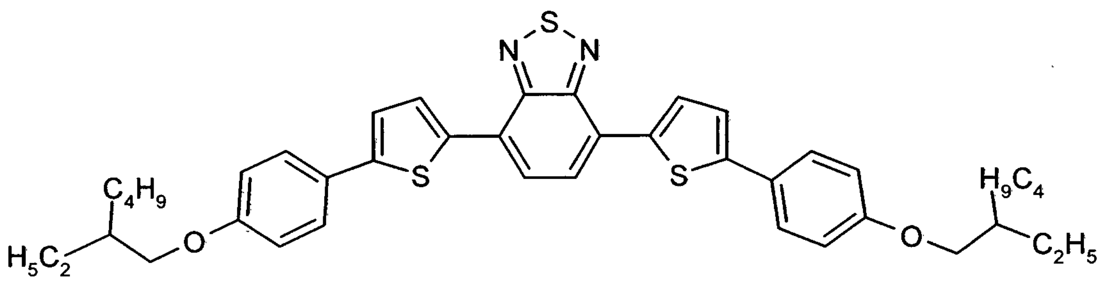 |
| 59 |

(fortgesetzt)

| | |
|---|---|
| 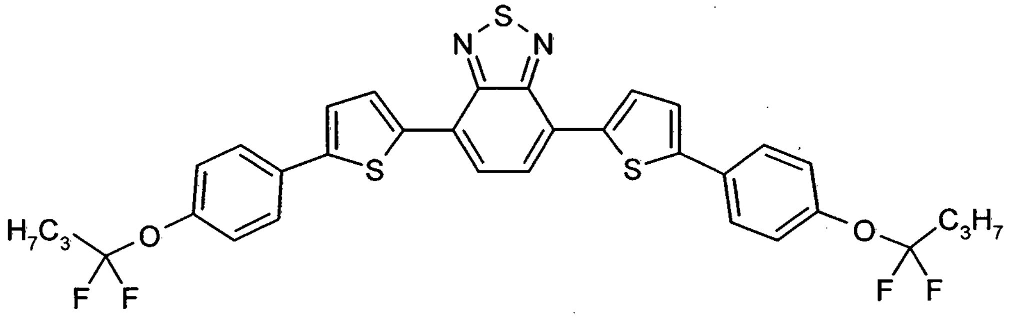 | |
| 60 | |
| 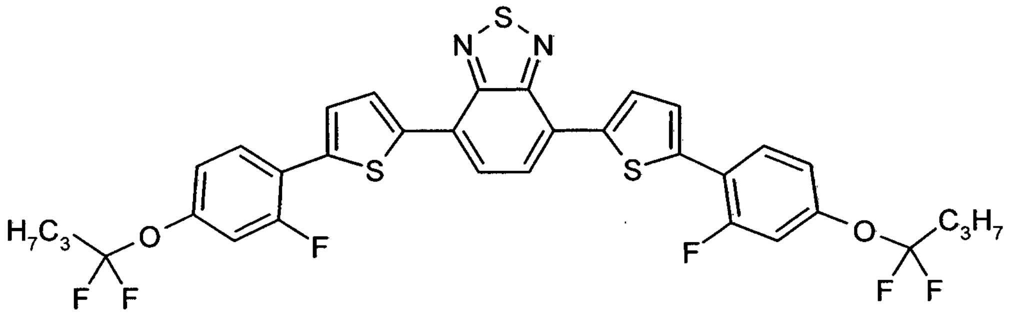 | |
| 61 | |
| 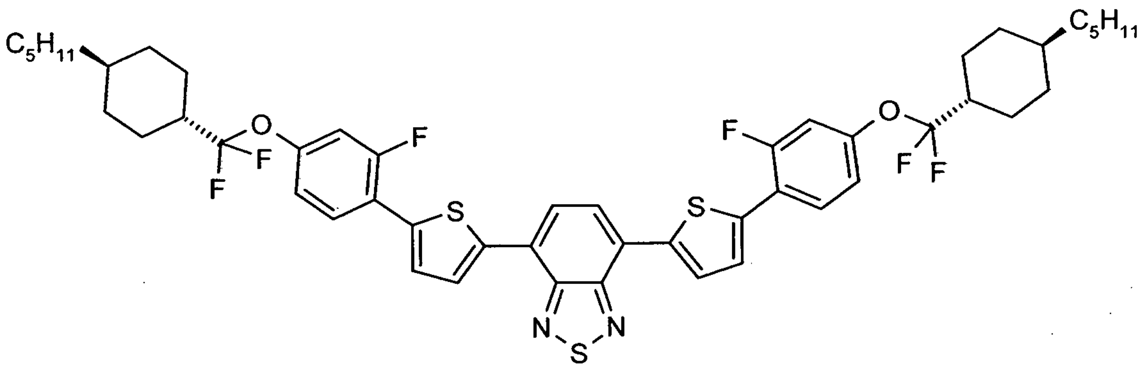 | |
| 62 | |
| 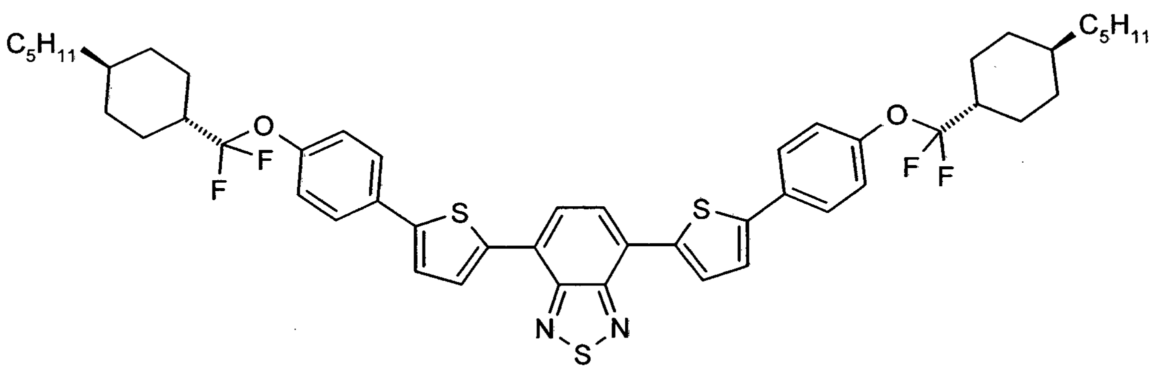 | |
| 63 | |

(fortgesetzt)

| |
|---|
| 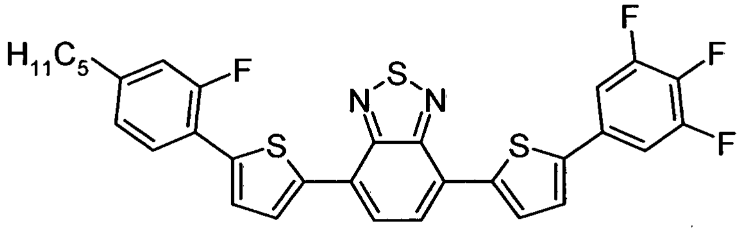 |
| 64 |
| 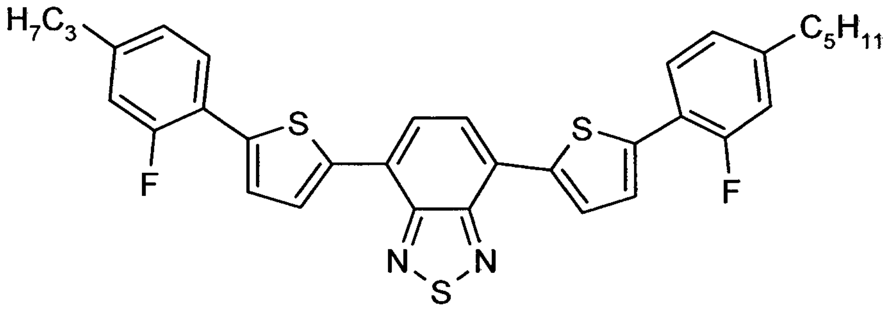 |
| 65 |
| 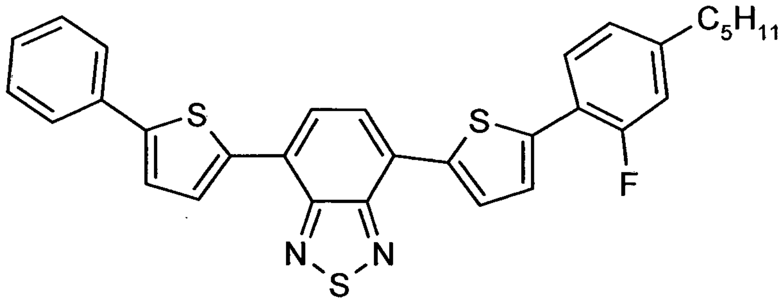 |
| 66 |
| 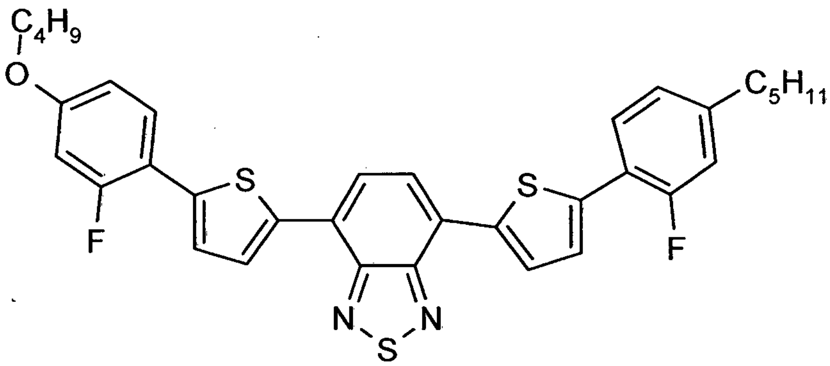 |
| 67 |

(fortgesetzt)

| |
|---|
| 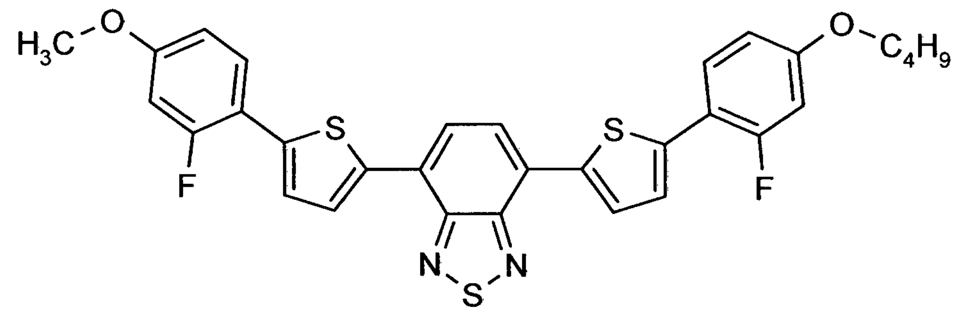 |
| 68 |
| 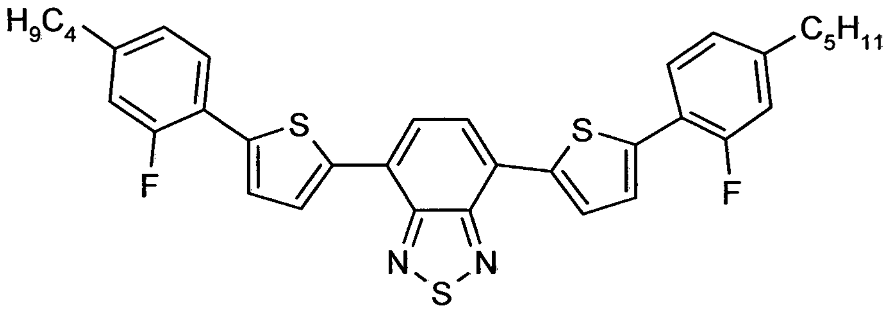 |
| 69 |
| 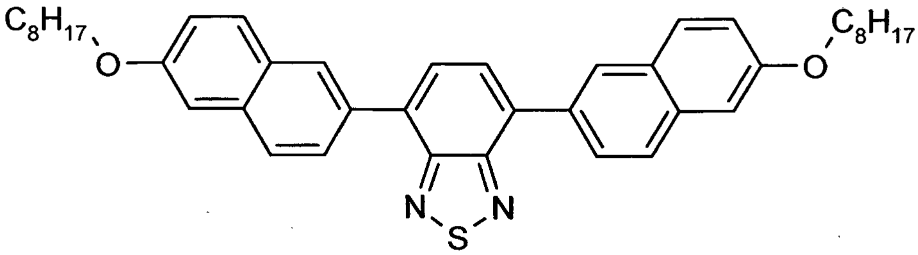 |
| 70 |
| 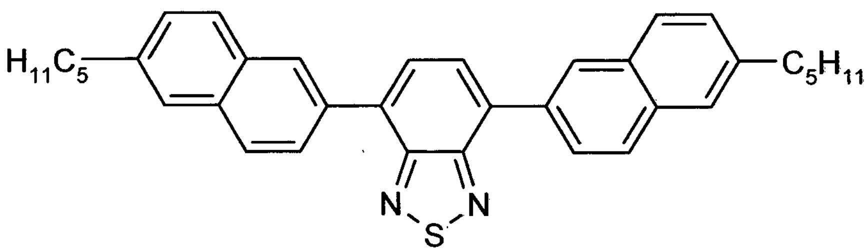 |
| 71 |
| 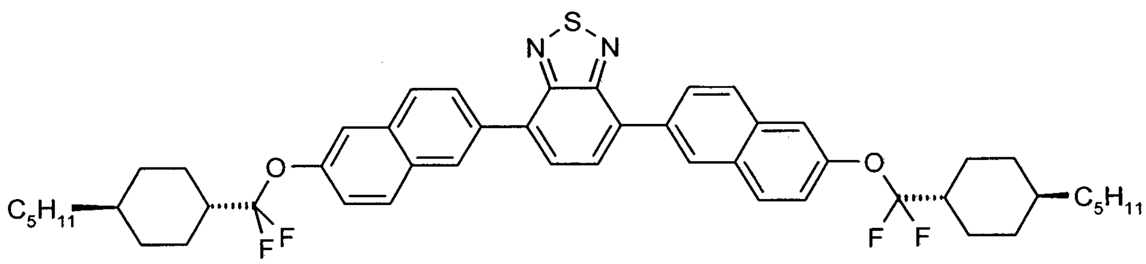 4 |

(fortgesetzt)

| | |
|---|---|
| 72 | |
| 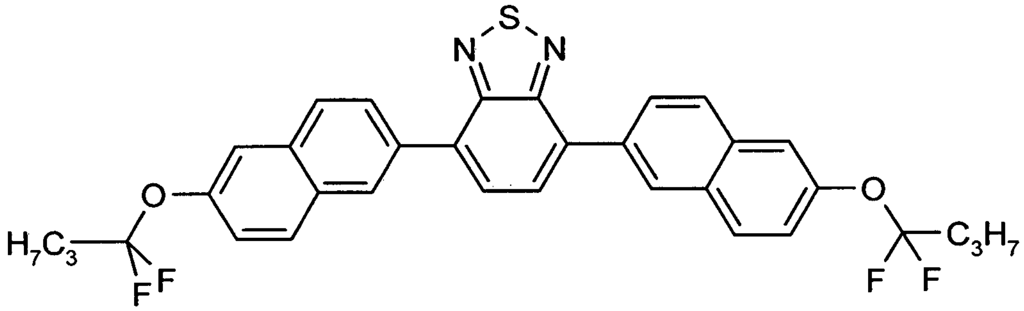 | |
| 73 | |
| 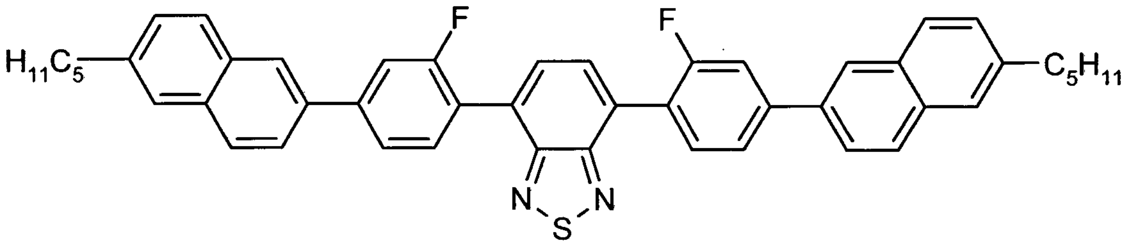 | |
| 74 | |
| 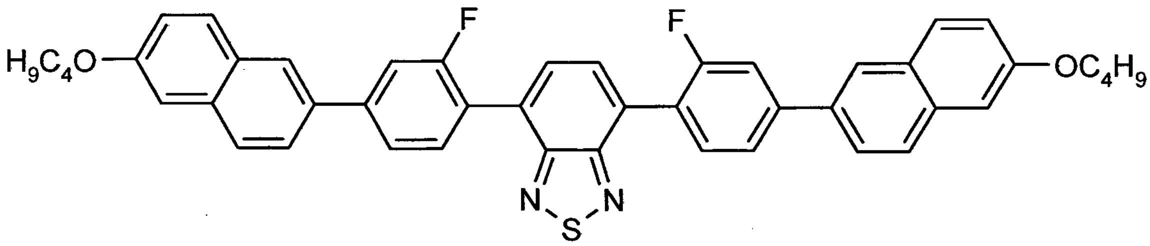 | |
| 75 | |
| 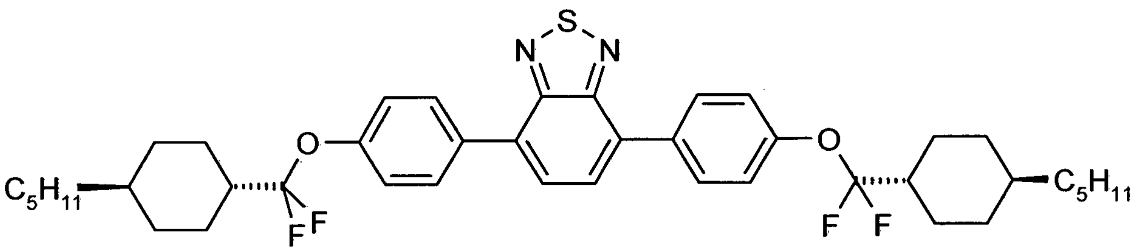 | |
| 76 | |
| 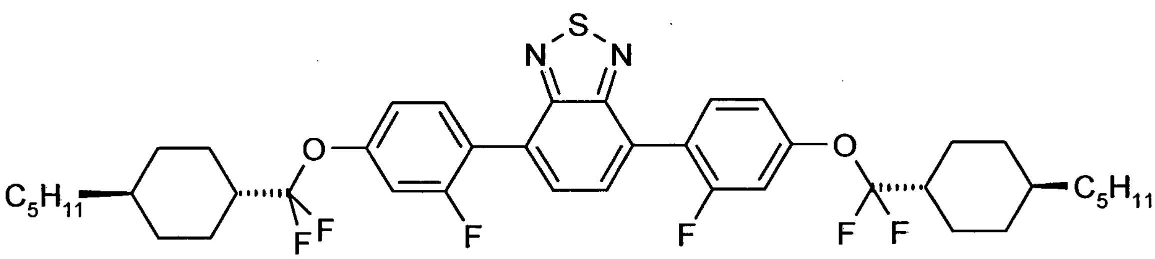 | |

(fortgesetzt)

| |
|---|
| 77 |
| 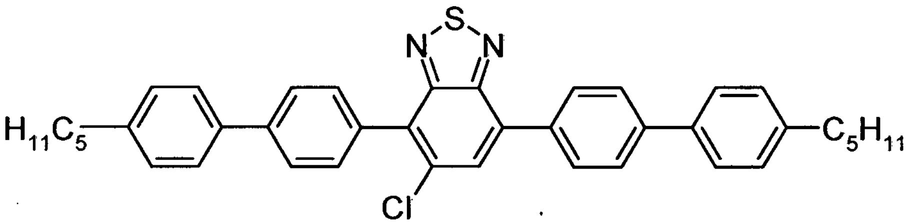 |
| 78 |
| 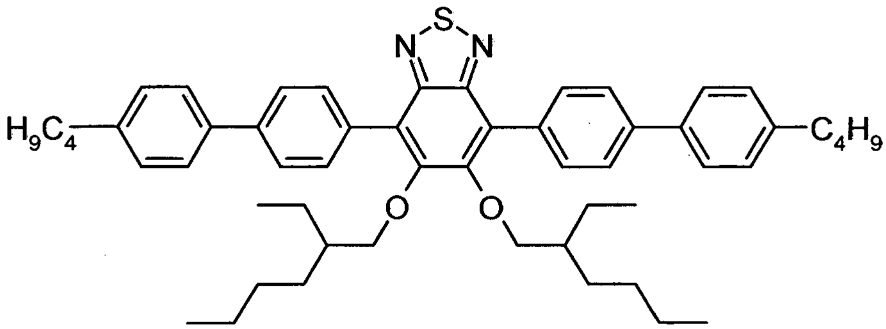 |
| 79 |
| 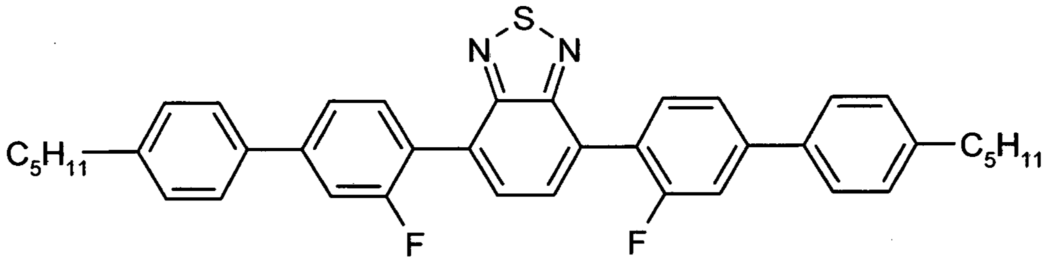 |
| 80 |
| 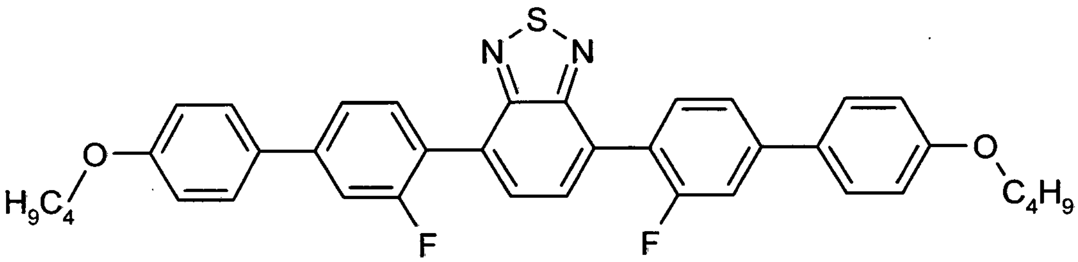 |
| 81 |
| 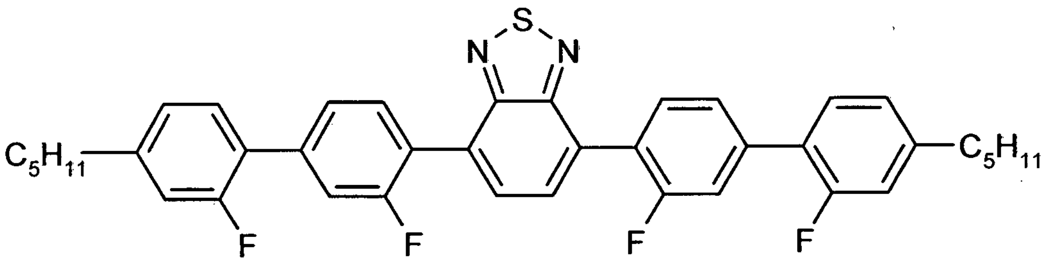 |
| 82 |

(fortgesetzt)

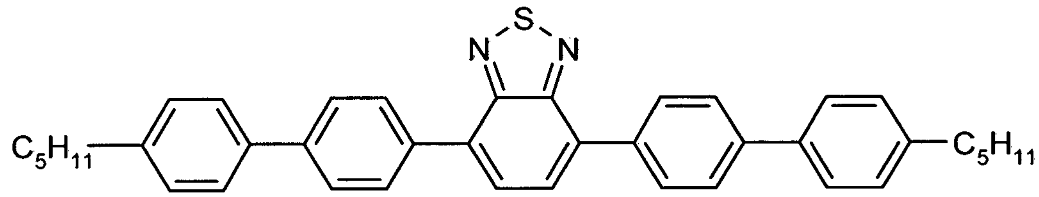

83

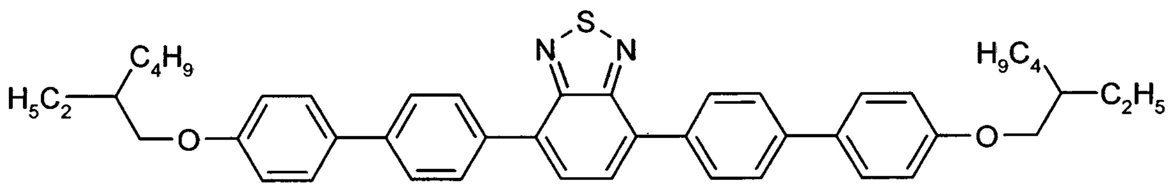

84

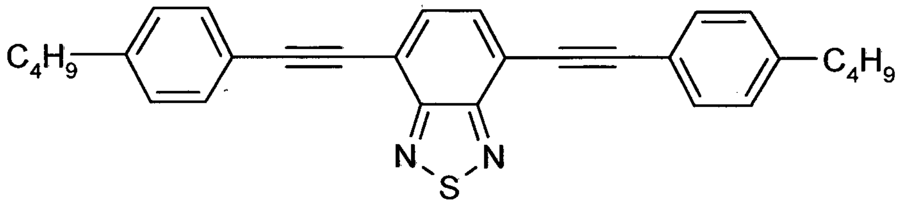

85

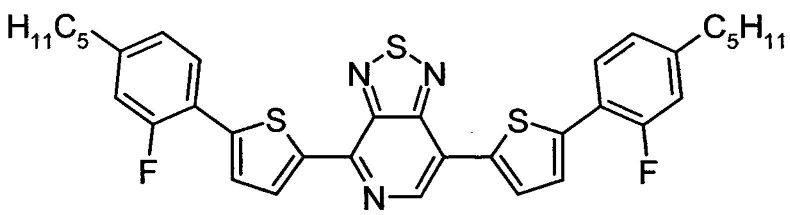

86

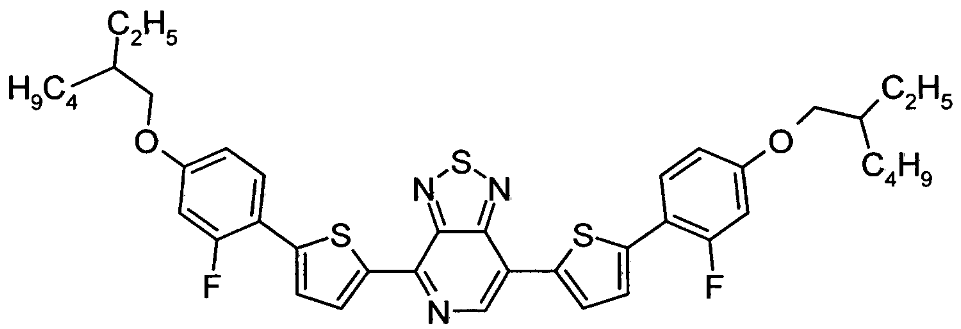

87

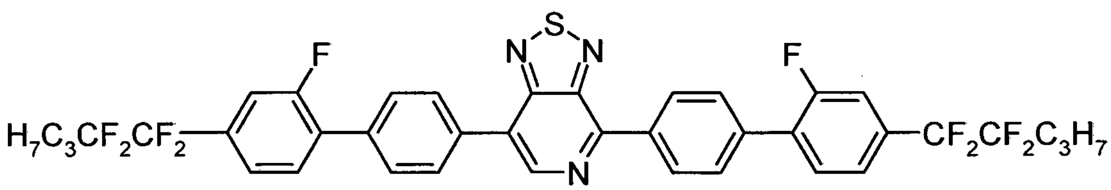

88

(fortgesetzt)

| | |
|---|---|
| | 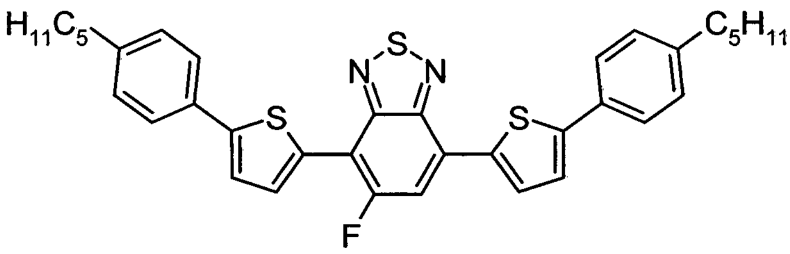 |
| 89 | 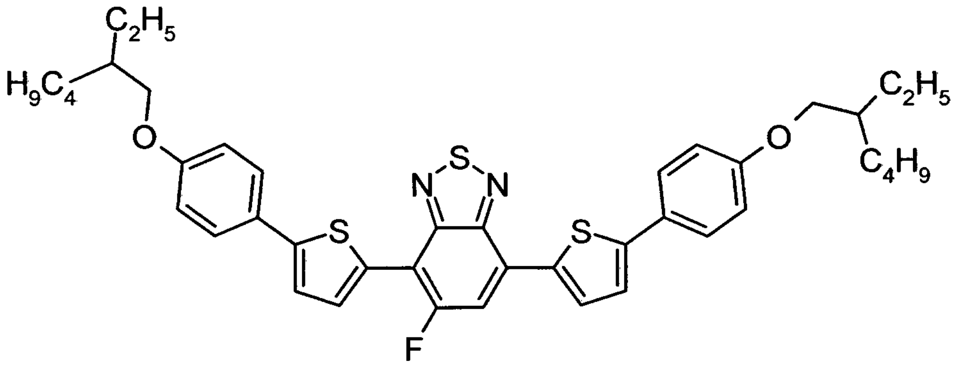 |
| 90 | 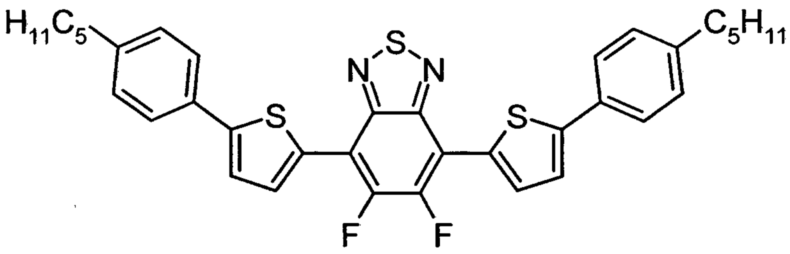 |
| 91 | 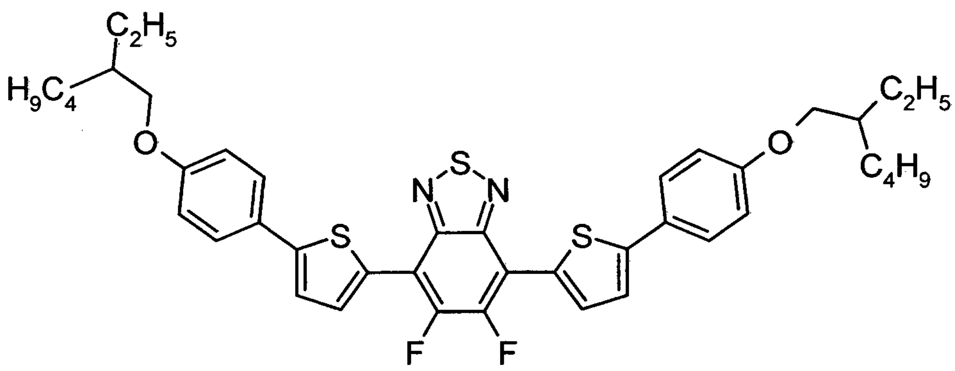 |
| 92 | 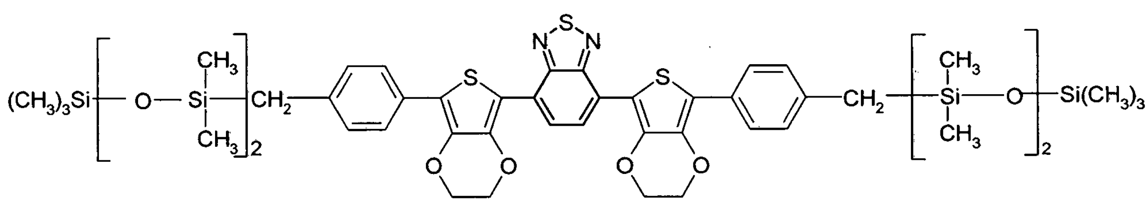 |

(fortgesetzt)

| |
|---|
| 93 |
| 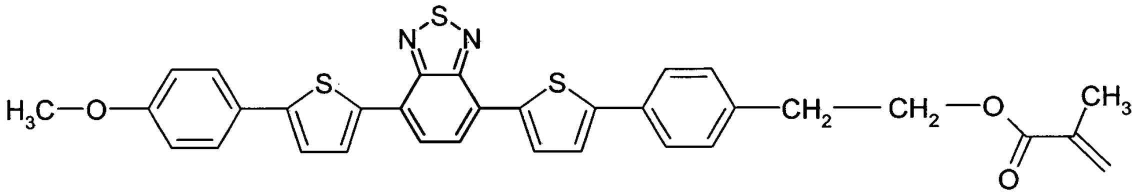 |
| 94 |
| 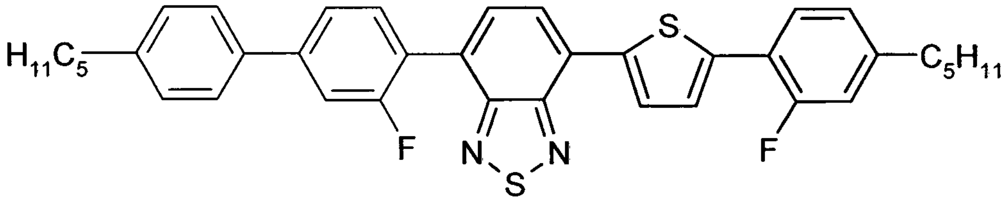 |
| 95 |
| 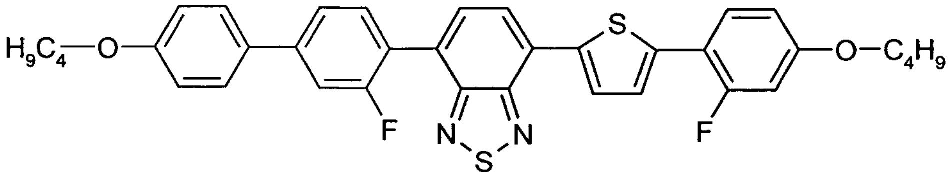 |
| 96 |
| 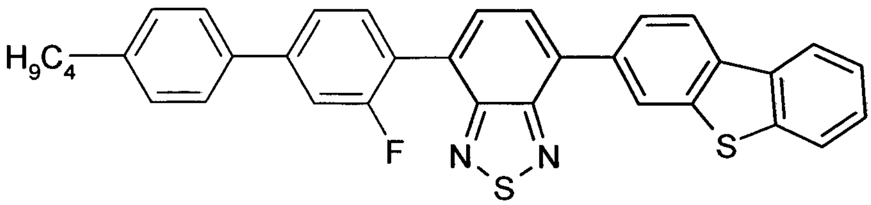 |
| 97 |
| 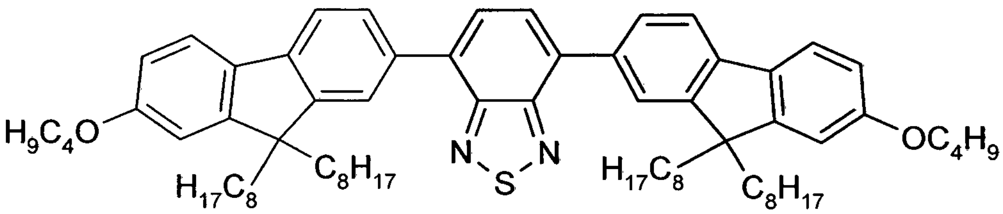 |
| 98 |
| 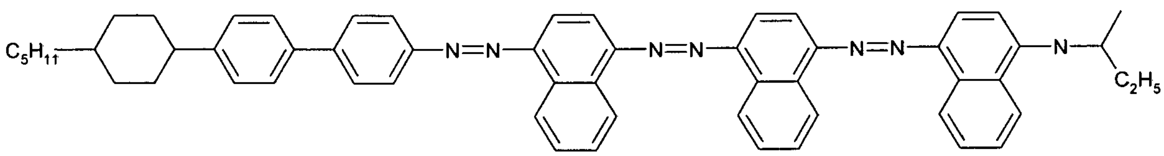 |
| 99 |

(fortgesetzt)

| |
|---|
| 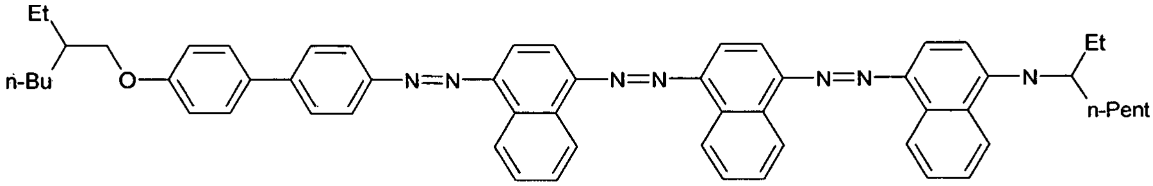 |
| 100 |
| 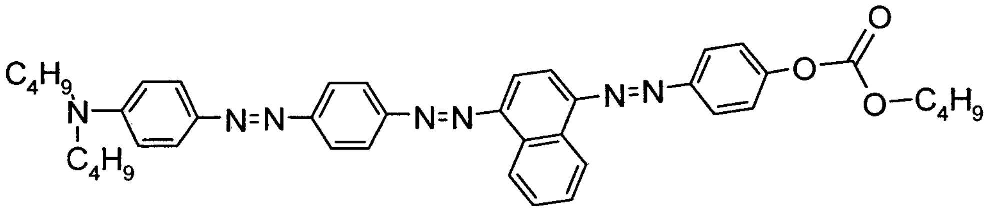 |
| 101 |
| 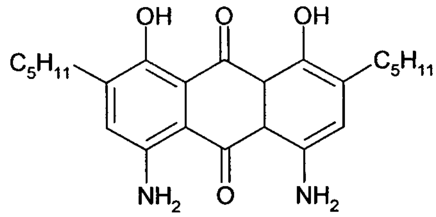 |
| 102 |
| 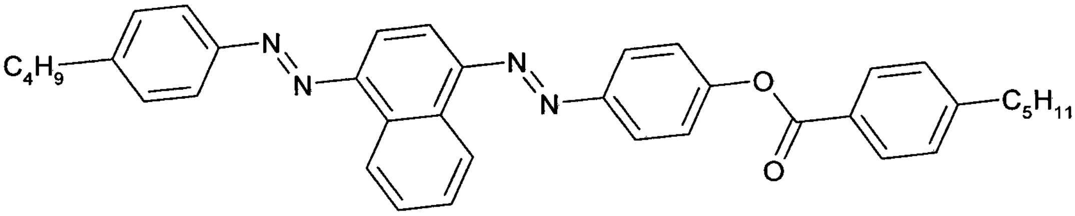 |
| 103 |

Das flüssigkristalline Material kann in einer bestimmten bevorzugten Ausführungsform einen oder mehrere chirale Dotierstoffe enthalten. Bevorzugt liegen in diesem Fall die Moleküle des flüssigkristallinen Materials in der Schicht einer Vorrichtung enthaltend das flüssigkristalline Material gegeneinander verdrillt vor, besonders bevorzugt wie aus dem TN-Modus von Anzeigevorrichtungen bekannt.

Chirale Dotierstoffe werden bevorzugt in einer Gesamtkonzentration von 0.01 Gew.-% bis 3 Gew.-%, besonders bevorzugt von 0.05 Gew.-% bis 1 Gew.-% verwendet. Um hohe Werte für die Verdrillung zu erhalten, kann die Gesamtkonzentration der chiralen Dotierstoffe auch höher als 3 Gew.-% gewählt werden, bevorzugt bis maximal 10 Gew.-%.

Die Anteile dieser Verbindungen und anderer Mindermengenkomponenten werden bei der Angabe der Anteile der Verbindungen und des Farbstoffs F im flüssigkristallinen Material vernachlässigt.

Bevorzugte Dotierstoffe sind die in der folgenden Tabelle abgebildeten Verbindungen:

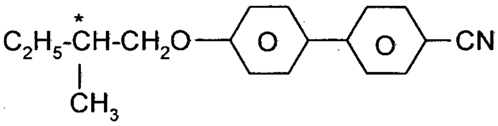

| |
|---|
| |
| 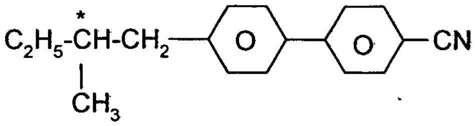 |
| |
| 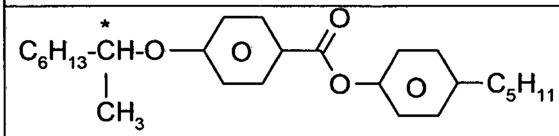 |
| |
| 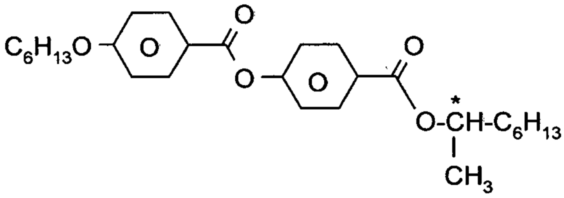 |
| |
| 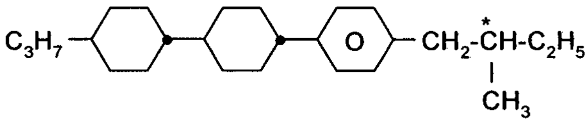 |
| |
| 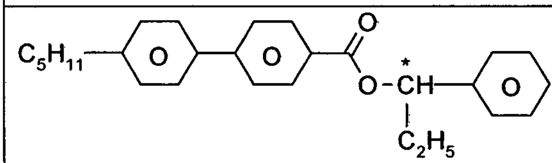 |
| |
| 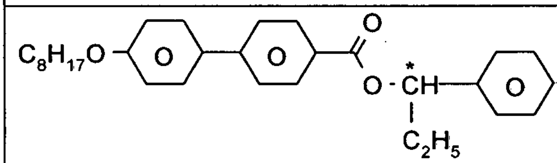 |
| |
| 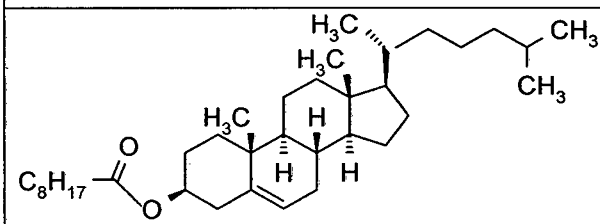 |
| |

| |
|---|
| 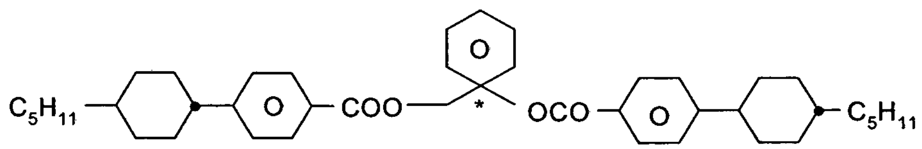 |
| |
| 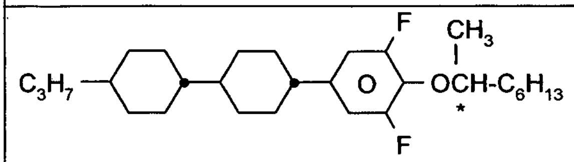 |
| |
| 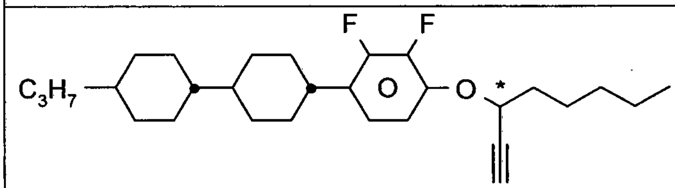 |
| |
| 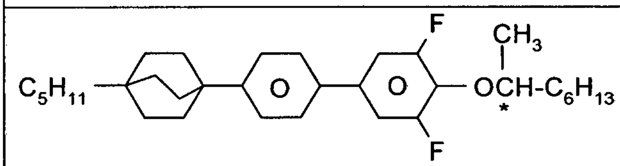 |
| |
| 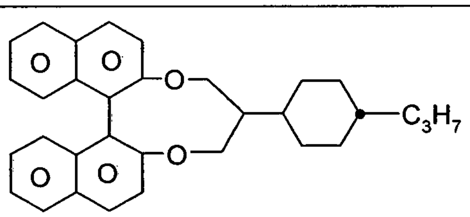 |

Das flüssigkristalline Material enthält weiterhin bevorzugt einen oder mehrere Stabilisatoren. Die Gesamtkonzentration der Stabilisatoren liegt bevorzugt zwischen 0.00001 Gew.-% und 10 Gew.-%, besonders bevorzugt zwischen 0.0001 Gew.-% und 1 Gew.-% der Gesamtmischung.

Bevorzugte Stabilisatoren sind in der folgenden Tabelle gezeigt:

| | |
|---|---|
| 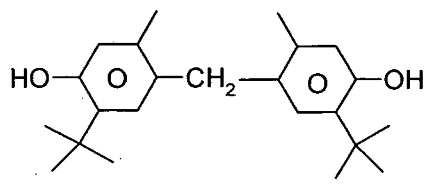 | 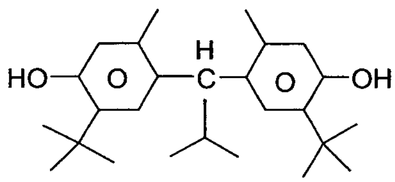 |

| | |
|---|---|
| 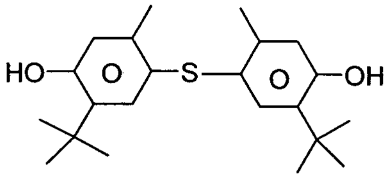 | 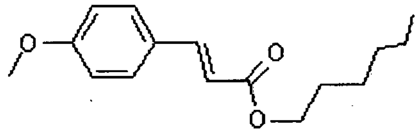 |
| 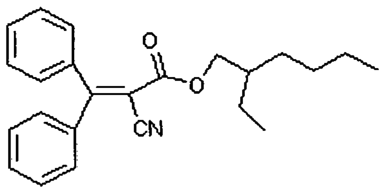 | 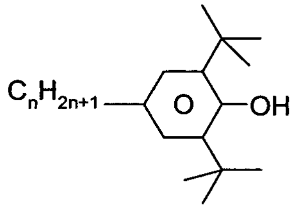 |
| 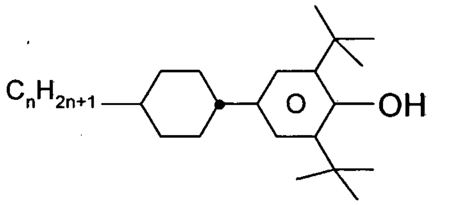 | 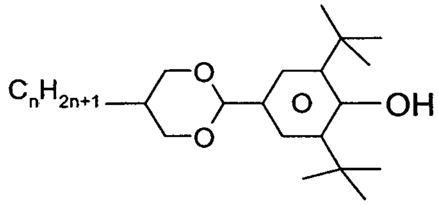 |
| 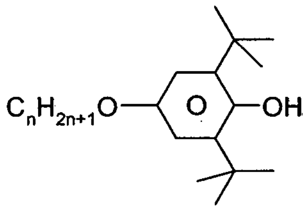 | 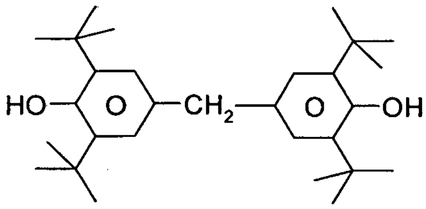 |
| 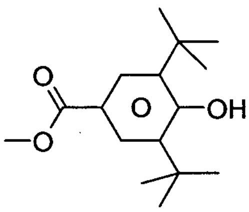 | 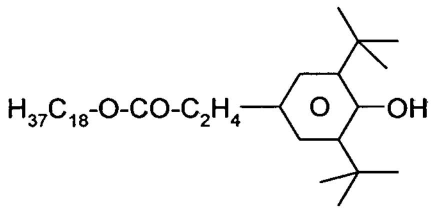 |
| 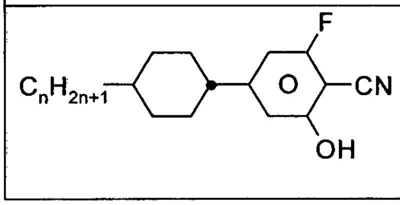 | 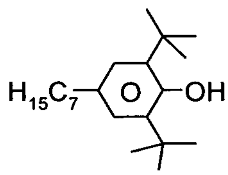 |

| | |
|---|---|
| 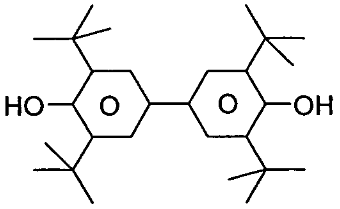 | 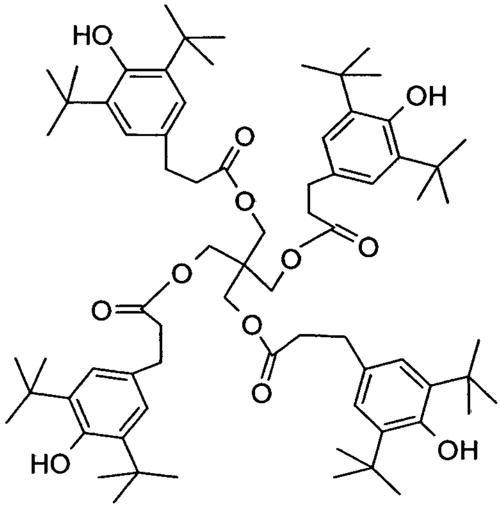 |
| 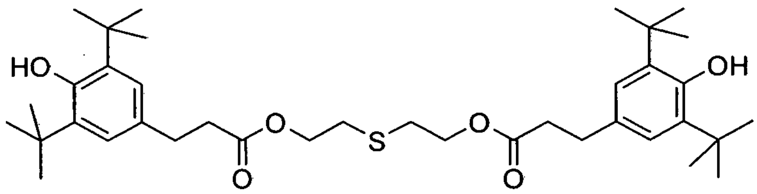 | |
| 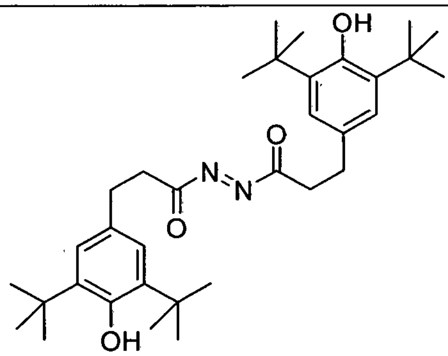 | 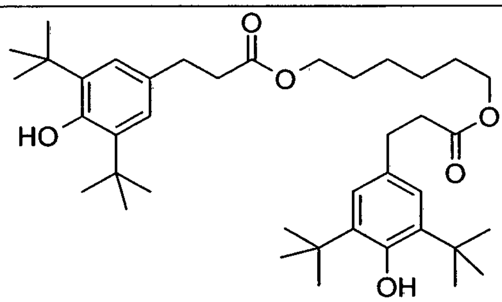 |
| 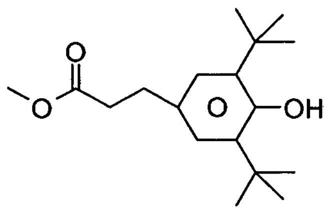 | 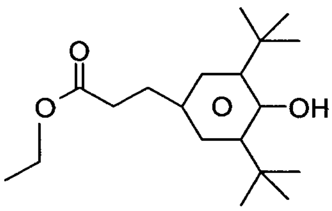 |
| 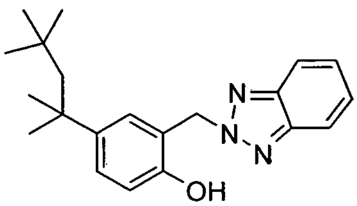 | 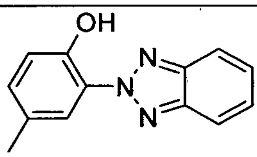 |

| | |
|---|---|
| 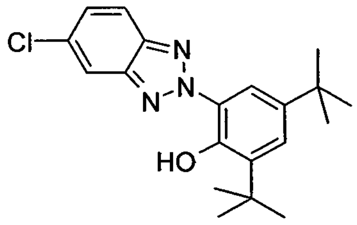 | 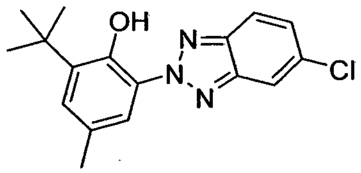 |
| 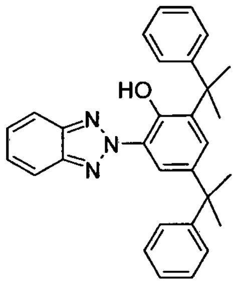 | 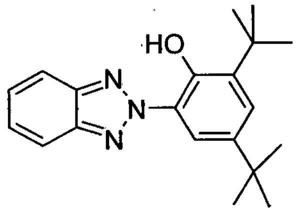 |
| 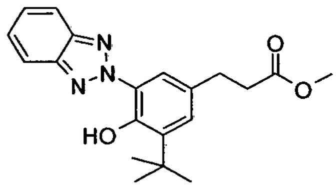 | 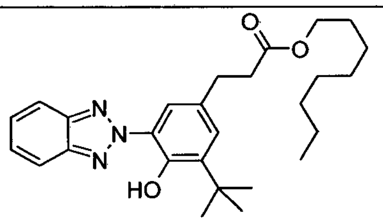 |
| 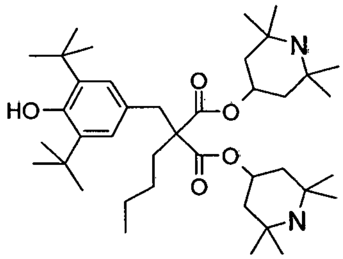 | 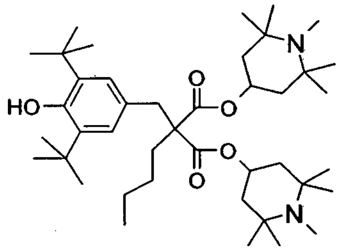 |
| 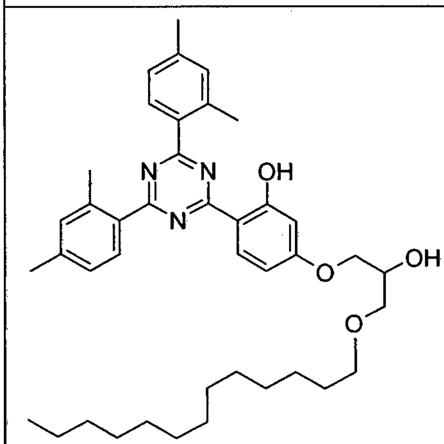 | 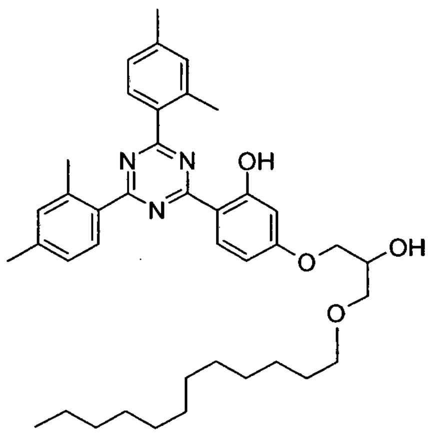 |

| | |
|---|---|
| 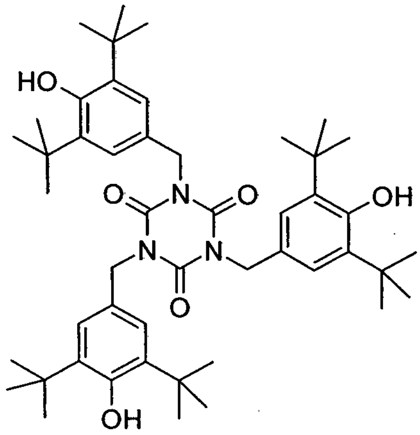 | 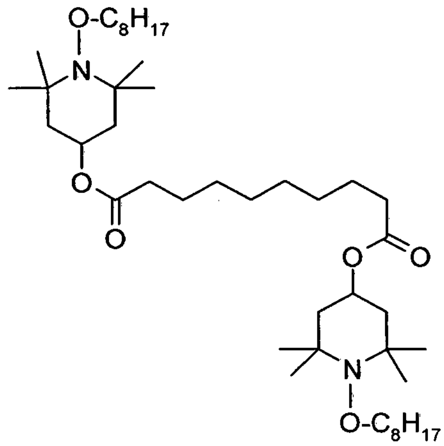 |
| 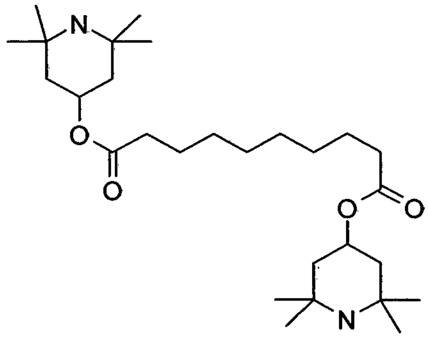 | 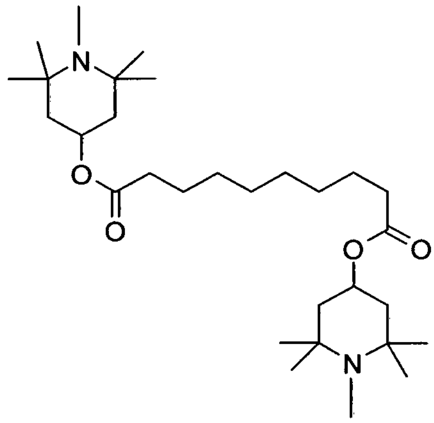 |
| 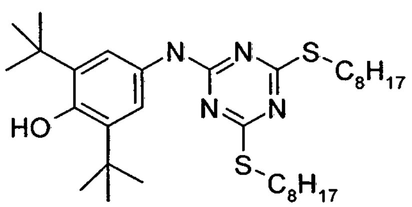 | 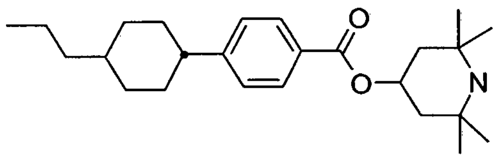 |
| 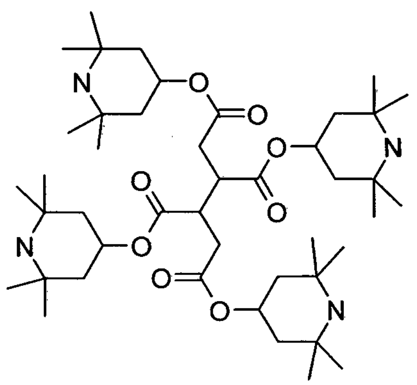 | 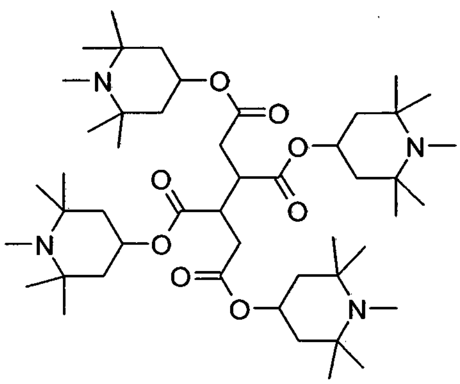 |

| | |
|---|---|
| 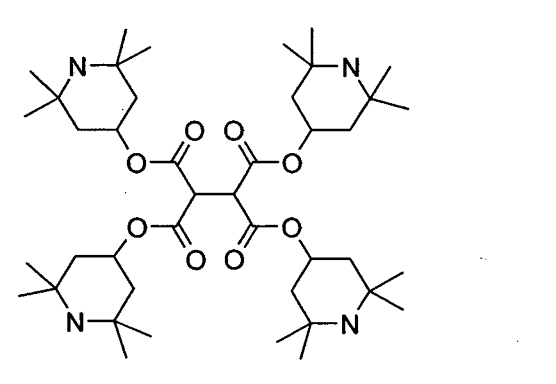 | 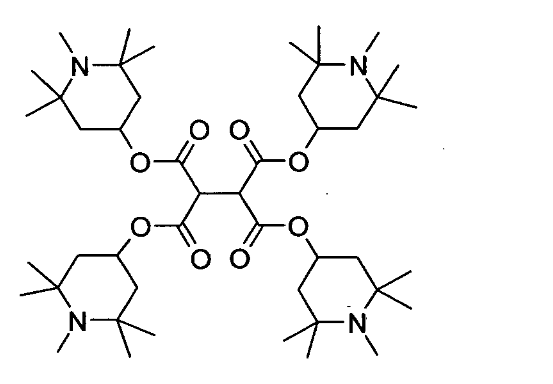 |

Bevorzugt weist das flüssigkristalline Material einen Klärpunkt von höher als 100°C, besonders bevorzugt einen Klärpunkt von höher als 105°C, und ganz besonders bevorzugt einen Klärpunkt von höher als 110°C auf. Bevorzugt stellt der Klärpunkt den Übergang zwischen einem nematischen und einem isotropen Zustand dar. Wie der Klärpunkt bestimmt wird, ist in den Ausführungsbeispielen angegeben.

Bevorzugt ist die dielektrische Anisotropie $\Delta\varepsilon$ des flüssigkristallinen Materials größer als 3, besonders bevorzugt größer als 5 und ganz besonders bevorzugt größer als 8.

Das flüssigkristalline Material, wie oben definiert, kann grundsätzlich in einer beliebigen optischen Schaltvorrichtung verwendet werden. Die optische Schaltvorrichtung kann in Anzeigevorrichtungen oder in schaltbaren Fenstern verwendet werden.

Bevorzugt ist dabei die Verwendung des erfindungsgemäßen flüssigkristallinen Materials in einer Vorrichtung zur homogenen Regulierung des Lichtdurchtritts durch eine Fläche. Die Vorrichtung zur homogenen Regulierung des Lichtdurchtritts durch eine Fläche wird bevorzugt in einem schaltbaren Fenster eingesetzt.

Gegenstand der Erfindung ist somit eine Vorrichtung zur homogenen Regulierung des Lichtdurchtritts durch eine Fläche, enthaltend das erfindungsgemäße flüssigkristalline Material.

Es gelten dabei die bevorzugten Ausführungsformen, die oben im Zusammenhang mit dem erfindungsgemäßen flüssigkristallinen Material angegeben sind, ebenfalls als bevorzugt.

Das flüssigkristalline Material liegt in der Vorrichtung zur homogenen Regulierung des Lichtdurchtritts durch eine Fläche bevorzugt in einer Schicht vor. Diese Schicht ist bevorzugt schaltbar, stellt also eine Schaltschicht dar.

Die erfindungsgemäße Vorrichtung ist bevorzugt zur Regulierung des Lichtdurchtritts in Form von Tageslicht von der Umgebung in einen Raum geeignet. Dabei erfolgt der zu regulierende Licht-Durchtritt von der Umwelt (dem Außenraum) in einen Raum hinein. Der Raum kann dabei ein beliebiger weitgehend von der Umgebung abgeschlossener Raum sein, beispielsweise ein Gebäude, ein Fahrzeug, oder ein Container. Die Vorrichtung kann allgemein für beliebige Räume verwendet werden, besonders wenn diese nur begrenzten Luftaustausch mit der Umgebung aufweisen und lichtdurchlässige Begrenzungsflächen aufweisen, durch die Energie-Eintrag von außen in Form von Lichtenergie stattfinden kann. Besonders relevant ist die Verwendung der Vorrichtung für Räume, welche starker Sonneneinstrahlung durch lichtdurchlässige Flächen, beispielsweise durch Fensterflächen, ausgesetzt sind.

Die erfindungsgemäße Vorrichtung ist bevorzugt in einer Öffnung einer größeren flächigen Struktur angeordnet, wobei die flächige Struktur selbst nicht oder nur geringfügig Lichtdurchtritt zulässt, und wobei die Öffnung relativ gesehen lichtdurchlässiger ist. Bevorzugt ist die flächige Struktur eine Wand oder eine sonstige Begrenzung eines Raums nach außen. Bevorzugt ist die erfindungsgemäße Vorrichtung dadurch gekennzeichnet, dass sie eine Flächenausdehnung von mindestens 0.05 $m^2$ aufweist, bevorzugt mindestens 0.1 $m^2$, besonders bevorzugt mindestens 0.5 $m^2$ und ganz besonders bevorzugt mindestens 0.8 $m^2$.

Die erfindungsgemäße Vorrichtung ist schaltbar. Unter Schaltung wird dabei eine Änderung des Licht-Durchtritts durch die Vorrichtung verstanden. Die erfindungsgemäße Vorrichtung ist bevorzugt elektrisch schaltbar.

Ist die Vorrichtung elektrisch schaltbar, umfasst sie bevorzugt zwei oder mehr Elektroden, die zu beiden Seiten der Schicht enthaltend das flüssigkristalline Material angebracht sind. Die Elektroden bestehen bevorzugt aus ITO oder aus einer dünnen, bevorzugt transparenten Metall- und/oder Metalloxidschicht, beispielsweise aus Silber oder FTO (Fluordotiertes Zinnoxid) oder einem alternativen, dem Fachmann für diese Verwendung bekannten Material. Die ITO-Elektroden können mit einer Passivierungsschicht, beispielsweise aus $SiO_2$, ausgestattet sein. Die Elektroden sind bevorzugt mit elektrischen Anschlüssen versehen. Die Spannung wird bevorzugt durch eine Batterie, einen Akkumulator, oder durch externe Stromversorgung bereitgestellt.

Der Schaltvorgang erfolgt im Fall von elektrischer Schaltung durch eine Ausrichtung der Moleküle des flüssigkristallinen Materials durch das Anlegen von Spannung.

In einer bevorzugten Ausführungsform wird dabei die Vorrichtung durch Anlegen einer Spannung von einem Zustand mit hoher Absorption, d. h. geringer Lichtdurchlässigkeit, der ohne Spannung vorliegt, in einen Zustand mit geringerer Absorption, d. h. höherer Lichtdurchlässigkeit, überführt. Bevorzugt ist das flüssigkristalline Material in der Schicht in der Vorrichtung in beiden Zuständen nematisch. Der spannungslose Zustand ist bevorzugt dadurch gekennzeichnet, dass die Moleküle des flüssigkristallinen Materials, und damit die Moleküle der Farbstoffverbindung F, parallel zur Ebene der Schaltschicht ausgerichtet vorliegen. Dies wird bevorzugt durch eine entsprechend gewählte Orientierungsschicht erreicht. Der Zustand unter Spannung ist bevorzugt dadurch gekennzeichnet, dass die Moleküle des flüssigkristallinen Materials, und damit die Moleküle der Farbstoffverbindung F, senkrecht zur Ebene der Schaltschicht vorliegen.

Gemäß einer bevorzugten Ausführungsform der Erfindung kann die Vorrichtung ohne externe Stromversorgung betrieben werden, indem die nötige Energie durch eine Solarzelle oder eine sonstige Vorrichtung zur Umwandlung von Licht und/oder Wärmeenergie in elektrische Energie bereitgestellt wird, die mit der Vorrichtung verbunden ist. Die Bereitstellung der Energie durch die Solarzelle kann direkt oder indirekt, d. h. über eine dazwischengeschaltete Batterie oder Akkumulator oder sonstige Einheit zur Speicherung von Energie, erfolgen. Bevorzugt ist die Solarzelle außen an der Vorrichtung angebracht oder sie ist innerer Bestandteil der Vorrichtung, wie beispielsweise in WO 2009/141295 offenbart.

Die erfindungsgemäße Vorrichtung weist bevorzugt die folgende Schichtenabfolge auf, wobei zusätzlich weitere Schichten vorhanden sein können. Bevorzugt grenzen die im Folgenden angegebenen Schichten in der Vorrichtung direkt aneinander.

- Substratschicht, bevorzugt aus Glas oder Polymer
- elektrisch leitfähige transparente Schicht, bevorzugt aus ITO
- Orientierungsschicht
- Schaltschicht, enthaltend das flüssigkristalline Material
- Orientierungsschicht
- elektrisch leitfähige transparente Schicht, bevorzugt aus ITO
- Substratschicht, bevorzugt aus Glas oder Polymer.

Die bevorzugten Ausführungsformen der einzelnen Schichten werden im Folgenden dargestellt.

Bevorzugt umfasst die erfindungsgemäße Vorrichtung eine oder mehrere, besonders bevorzugt zwei Orientierungsschichten. Die Orientierungsschichten liegen bevorzugt direkt angrenzend an die beiden Seiten der Schicht enthaltend das flüssigkristalline Material vor.

Als Orientierungsschichten der erfindungsgemäßen Vorrichtung können beliebige dem Fachmann hierzu bekannte Schichten verwendet werden. Bevorzugt sind Polyimid-Schichten, besonders bevorzugt Schichten aus geriebenem Polyimid. Auf bestimmte, dem Fachmann bekannte Art geriebenes Polyimid führt zu einer Ausrichtung der Moleküle des flüssigkristallinen Materials in Reiberichtung, wenn die Moleküle parallel zur Orientierungsschicht vorliegen (planare Ausrichtung). Dabei ist es bevorzugt, dass die Moleküle des flüssigkristallinen Materials nicht völlig planar auf der Orientierungsschicht vorliegen, sondern einen leichten Aufstellwinkel aufweisen (pretilt). Zum Erreichen von vertikaler Ausrichtung der Verbindungen des flüssigkristallinen Materials zur Oberfläche der Orientierungsschicht (homeotrope Ausrichtung) wird bevorzugt auf bestimmte Art behandeltes Polyimid als Material für die Orientierungsschicht eingesetzt (Polyimid für sehr hohe Pretiltwinkel). Weiterhin können Polymere, die durch einen Belichtungsvorgang mit polarisiertem Licht erhalten wurden, als Orientierungsschicht zum Erreichen einer Ausrichtung der Verbindungen des flüssigkristallinen Materials gemäß einer Orientierungsachse verwendet werden (photoalignment).

Weiterhin bevorzugt ist in der erfindungsgemäßen Vorrichtung die Schicht enthaltend das flüssigkristalline Material zwischen zwei Substratschichten angeordnet bzw. von diesen eingeschlossen. Die Substratschichten können beispielsweise aus Glas oder einem Polymer, bevorzugt einem lichtdurchlässigen Polymer, bestehen.

Bevorzugt ist die Vorrichtung dadurch gekennzeichnet, dass sie keinen Polarisator auf Polymerbasis, besonders bevorzugt keinen in fester Materiephase vorliegenden Polarisator und ganz besonders bevorzugt überhaupt keinen Polarisator umfasst.

Die Vorrichtung kann jedoch gemäß einer alternativen Ausführungsform auch einen oder mehrere Polarisatoren aufweisen. Bevorzugt sind die Polarisatoren in diesem Fall Linearpolarisatoren.

In der erfindungsgemäßen Vorrichtung können sowohl absorptive als auch reflektive Polarisatoren eingesetzt werden. Bevorzugt werden Polarisatoren verwendet, die als dünne optische Filme vorliegen. Beispiele für reflektive Polarisatoren, die in der erfindungsgemäßen Vorrichtung verwendet werden können, sind DRPF- (diffusive reflective polariser film, 3M), DBEF- (dual brightness enhanced film, 3M), DBR- (layered-polymer distributed Bragg reflectors, wie in US 7,038,745 und US 6,099,758 beschrieben) und APF-Filme (advanced polariser film, 3M, vgl. Technical Digest SID 2006, 45.1, US 2011/0043732 und US 7023602). Weiterhin können Polarisatoren basierend auf Drahtgittern (WGP, wire-gridpolarisers), welche Infrarotlicht reflektieren, eingesetzt werden. Beispiele für absorptive Polarisatoren, welche

in den erfindungsgemäßen Vorrichtungen eingesetzt werden können, sind der Itos XP38-Polarisatorfilm und der Nitto Denko GU-1220DUN-Polarisatorfilm.

Weiterhin bevorzugt enthält erfindungsgemäße Vorrichtung ein Lichtleitsystem, das Licht zu einer Solarzelle oder einer sonstigen Vorrichtung zur Umwandlung von Licht und/oder Wärmeenergie in elektrische Energie leitet, bevorzugt wie in WO 2009/141295 beschrieben.

In einer bevorzugten Ausführungsform ist die erfindungsgemäße Vorrichtung Bestandteil eines in seiner Lichtdurchlässigkeit schaltbaren Fensters, besonders bevorzugt eines Fensters enthaltend mindestens eine Glasfläche, ganz besonders bevorzugt eines Fensters, welches Mehrscheiben-Isolierglas enthält.

Unter Fenster wird dabei insbesondere eine Struktur in einem Gebäude verstanden, welche einen Rahmen und mindestens eine von diesem Rahmen umfasste Glasscheibe enthält. Bevorzugt enthält sie einen wärmeisolierenden Rahmen und zwei oder mehr Glasscheiben (Mehrscheiben-Isolierglas).

Gemäß einer bevorzugten Ausführungsform ist die erfindungsgemäße Vorrichtung direkt auf einer Glasfläche eines Fensters aufgebracht, besonders bevorzugt im Zwischenraum zwischen zwei Glasscheiben von Mehrscheiben-Isolierg las.

Ein in seiner Lichtdurchlässigkeit schaltbares Fenster, enthaltend eine erfindungsgemäße Vorrichtung, bevorzugt mit den oben angegebenen bevorzugten Merkmalen, ist weiterer Gegenstand der Erfindung.

## Ausführungsbeispiele

A) Allgemeine Verfahren

Der Anisotropiegrad R wird ermittelt aus dem Wert für den Extinktionskoeffizienten E(p) (Extinktionskoeffizient der Mischung bei paralleler Ausrichtung der Moleküle zur Polarisationsrichtung des Lichts) und dem Wert für den Extinktionskoeffizienten der Mischung E(s) (Extinktionskoeffizient der Mischung bei senkrechter Ausrichtung der Moleküle zur Polarisationsrichtung des Lichts), jeweils bei der Wellenlänge des Maximums der Absorptionsbande des betreffenden Farbstoffs. Hat der Farbstoff mehrere Absorptionsbanden, so wird die intensivste Absorptionsbande im VIS- oder NIR-Bereich ausgewählt. Die Ausrichtung der Moleküle der Mischung wird durch eine Orientierungsschicht erreicht, wie sie dem Fachmann auf dem Gebiet der LC-Displaytechnik bekannt ist. Zur Eliminierung von Einflüssen durch flüssigkristallines Medium, sonstigen Absorptionen und/oder Reflexionen wird jeweils gegen eine identisch vorliegende Mischung, die keinen Farbstoff enthält, gemessen und der erhaltene Wert subtrahiert.

Die Messung erfolgt mit linear polarisiertem Licht, dessen Schwingungsrichtung entweder parallel zur Orientierungsrichtung ist (Bestimmung von E(p)) oder senkrecht zur Orientierungsrichtung ist (Bestimmung von E(s)). Dies kann durch einen Linearpolarisator erreicht werden, wobei der Polarisator gegen die Vorrichtung gedreht wird, um die beiden unterschiedlichen Schwingungsrichtungen zu realisieren. Die Messung von E(p) und E(s) erfolgt also über die Drehung der Schwingungsrichtung des eingestrahlten polarisierten Lichts.

Der Anisotropiegrad R wird aus den erhaltenen Werten für E(s) und E(p) nach der Formel

$$R=[E(p)-E(s)] / [E(p) + 2*E(s)]$$

berechnet, wie unter anderem in "Polarized Light in Optics and Spectroscopy", D. S. Kliger et al., Academic Press, 1990, angegeben.

Die chemischen Strukturen der einzelnen Bestandteile der Mischungen werdendurch Abkürzungen wiedergegeben (Akronyme). Diese Abkürzungen sind in WO 2012/052100 explizit vorgestellt und erklärt (S. 63 - 89), so dass zur Erläuterung auf die genannte Anmeldung verwiesen wird.

Für die Mischungen sind der Klärpunkt in °C, die optische Anisotropie $\Delta n$ und die dielektrische Anisotropie $\Delta\varepsilon$ angegeben. Die physikalischen Eigenschaften werden nach "Merck Liquid Crystals, Physical Properties of Liquid Crystals", Status Nov. 1997, Merck KGaA, Deutschland bestimmt und gelten für eine Temperatur von 20°C. Der Wert von $\Delta n$ wird bei 589 nm bestimmt und der Wert von $\Delta\varepsilon$ wird bei 1 kHz bestimmt.

B) Zusammensetzung der Hostmischungen (flüssigkristallines Material ohne Farbstoff)

| | H-1 | | H-2 | |
|---|---|---|---|---|
| Klärpunkt | 109.5 °C | | 124°C | |
| Dielektrische Anisotropie Δε | 9.0 | | 12.4 | |
| Optische Anisotropie Δn | 0.0986 | | 0.1695 | |
| Zusammensetzung | Verbindung | % | Verbindung | % |
| | CCGU-3-F | 6 | CPU-3-F | 11 |
| | CCQU-3-F | 12 | CPU-5-F | 11 |
| | CCQU-5-F | 10 | CGU-2-F | 7 |
| | CCU-3-F | 10 | CGU-3-F | 8 |
| | CGPC-3-3 | 6 | PGU-2-F | 9 |
| | CP-3-O1 | 10 | PGU-3-F | 9 |
| | CCZU-3-F | 15 | PGU-5-F | 7 |
| | CCZU-5-F | 1.5 | CCGU-3-F | 8 |
| | PGUQU-3-F | 2.5 | CCP-V-1 | 6 |
| | CPGU-3-OT | 4 | CPPC-3-3 | 3 |
| | CPG-3-F | 4 | CGPC-3-3 | 5 |

| | | | | |
|---|---|---|---|---|
| | CPP-3-2 | 5 | CGPC-5-3 | 5 |
| | CC-3-4 | 4 | CGPC-5-5 | 5 |
| | CC-3-5 | 5 | PGIGI-3-F | 6 |
| | CC-3-O1 | 5 | | |

| | H-3 | | H-4 | |
|---|---|---|---|---|
| Klärpunkt | 108.5 °C | | 114.3 °C | |
| Dielektrische Anisotropie Δε | 13.4 | | 11.2 | |
| Optische Anisotropie Δn | 0.1082 | | 0.0861 | |
| Zusammensetzung | Verbindung | % | Verbindung | % |
| | CC-3-O1 | 8 | CC-3-V1 | 10 |
| | CCP-3-1 | 4 | PGUQU-3-F | 4 |
| | CCP-3-3 | 7 | CCGU-3-F | 5.5 |
| | CP-3-O1 | 8 | CCG-3-OT | 9 |
| | CCP-3-OT | 9 | CPU-3-F | 11 |
| | CCP-5-OT | 5 | CPU-5-F | 4 |
| | CPU-3-F | 10 | CCQU-3-F | 10 |
| | CCQU-3-F | 20 | CCQU-5-F | 7.5 |
| | CCGU-3-F | 2.5 | CCZU-2-F | 4 |
| | PUQU-3-F | 3 | CCZU-3-F | 12 |
| | APUQU-2-F | 5 | CCZU-5-F | 4 |
| | APUQU-3-F | 8 | CCEU-3-F | 12 |
| | PGUQU-3-F | 5 | CCEU-5-F | 7 |
| | CPGU-3-OT | 3.5 | | |
| | CPGP-4-3 | 2 | | |

| | H-5 (Vgl.) | |
|---|---|---|
| Klärpunkt | 114.5°C | |
| Optische Anisotropie Δn | 0.1342 | |
| Zusammensetzung | Verbindung | % |
| | CPG-3-F | 5 |
| | CPG-5-F | 5 |
| | CPU-3-F | 15 |
| | CPU-5-F | 15 |
| | CP-3-N | 16 |
| | CP-5-N | 16 |
| | CCGU-3-F | 7 |
| | CGPC-3-3 | 4 |
| | CGPC-5-3 | 4 |
| | CGPC-5-5 | 4 |
| | CCZPC-3-3 | 3 |
| | CCZPC-3-4 | 3 |
| | CCZPC-3-5 | 3 |

C) Bestimmung der Löslichkeit von Farbstoffverbindungen

Die Löslichkeit wird aus übersättigten Lösungen unter regelmäßiger Entnahme von Proben, Filtration und spektroskopischer Bestimmung der Konzentration ermittelt. Die Probenentnahme erfolgt in regelmäßigen Abständen, um das Langzeitverhalten zu verfolgen. Die Untersuchung wird über 12 Wochen durchgeführt. Die Proben werden bei+20°C gelagert. Die maximale Farbstoffkonzentration, bis zu der keine Kristallisation unter den angegebenen Bedingungen erfolgt, wird als "Löslichkeit" angegeben.

Folgende Farbstoffe werden dabei verwendet:

| |
|---|
| 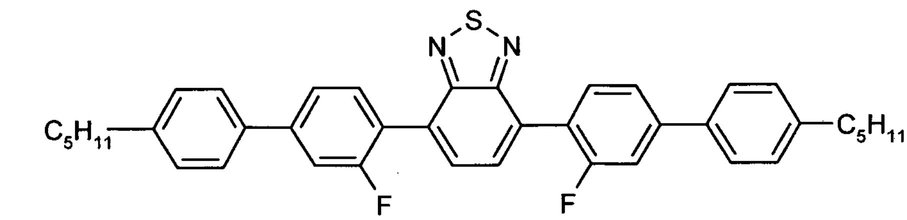 |
| D-1 |
| |
| 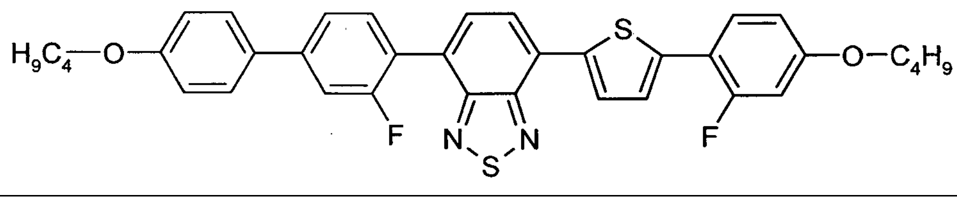 |
| D-2 |

(fortgesetzt)

| |
|---|
| 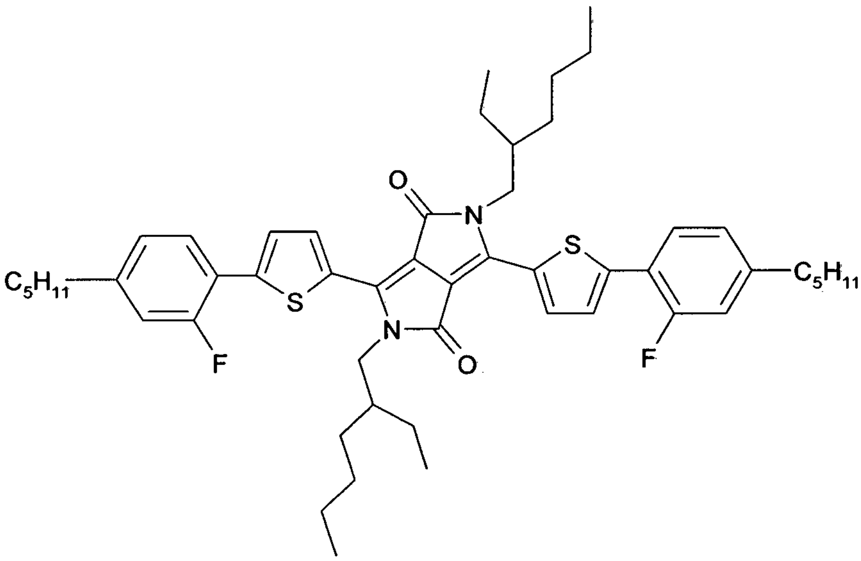 |
| D-3 |
| |
| 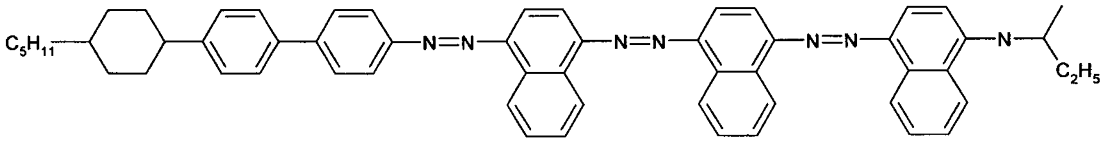 |
| D-4 |
| 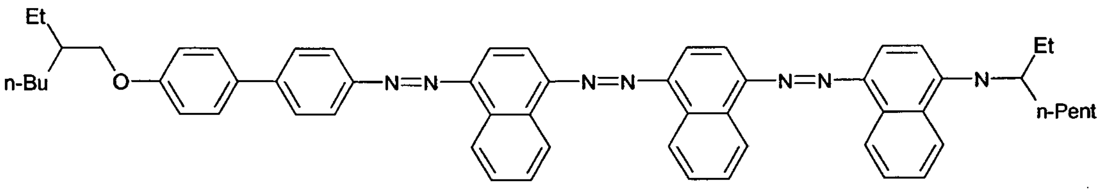 |
| D-5 |

In der flüssigkristallinen Mischung H-1 werden Löslichkeitsversuche mit den Farbstoffen D-1 bis D-5 durchgeführt. Dabei werden die folgenden Löslichkeiten erhalten:

| Farbstoffverbindung | Löslichkeit (Gew.-%) |
|---|---|
| D-1 | 1.1 |
| D-2 | 1.5 |
| D-3 | 0.6 |
| D-4 | 1.6 |
| D-5 | 2.7 |

In der flüssigkristallinen Mischung H-2 werden Löslichkeitsversuche mit den Farbstoffen D-1 bis D-5 durchgeführt. Dabei werden die folgenden Löslichkeiten erhalten:

| Farbstoffverbindung | Löslichkeit (Gew.-%) |
|---|---|
| D-2 | 1.5 |
| D-4 | 1.5 |

In der flüssigkristallinen Mischung H-3 werden Löslichkeitsversuche mit den Farbstoffen D-1 bis D-5 durchgeführt.
Dabei werden die folgenden Löslichkeiten erhalten:

| Farbstoffverbindung | Löslichkeit (Gew.-%) |
|---|---|
| D-2 | 1.5 |
| D-4 | 1.5 |

In der flüssigkristallinen Mischung H-4 werden Löslichkeitsversuche mit den Farbstoffen D-1 bis D-5 durchgeführt.
Dabei werden die folgenden Löslichkeiten erhalten:

| Farbstoffverbindung | Löslichkeit (Gew.-%) |
|---|---|
| D-2 | 1.5 |
| D-4 | 1.6 |

Die Ergebnisse zeigen, dass mit den erfindungsgemäßen Mischungen eine gute Löslichkeit der Farbstoffe, wobei die Löslichkeit über einen langen Zeitraum stabil bleibt, erreicht wird. Dies gilt insbesondere für Benzothiadiazol-Farbstoffe, Diketopyrrolopyrrol-Farbstoffe und Azofarbstoffe.

D) Bestimmung der Voltage Holding Ratio (VHR) der Farbstoffmischungen

Für die Mischungen H-1 bis H-4 (erfindungsgemäß) und die Vergleichsmischung H-5 wird die Voltage holding ratio (VHR) jeweils für die Einzelmischung und für die Kombination mit dem Farbstoff D-2 gemessen. Dabei wird zum einen der initiale Wert für die VHR, und zum anderen der Wert für die VHR nach Lichtbelastung bestimmt (suntest 1 Woche). Die Lichtbelastung besteht darin, dass die Probe intensivem Licht (Ausschluss von UV-Licht durch 400 nm cut-off Filter) in einem Suntest CPS+ der Firma MTS-Atlas ausgesetzt wird. Der Wert ΔVHR stellt entsprechend die Differenz zwischen dem Wert für die VHR nach Lichtbelastung und dem initialen Wert für die VHR dar.
Zur Bestimmung der VHR wird das Material einem Spannungspuls ausgesetzt, und dessen elektrische Eigenschaften werden ermittelt. Es wird dabei vorgegangen wie in "Merck Liquid Crystals, Physical Properties of Liquid Crystals", Abschnitt VIII, Status Nov. 1997, Merck KGaA, Deutschland, und in H. Seiberle et al., SID 1992, 92, S. 25 ff. beschrieben.
Der Wert ΔVHR stellt ein Maß für die Konstanz des elektrischen Widerstands des Materials über die Zeit dar, und ist daher von Bedeutung für die Leistung der optischen Schaltvorrichtung enthaltend das LC-Material. Der Wert ist insbesondere von Bedeutung für die Leistung und den visuellen Eindruck von Smart Windows enthaltend das LC-Material.

| Mischung | VHR (100°C) Mischung Ausgangswert | VHR(100°C) Mischung nach 1 Woche Suntest | ΔVHR (100°C) Mischung | VHR(100°C) Mischung + 0.25% D-2 Ausgangswert | VHR(100°C) Mischung + 0.25% D-2 nach 1 Woche Suntest | ΔVHR (100°C) Mischung + 0.25% D-2 |
|---|---|---|---|---|---|---|
| H-1 | 98.4 | 98.3 | 0.1 | 98.1 | 76.7 | 21.4 |
| H-2 | 95.8 | 95.7 | 0.1 | 96.7 | 64.9 | 31.8 |
| H-3 | 97.9 | 98.0 | -0.1 | 96.9 | 77.0 | 19.9 |
| H-4 | 98.3 | 97.5 | 0.8 | 98.7 | 66.8 | 31.9 |

(fortgesetzt)

| Mischung | VHR (100°C) Mischung Ausgangswert | VHR(100°C) Mischung nach 1 Woche Suntest | ΔVHR (100°C) Mischung | VHR(100°C) Mischung + 0.25% D-2 Ausgangswert | VHR(100°C) Mischung + 0.25% D-2 nach 1 Woche Suntest | ΔVHR (100°C) Mischung + 0.25% D-2 |
|---|---|---|---|---|---|---|
| H-5 (Vgl.) | 92.6 | 91.6 | 1.0 | 89.4 | 36.3 | 53.1 |

Die Ergebnisse zeigen, dass mit den erfindungsgemäßen Mischungen H-1 bis H-4 überraschenderweise sehr gute Ergebnisse für den Wert ΔVHR erhalten werden.
ΔVHR bezeichnet den Abfall der VHR, nachdem die Mischung eine Woche der oben beschriebenen Lichtbelastung ausgesetzt war (Suntest 1 Woche).
Die sehr guten Ergebnisse werden insbesondere bei der Kombination mit Benzothiadiazol- und Diketopyrrolopyrrol-Farbstoffen erreicht (D-2 ist ein Benzothiadiazol-Farbstoff).
Die Vergleichsmischung H-5 zeigt deutlich schlechtere Ergebnisse für den Wert ΔVHR, insbesondere im Fall der Kombination mit Farbstoffen.

## Patentansprüche

1. Flüssigkristallines Material mit einem Klärpunkt von höher als 95°C und mit einer positiven dielektrischen Anisotropie Δε, enthaltend eine oder mehrere Farbstoffverbindungen F und eine oder mehrere Verbindungen einer Formel (IA) oder (IB)

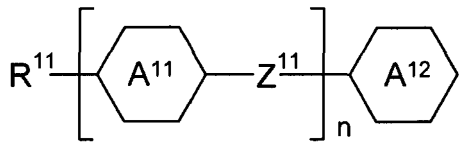

Formel (IA)

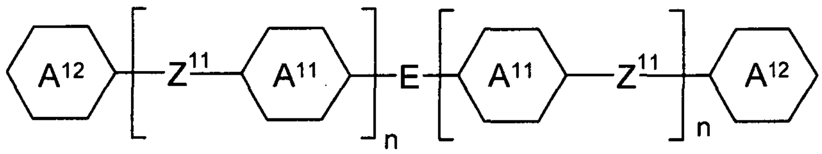

Formel (IB),

wobei für die auftretenden Gruppen und Indices gilt:

$A^{11}$ ist bei jedem Auftreten gleich oder verschieden gewählt aus

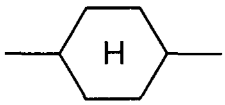 , 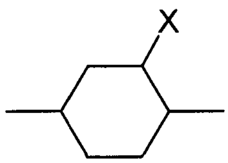 , 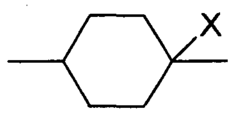 ,

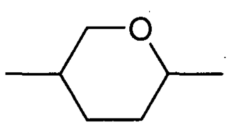 , 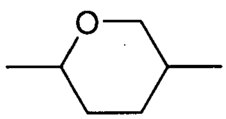 , 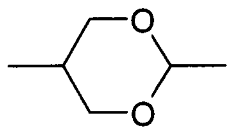 ,

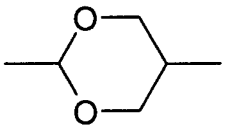 , 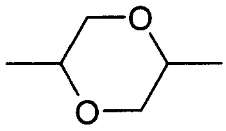 , 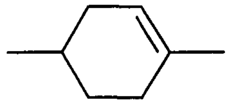 ,

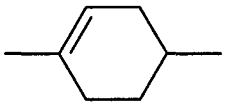 , 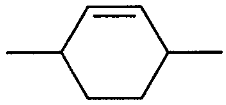 , 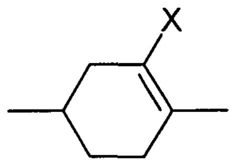 ,

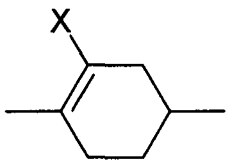 , 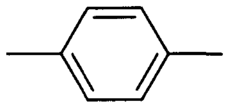 , 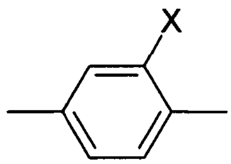 ,

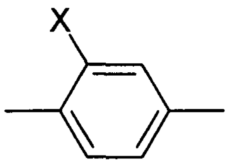 , 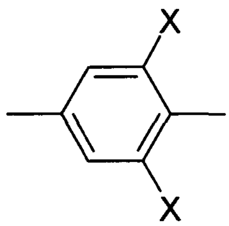 , 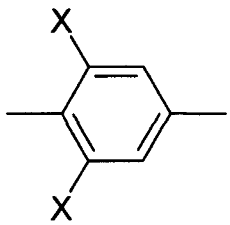 ,

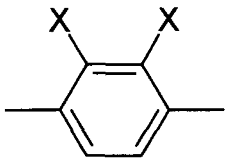 , 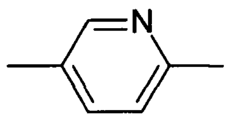 , 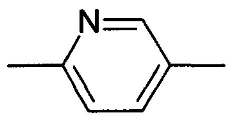 ,

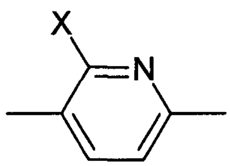 , 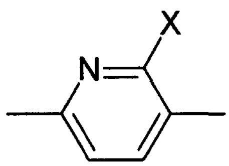 , 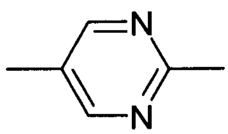 ,

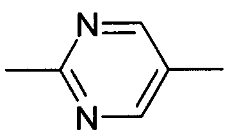 , 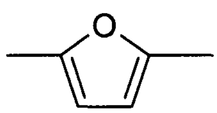 , 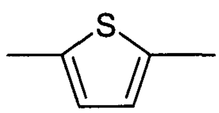 ,

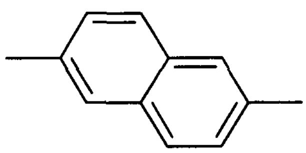 , 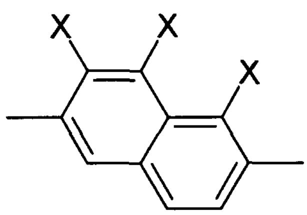 ,

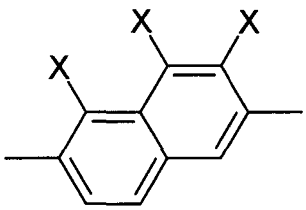 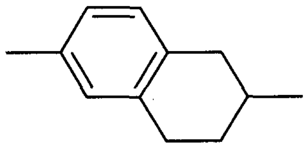

, ,

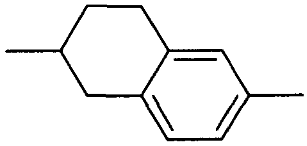 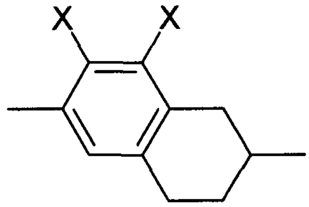

, ,

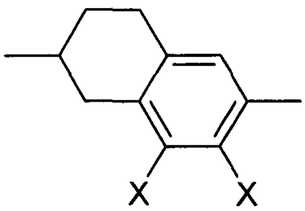 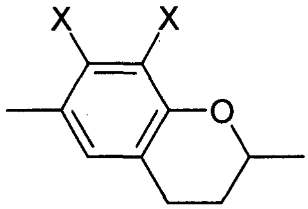

, ,

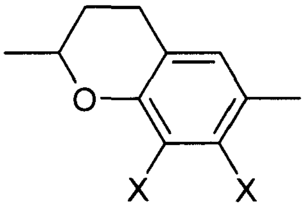 , 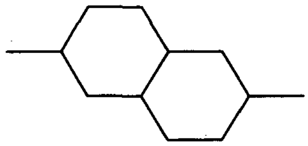 , 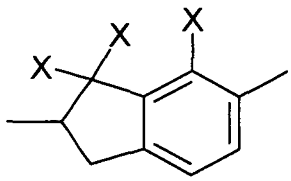 ,

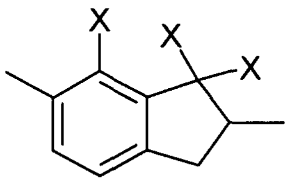 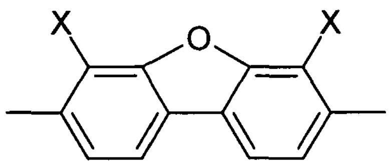

, ,

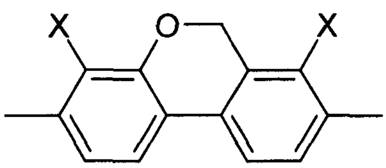 , und 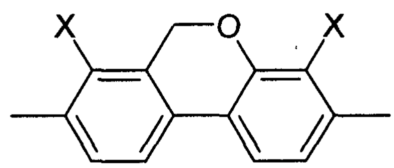 ;

X ist bei jedem Auftreten gleich oder verschieden gewählt aus F, Cl, CN, Alkylgruppen mit 1 bis 10 C-Atomen, Alkoxygruppen mit 1 bis 10 C-Atomen und Thioalkoxygruppen mit 1 bis 10 C-Atomen, wobei ein oder mehrere Wasserstoffatome in den Alkyl-, Alkoxy- und Thioalkoxygruppen durch F oder Cl ersetzt sein können, und wobei eine oder mehrere $CH_2$-Gruppen in den Alkyl-, Alkoxy- und Thioalkoxygruppen durch O oder S ersetzt sein können;

$A^{12}$ ist bei jedem Auftreten gleich oder verschieden eine Gruppe einer Formel (A12A) oder (A12B)

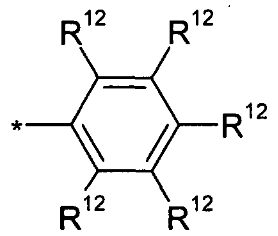

Formel (A12A)

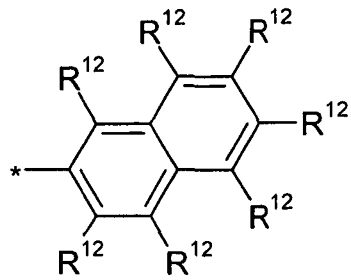

Formel (A12B),

wobei die mit * gekennzeichnete Bindung die Bindung an die Gruppe $Z^{11}$ bezeichnet;
$Z^{11}$ ist bei jedem Auftreten gleich oder verschieden gewählt aus-CO-O-, -O-CO-, $-CF_2-CF_2-$, $-CF_2-O-$, $-O-CF_2-$, $-CH_2-CH_2-$, -CH=CH-, -CF=CF-, -CF=CH-, -CH=CF-, -C≡C-, $-OCH_2-$, $-CH_2O-$, und Einfachbindungen;
E ist gewählt aus Alkylengruppen mit 3 bis 12 C-Atomen, wobei ein oder mehrere H-Atome in den Alkylengruppen durch F, Cl, $-Si(R^1)_2OSi(R^1)_2OSi(R^1)_3$, $Si(R^1)_3$ oder CN ersetzt sein können, und wobei ein oder mehrere $CH_2$-Gruppen in den Alkylengruppen durch $CR^1=CR^1$, C≡C, $Si(R^1)_2$, $Si(R^1)_2O$, O, S, -O-CO- oder -CO-O- ersetzt sein können;
$R^{11}$ ist gewählt aus H, F, Cl, CN, NCS, $R^1$-O-CO-, $R^1$-CO-O-, Alkylgruppen mit 1 bis 10 C-Atomen, Alkoxygruppen mit 1 bis 10 C-Atomen, Thioalkoxygruppen mit 1 bis 10 C-Atomen, Alkenylgruppen mit 2 bis 10 C-Atomen, Alkenyloxygruppen mit 2 bis 10 C-Atomen und Thioalkenyloxygruppen mit 2 bis 10 C-Atomen, wobei ein oder mehrere H-Atome in den Alkyl-, Alkoxy-, Thioalkoxy-, Alkenyl- und Alkenyloxygruppen durch F, Cl, $-Si(R^1)_2OSi(R^1)_2OSi(R^1)_3$, $Si(R^1)_3$ oder CN ersetzt sein können, und wobei eine oder mehrere $CH_2$-Gruppen in den Alkyl-, Alkoxy-, Thioalkoxy-, Alkenyl- und Alkenyloxygruppen durch $Si(R^1)_2$, $Si(R^1)_2O$, O, S, -O-CO-, -CO-O- oder eine Einheit $A^{11}$ ersetzt sein können;
$R^1$ ist bei jedem Auftreten gleich oder verschieden gewählt aus Alkylgruppen mit 1 bis 10 C-Atomen, bei denen eine oder mehrere Wasserstoffatome durch F, Cl, $-Si(R^1)_2OSi(R^1)_2OSi(R^1)_3$, $Si(R^1)_3$ oder CN ersetzt sein können, und bei denen eine oder mehrere $CH_2$-Gruppen durch $Si(R^1)_2$, $Si(R^1)_2O$, O oder S ersetzt sein können;
$R^{12}$ ist bei jedem Auftreten gleich oder verschieden gewählt aus H, F, Cl, CN, NCS, $CF_3$, $CF_2CF_3$, $CHF_2$, $CH_2F$, $CH=CF_2$, CH=CFH, CH=CH(CN), $OCF_3$, $OC(CF_3)_3$, $OCF_2CF_3$, $OCHF_2$, OCH2F, $O-CH=CF_2$, O-CH=CFH, $O-CF_2-CF=CF_2$, $OSF_5$, $SF_5$, $SCF_3$, $SCF_2CF_3$,$SCHF_2$, $SCH_2F$, $S-CH=CF_2$, S-CH=CFH, $R^1$-O-CO-, $R^1$-CO-O-, Alkylgruppen mit 1 bis 10 C-Atomen, Alkoxygruppen mit 1 bis 10 C-Atomen, Thioalkoxygruppen mit 1 bis 10 C-Atomen, Alkenylgruppen mit 2 bis 10 C-Atomen, Alkenyloxygruppen mit 2 bis 10 C-Atomen und Thioalkenyloxygruppen mit 2 bis 10 C-Atomen, wobei ein oder mehrere H-Atome in den Alkyl-, Alkoxy-, Thioalkoxy-, Alkenyl- und Alkenyloxygruppen durch F, Cl oder CN ersetzt sein können, und wobei eine oder mehrere $CH_2$-Gruppen in den Alkyl-, Alkoxy-, Thioalkoxy-, Alkenyl- und Alkenyloxygruppen durch O, S, -O-CO- oder -CO-O- ersetzt sein können;
wobei mindestens ein Rest $R^{12}$ in der Gruppe $A^{12}$ gewählt ist aus F, Cl, CN, NCS, $CF_3$, $CF_2CF_3$, $CHF_2$, $CH_2F$, $CH=CF_2$, CH=CFH, CH=CH(CN), $OCF_3$, $OC(CF_3)_3$, $OCF_2CF_3$, $OCHF_2$, $OCH_2F$, $O-CH=CF_2$, O-CH=CFH, $O-CF_2-CF=CF_2$, $OSF_5$, $SF_5$, $SCF_3$, $SCF_2CF_3$,$SCHF_2$, $SCH_2F$, $S-CH=CF_2$ und S-CH=CFH; und
n ist bei jedem Auftreten gleich oder verschieden 1, 2, 3 oder 4,

wobei das flüssigkristalline Material die Verbindung

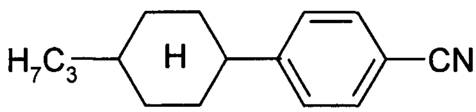

überhaupt nicht oder in einem Anteil von höchstens 10 Gew.-% enthält.

2. Flüssigkristallines Material nach Anspruch 1, **dadurch gekennzeichnet, dass** der Index n bei jedem Auftreten gleich oder verschieden 2 oder 3 ist.

3. Flüssigkristallines Material nach Anspruch 1 oder 2, **dadurch gekennzeichnet, dass** die Verbindung der Formel (IA) einer Formel (IA-1), (IA-2), (IA-3) oder (IA-4) entspricht

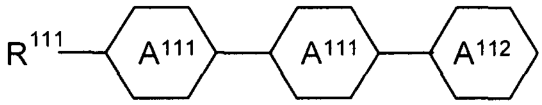

Formel (IA-1)

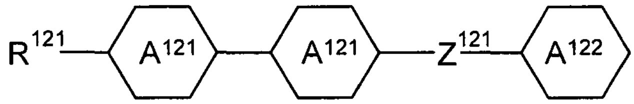

Formel (IA-2)

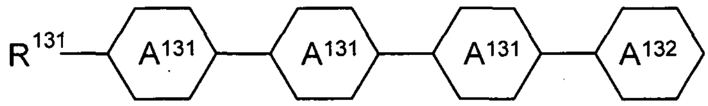

Formel (IA-3)

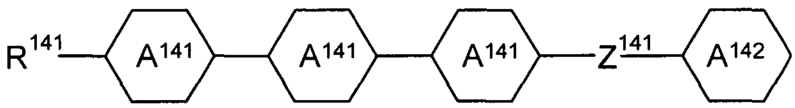

Formel (IA-4)

wobei für die auftretenden Gruppen gilt:

$R^{111}$, $R^{121}$, $R^{131}$, $R^{141}$ sind definiert wie $R^{11}$ in Anspruch 1;
$Z^{121}$, $Z^{141}$ sind gewählt aus -CO-O-, -O-CO-, $-CF_2-CF_2-$, $-CF_2-O-$, $-O-CF_2-$, $-CH_2-CH_2-$, $-OCH_2-$ und $-CH_2O-$;
$A^{121}$, $A^{131}$, $A^{141}$ sind bei jedem Auftreten gleich oder verschieden und definiert wie $A^{11}$ in Anspruch 1;
$A^{112}$, $A^{122}$, $A^{132}$, $A^{142}$ sind gewählt aus

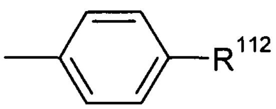
,
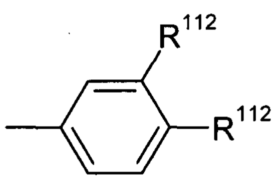
, und
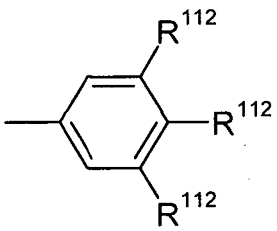
;

$R^{112}$ ist bei jedem Auftreten gleich oder verschieden gewählt aus F, $CF_3$, $CF_2CF_3$, $CHF_2$, $CH_2F$, $OCF_3$, $OCF_2CF_3$, $OCHF_2$, $OCH_2F$, $SF_5$ und OSFs.

4. Flüssigkristallines Material nach Anspruch 3, **dadurch gekennzeichnet, dass** $A^{112}$, $A^{122}$, $A^{132}$, $A^{142}$ gewählt sind aus

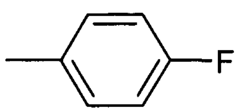
,
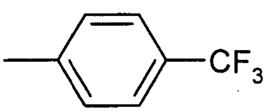
,
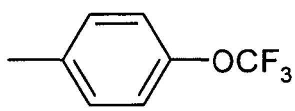
,

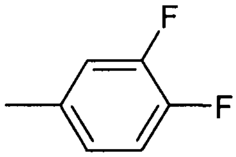,
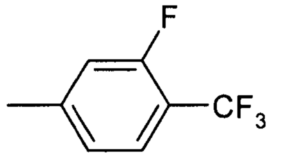,
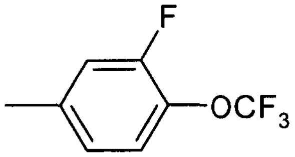,

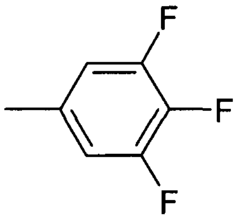,
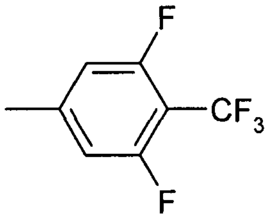
und
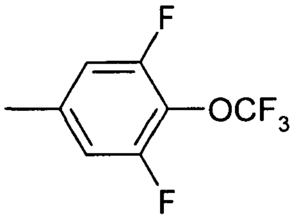.

5. Flüssigkristallines Material nach einem oder mehreren der Ansprüche 1 bis 4, **dadurch gekennzeichnet, dass** darin die Verbindung der Formel (IA) oder (IB) in einem Gesamtanteil von 70 Gew.-% bis 90 Gew.-% enthalten ist.

6. Flüssigkristallines Material nach einem oder mehreren der Ansprüche 1 bis 5, **dadurch gekennzeichnet, dass** es eine oder mehrere dreikernige Verbindungen, in denen alle drei Kerne aromatisch sind, in einem Gesamtanteil von mindestens 1 Gew.-% enthält.

7. Flüssigkristallines Material nach einem oder mehreren der Ansprüche 1 bis 6, **dadurch gekennzeichnet, dass** es eine oder mehrere Verbindungen einer Formel (II) enthält

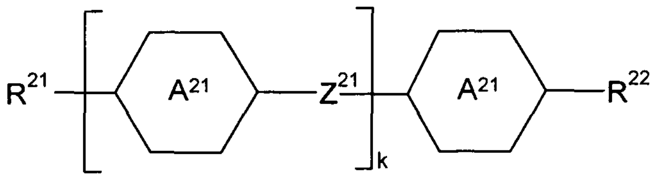

Formel (II),

wobei für die auftretenden Gruppen und Indices gilt:

$A^{21}$ ist bei jedem Auftreten gleich oder verschieden gewählt aus

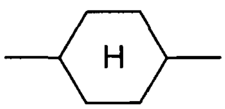,
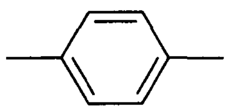;

$Z^{21}$ ist bei jedem Auftreten gleich oder verschieden gewählt aus -CO-O-, -O-CO-, $-CF_2-CF_2-$, $-CF_2-O-$, $-O-CF_2-$, $-CH_2-CH_2-$, -CH=CH-, und Einfachbindungen;
$R^{21}$, $R^{22}$ sind bei jedem Auftreten gleich oder verschieden gewählt aus Alkylgruppen mit 1 bis 10 C-Atomen und Alkenylgruppen mit 1 bis 10 C-Atomen;
k ist gleich 1, 2, 3, oder 4.

8. Flüssigkristallines Material nach einem oder mehreren der Ansprüche 1 bis 7, **dadurch gekennzeichnet, dass** es Verbindungen mit einer oder mehreren Cyanogruppen in einem Anteil von höchstens 10 Gew.-% enthält.

9. Flüssigkristallines Material nach einem oder mehreren der Ansprüche 1 bis 8, **dadurch gekennzeichnet, dass** es mindestens zwei verschiedene Farbstoffverbindungen F enthält, die jeweils verschiedene Bereiche des Lichtspektrums abdecken, so dass insgesamt der Eindruck schwarzer Farbe des Materials entsteht.

10. Flüssigkristallines Material nach einem oder mehreren der Ansprüche 1 bis 9, **dadurch gekennzeichnet, dass** es zwei oder mehr unterschiedliche Farbstoffverbindungen F enthält, und diese entweder alle positiv dichroitisch sind, oder alle negatic dichroitisch sind.

11. Flüssigkristallines Material nach einem oder mehreren der Ansprüche 1 bis 10, **dadurch gekennzeichnet, dass** die Farbstoffverbindungen F gewählt sind aus Azoverbindungen, Anthrachinonen, Methinverbindungen, Azomethinverbindungen, Merocyaninverbindungen, Naphthochinonen, Tetrazinen, Benzothiadiazolen, Pyrromethenen und Diketopyrrolopyrrolen.

12. Flüssigkristallines Material nach einem oder mehreren der Ansprüche 1 bis 11, **dadurch gekennzeichnet, dass** die Farbstoffverbindungen F einer Formel (F) entsprechen

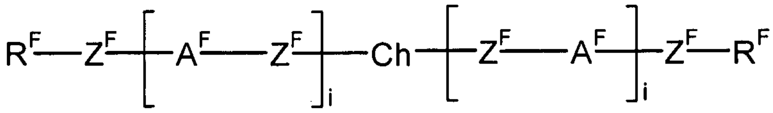

Formel (F),

wobei für die auftretenden Gruppen gilt:

Ch ist eine beliebige chromophore Gruppe;
$A^F$ ist bei jedem Auftreten gleich oder verschieden gewählt aus

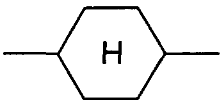 , 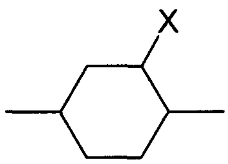 , 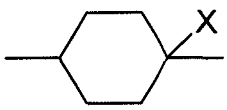 ,

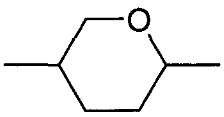 , 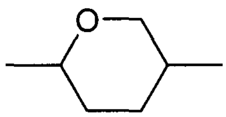 , 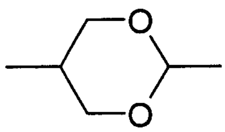 ,

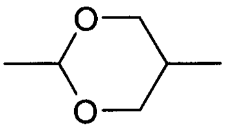 , 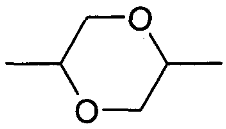 , 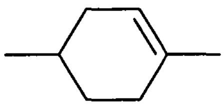 ,

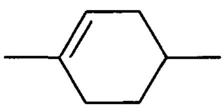 , 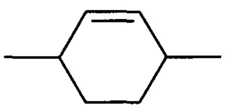 , 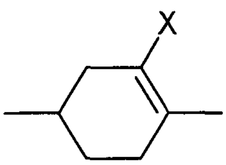 ,

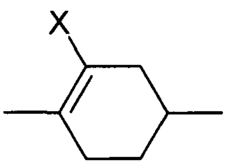 , 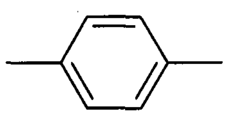 , 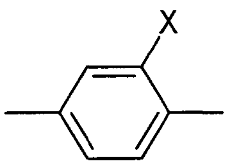 ,

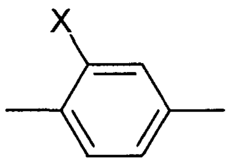 , 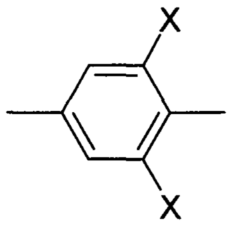 , 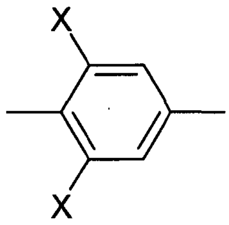 ,

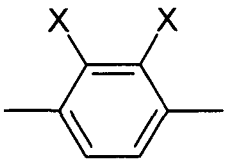 , 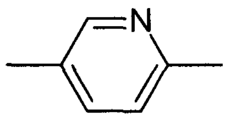 , 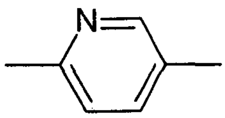 ,

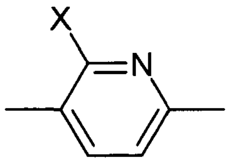 , 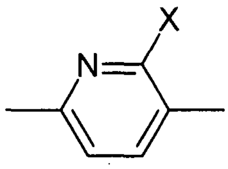 , 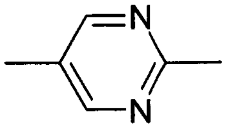 ,

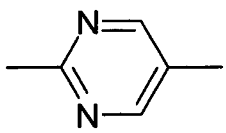 , 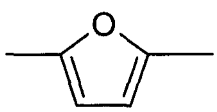 , 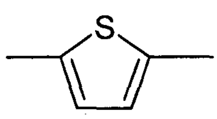 ,

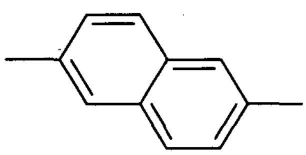 , 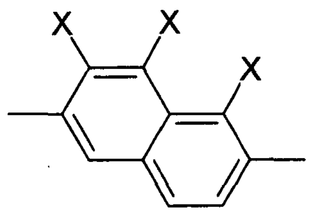 ,

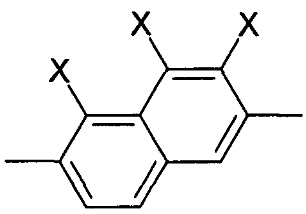 , 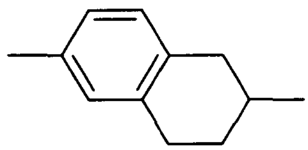 ,

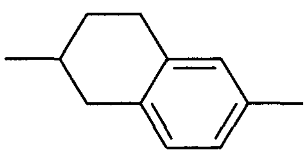 , 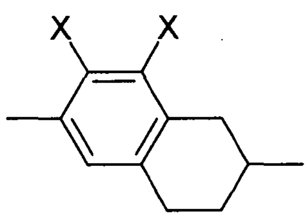 ,

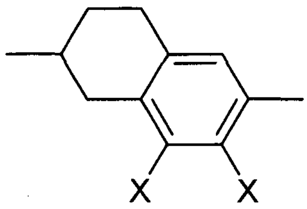
,
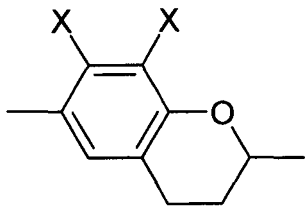
,

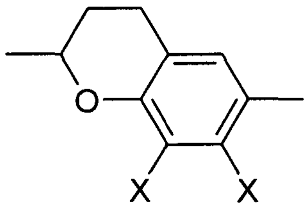
,
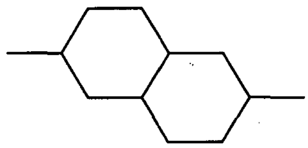
,

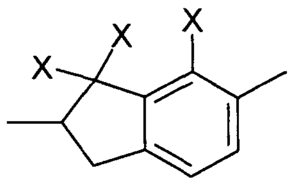
,

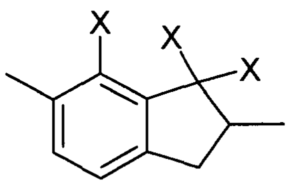
,
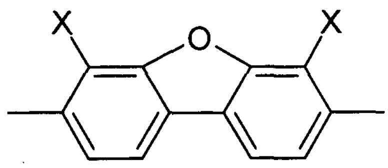
,

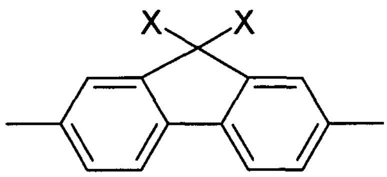
,
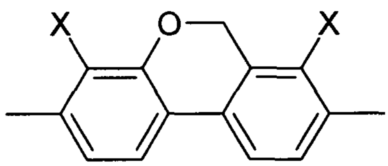
,

und

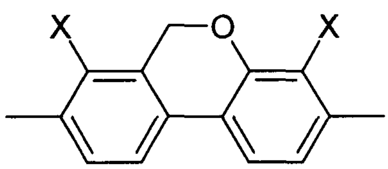
;

X ist bei jedem Auftreten gleich oder verschieden gewählt aus F, Cl, CN, Alkylgruppen mit 1 bis 10 C-Atomen, Alkoxygruppen mit 1 bis 10 C-Atomen und Thioalkoxygruppen mit 1 bis 10 C-Atomen, wobei ein oder mehrere Wasserstoffatome in den Alkyl-, Alkoxy- und Thioalkoxygruppen durch F oder Cl ersetzt sein können, und wobei eine oder mehrere $CH_2$-Gruppen in den Alkyl-, Alkoxy- und Thioalkoxygruppen durch O oder S ersetzt sein können;

$R^F$ ist bei jedem Auftreten gleich oder verschieden und gewählt aus H, F, Cl, CN, NCS, $R^1$-O-CO-, $R^1$-CO-O-, Alkylgruppen mit 1 bis 10 C-Atomen, Alkoxygruppen mit 1 bis 10 C-Atomen, Thioalkoxygruppen mit 1 bis 10

C-Atomen, Alkenylgruppen mit 2 bis 10 C-Atomen, Alkenyloxygruppen mit 2 bis 10 C-Atomen und Thioalkenyloxygruppen mit 2 bis 10 C-Atomen, wobei ein oder mehrere H-Atome in den Alkyl-, Alkoxy-, Thioalkoxy-, Alkenyl- und Alkenyloxygruppen durch F, Cl oder CN ersetzt sein können, und wobei eine oder mehrere $CH_2$-Gruppen in den Alkyl-, Alkoxy-, Thioalkoxy-, Alkenyl- und Alkenyloxygruppen durch O, S, -O-CO- oder -CO-O- ersetzt sein können;
$R^1$ ist bei jedem Auftreten gleich oder verschieden gewählt aus Alkylgruppen mit 1 bis 10 C-Atomen, bei denen eine oder mehrere Wasserstoffatome durch F oder Cl ersetzt sein können, und bei denen eine oder mehrere $CH_2$-Gruppen durch O oder S ersetzt sein können;
$Z^F$ ist bei jedem Auftreten gleich oder verschieden gewählt aus-CO-O-, -O-CO-, $-CF_2-CF_2-$, $-CF_2-O-$, $-O-CF_2-$, $-CH_2-CH_2-$, -CH=CH-, -CF=CF-, -CF=CH-, -CH=CF-, -C≡C-, $-OCH_2-$, $-CH_2O-$, und Einfachbindungen; und
i ist bei jedem Auftreten gleich oder verschieden 1, 2, oder 3.

13. Flüssigkristallines Material nach Anspruch 12, **dadurch gekennzeichnet, dass** die Gruppe Ch einer der folgenden Formeln (Ch-1) und (Ch-2) entspricht

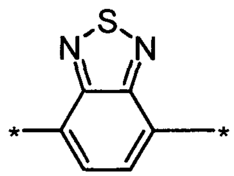

Formel (Ch-1)

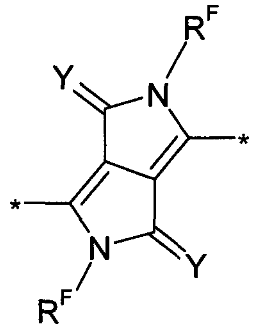

Formel (Ch-2),

wobei die Gruppen an den Rest der Verbindung der Formel (F) jeweils über die mit * markierten Bindungen gebunden sind,
wobei die Gruppen an den freien Positionen jeweils mit Resten $R^F$ substituiert sein können;
wobei Y bei jedem Auftreten gleich oder verschieden gewählt ist aus O und $NR^F$; und
wobei $R^F$ definiert ist wie in Anspruch 12.

14. Flüssigkristallines Material nach einem oder mehreren der Ansprüche 1 bis 13, **dadurch gekennzeichnet, dass** seine dielektrische Anisotropie $\Delta\varepsilon$ größer als 3 ist.

15. Verwendung des flüssigkristallinen Materials nach einer oder mehreren der Ansprüche 1 bis 14 in einer optischen Schaltvorrichtung.

16. Vorrichtung zur homogenen Regulierung des Lichtdurchtritts durch eine Fläche, enthaltend ein flüssigkristallines Material nach einem oder mehreren der Ansprüche 1 bis 14.

17. Vorrichtung nach Anspruch 16, **dadurch gekennzeichnet, dass** das flüssigkristalline Material in einer Schaltschicht vorliegt.

18. Vorrichtung nach Anspruch 16 oder 17, **dadurch gekennzeichnet, dass** sie zur Regulierung des Lichtdurchtritts in Form von Tageslicht von der Umgebung in einen Raum geeignet ist.

19. Vorrichtung nach einem oder mehreren der Ansprüche 16 bis 18, **dadurch gekennzeichnet**, dasss sie elektrisch schaltbar ist.

20. Vorrichtung nach einem oder mehreren der Ansprüche 16 bis 19, **dadurch gekennzeichnet, dass** sie keinen Polarisator umfasst.

21. Fenster, enthaltend eine Vorrichtung nach einem oder mehreren der Ansprüche 16 bis 20.

## Claims

1. Liquid-crystalline material having a clearing point of higher than 95°C and having positive dielectric anisotropy $\Delta\varepsilon$, comprising one or more dye compounds F and one or more compounds of a formula (IA) or (IB)

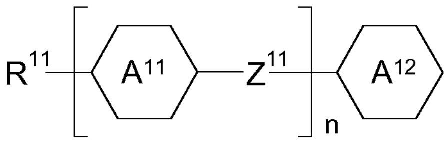

formula (IA)

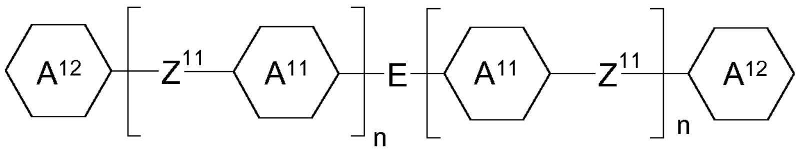

formula (IB),

where the following applies to the groups and indices occurring:

$A^{11}$ is selected on each occurrence, identically or differently, from

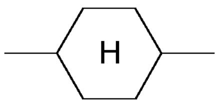 , 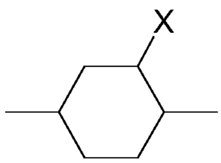 , 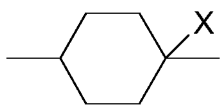 ,

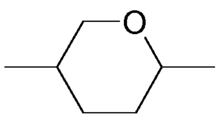 , 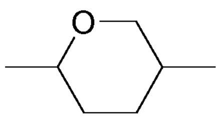 , 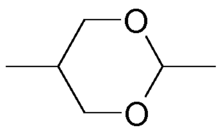 ,

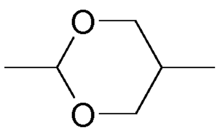 , 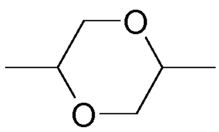 , 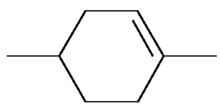 ,

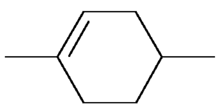 , 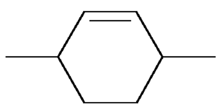 , 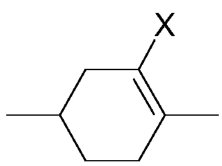 ,

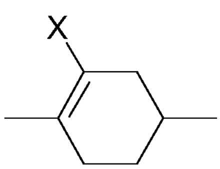 , 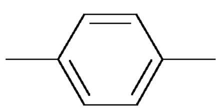 , 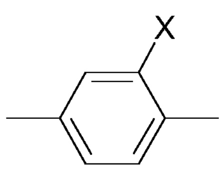 ,

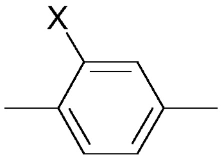 , 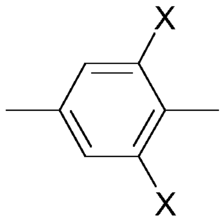 , 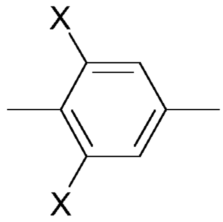 ,

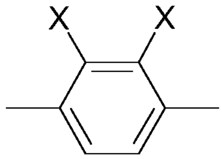 , 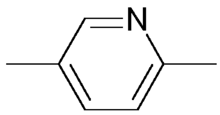 , 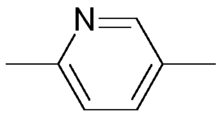 ,

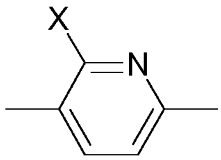 , 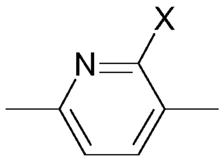 , 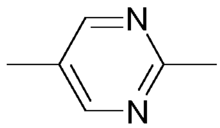 ,

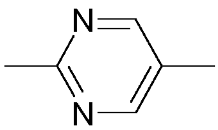 , 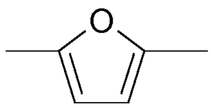 , 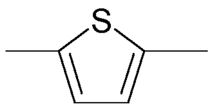 ,

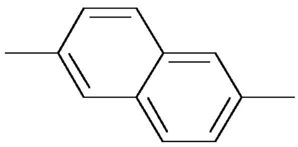 , 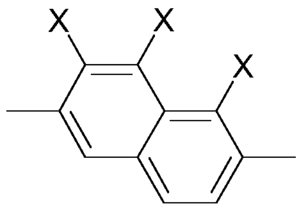 ,

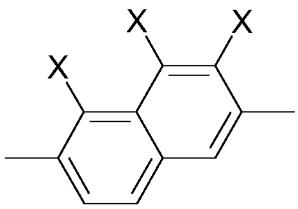 , 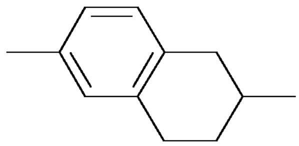 ,

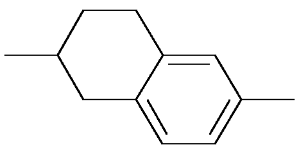 , 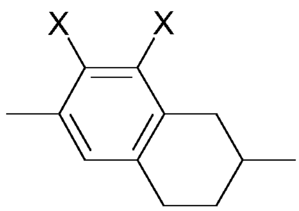 ,

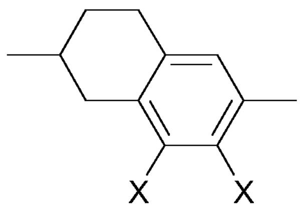 , 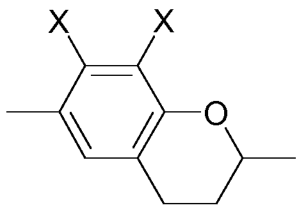 ,

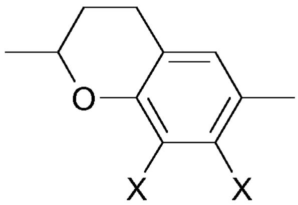 , 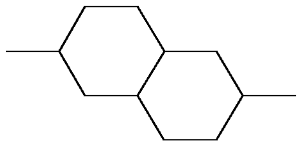 , 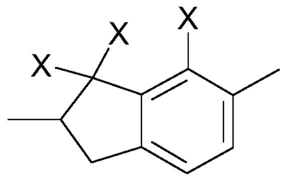 ,

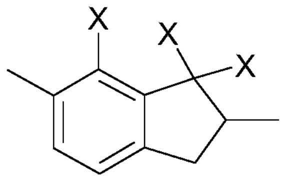 , 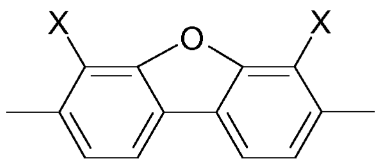 ,

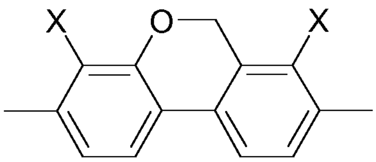 and 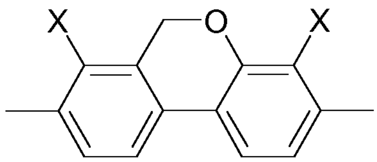 ;

X is selected on each occurrence, identically or differently, from F, Cl, CN, alkyl groups having 1 to 10 C atoms, alkoxy groups having 1 to 10 C atoms and thioalkoxy groups having 1 to 10 C atoms, where one or more hydrogen atoms in the alkyl, alkoxy and thioalkoxy groups may be replaced by F or Cl, and where one or more $CH_2$ groups in the alkyl, alkoxy and thioalkoxy groups may be replaced by O or S;
$A^{12}$ is on each occurrence, identically or differently, a group of a formula (A12A) or (A12B)

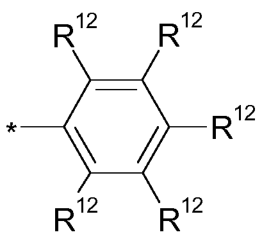

formula (A12A)

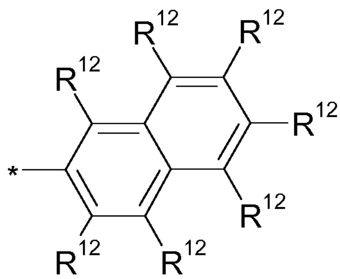

formula (A12B),

where the bond labelled with * denotes the bond to the group $Z^{11}$;
$Z^{11}$ is selected on each occurrence, identically or differently, from -CO-O-, -O-CO-, $-CF_2-CF_2-$, $-CF_2-O-$, $-O-CF_2-$, $-CH_2-CH_2-$, -CH=CH-, -CF=CF-, -CF=CH-, -CH=CF-, -C≡C-, $-OCH_2-$, $-CH_2O-$ and single bonds;
E is selected from alkylene groups having 3 to 12 C atoms, where one or more H atoms in the alkylene groups may be replaced by F, Cl, $-Si(R^1)_2OSi(R^1)_2OSi(R^1)_3$, $Si(R^1)_3$ or CN, and where one or more $CH_2$ groups in the alkylene groups may be replaced by $CR^1=CR^1$, C≡C, $Si(R^1)_2$, $Si(R^1)_2O$, O, S, -O-CO- or -CO-O-;
$R^{11}$ is selected from H, F, Cl, CN, NCS, $R^1$-O-CO-, $R^1$-CO-O-, alkyl groups having 1 to 10 C atoms, alkoxy

groups having 1 to 10 C atoms, thioalkoxy groups having 1 to 10 C atoms, alkenyl groups having 2 to 10 C atoms, alkenyloxy groups having 2 to 10 C atoms and thioalkenyloxy groups having 2 to 10 C atoms, where one or more H atoms in the alkyl, alkoxy, thioalkoxy, alkenyl and alkenyloxy groups may be replaced by F, Cl, $-Si(R^1)_2OSi(R^1)_2OSi(R^1)_3$, $Si(R^1)_3$ or CN, and where one or more $CH_2$ groups in the alkyl, alkoxy, thioalkoxy, alkenyl and alkenyloxy groups may be replaced by $Si(R^1)_2$, $Si(R^1)_2O$, O, S, -O-CO-, -CO-O- or a unit $A^{11}$;

$R^1$ is selected on each occurrence, identically or differently, from alkyl groups having 1 to 10 C atoms, in which one or more hydrogen atoms may be replaced by F, Cl, $-Si(R^1)_2OSi(R^1)_2OSi(R^1)_3$, $Si(R^1)_3$ or CN, and in which one or more $CH_2$ groups may be replaced by $Si(R^1)_2$, $Si(R^1)_2O$, O or S;

$R^{12}$ is selected on each occurrence, identically or differently, from H, F, Cl, CN, NCS, $CF_3$, $CF_2CF_3$, $CHF_2$, $CH_2F$, $CH=CF_2$, CH=CFH, CH=CH(CN), $OCF_3$, $OC(CF_3)_3$, $OCF_2CF_3$, $OCHF_2$, $OCH_2F$, $O-CH=CF_2$, O-CH=CFH, $O-CF_2-CF=CF_2$, $OSF_5$, $SF_5$, $SCF_3$, $SCF_2CF_3$, $SCHF_2$, $SCH_2F$, $S-CH=CF_2$, S-CH=CFH, $R^1$-O-CO-, $R^1$-CO-O-,alkyl groups having 1 to 10 C atoms, alkoxy groups having 1 to 10 C atoms, thioalkoxy groups having 1 to 10 C atoms, alkenyl groups having 2 to 10 C atoms, alkenyloxy groups having 2 to 10 C atoms and thioalkenyloxy groups having 2 to 10 C atoms, where one or more H atoms in the alkyl, alkoxy, thioalkoxy, alkenyl and alkenyloxy groups may be replaced by F, Cl or CN, and where one or more $CH_2$ groups in the alkyl, alkoxy, thioalkoxy, alkenyl and alkenyloxy groups may be replaced by O, S, -O-CO- or -CO-O-;

where at least one radical $R^{12}$ in the group $A^{12}$ is selected from F, Cl, CN, NCS, $CF_3$, $CF_2CF_3$, $CHF_2$, $CH_2F$, $CH=CF_2$, CH=CFH, CH=CH(CN), $OCF_3$, $OC(CF_3)_3$, $OCF_2CF_3$, $OCHF_2$, $OCH_2F$, $O-CH=CF_2$, O-CH=CFH, $O-CF_2-CF=CF_2$, $OSF_5$, $SF_5$, $SCF_3$, $SCF_2CF_3$, $SCHF_2$, $SCH_2F$, $S-CH=CF_2$ and S-CH=CFH; and

n is on each occurrence, identically or differently, 1, 2, 3 or 4,

where the liquid-crystalline material does not comprise the compound

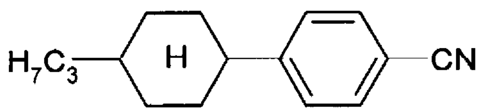

at all or comprises it in a proportion of at most 10% by weight.

2. Liquid-crystalline material according to Claim 1, **characterised in that** the index n is on each occurrence, identically or differently, 2 or 3.

3. Liquid-crystalline material according to Claim 1 or 2, **characterised in that** the compound of the formula (IA) conforms to a formula (IA-1), (IA-2), (IA-3) or (IA-4)

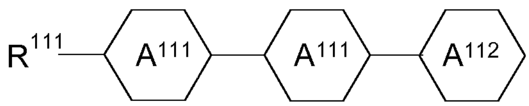

formula (IA-1)

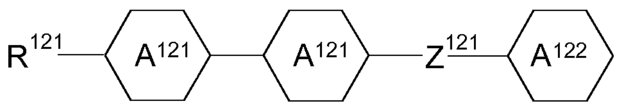

formula (IA-2)

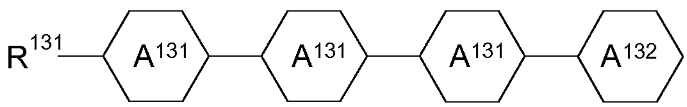

formula (IA-3)

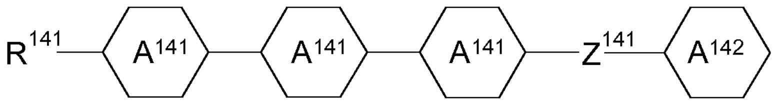

formula (IA-4)

where the following applies to the groups occurring:

$R^{111}$, $R^{121}$, $R^{131}$, $R^{141}$ are defined like $R^{11}$ in Claim 1;
$Z^{121}$, $Z^{141}$ are selected from -CO-O-, -O-CO-, $-CF_2-CF_2-$, $-CF_2-O-$, $-O-CF_2-$, $-CH_2-CH_2-$, $-OCH_2-$ and $-CH_2O-$;
$A^{111}$, $A^{121}$, $A^{131}$, $A^{141}$ are identical or different on each occurrence and are defined like $A^{11}$ in Claim 1;
$A^{112}$, $A^{122}$, $A^{132}$, $A^{142}$ are selected from

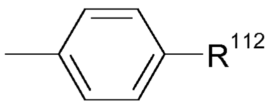 , 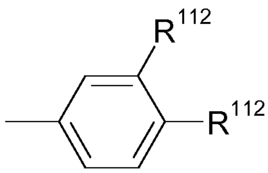 and 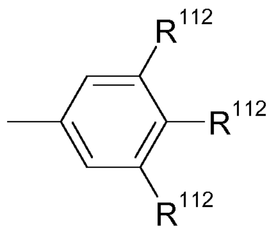 ;

$R^{112}$ is selected on each occurrence, identically or differently, from F, $CF_3$, $CF_2CF_3$, $CHF_2$, $CH_2F$, $OCF_3$, $OCF_2CF_3$, $OCHF_2$, $OCH_2F$, $SF_5$ and $OSF_5$.

4. Liquid-crystalline material according to Claim 3, **characterised in that** $A^{112}$, $A^{122}$, $A^{132}$, $A^{142}$ are selected from

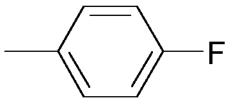 , 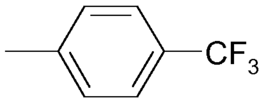 , 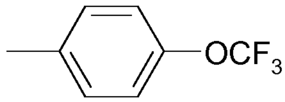 ,

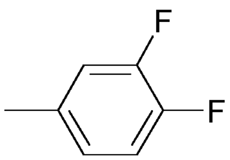 , 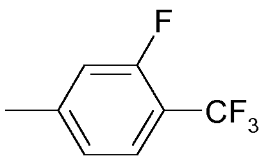 , 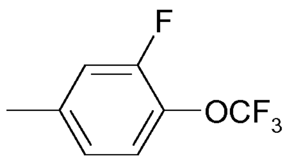 ,

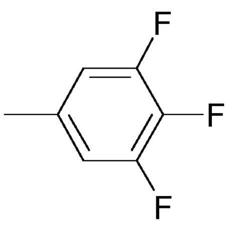 , 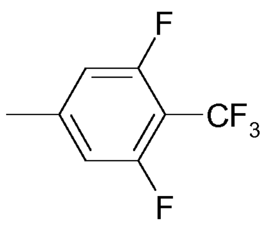 and 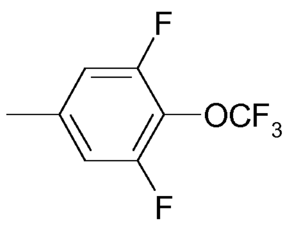 .

5. Liquid-crystalline material according to one or more of Claims 1 to 4, **characterised in that** the compound of the formula (IA) or (IB) is present therein in a total proportion of 70% by weight to 90% by weight.

6. Liquid-crystalline material according to one or more of Claims 1 to 5, **characterised in that** it comprises one or more tricyclic compounds in which all three rings are aromatic, in a total proportion of at least 1% by weight.

7. Liquid-crystalline material according to one or more of Claims 1 to 6, **characterised in that** it comprises one or more compounds of a formula (II)

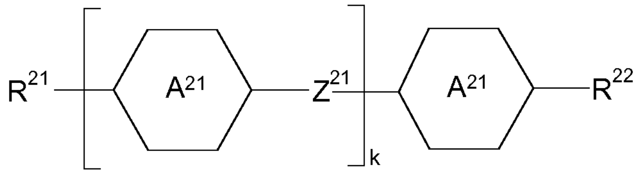

formula (II),

where the following applies to the groups and indices occurring:

$A^{21}$ is selected on each occurrence, identically or differently, from

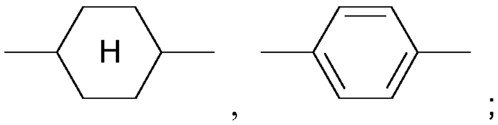

$Z^{21}$ is selected on each occurrence, identically or differently, from -CO-O-, -O-CO-, $-CF_2-CF_2-$, $-CF_2-O-$, $-O-CF_2-$, $-CH_2-CH_2-$, -CH=CH- and single bonds;
$R^{21}$, $R^{22}$ are selected on each occurrence, identically or differently, from alkyl groups having 1 to 10 C atoms and alkenyl groups having 1 to 10 C atoms;
k is equal to 1, 2, 3 or 4.

**8.** Liquid-crystalline material according to one or more of Claims 1 to 7, **characterised in that** it comprises compounds containing one or more cyano groups in a proportion of at most 10% by weight.

**9.** Liquid-crystalline material according to one or more of Claims 1 to 8, **characterised in that** it comprises at least two different dye compounds F, which each cover different regions of the light spectrum, giving overall the impression of a black colour of the material.

**10.** Liquid-crystalline material according to one or more of Claims 1 to 9, **characterised in that** it comprises two or more different dye compounds F, and these are either all positively dichroic or all negatively dichroic.

**11.** Liquid-crystalline material according to one or more of Claims 1 to 10, **characterised in that** the dye compounds F are selected from azo compounds, anthraquinones, methine compounds, azomethine compounds, merocyanine compounds, naphthoquinones, tetrazines, benzothiadiazoles, pyrromethenes and diketopyrrolopyrroles.

**12.** Liquid-crystalline material according to one or more of Claims 1 to 11, **characterised in that** the dye compounds F conform to a formula (F)

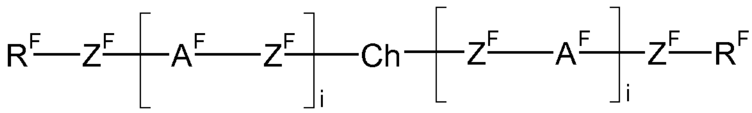

formula (F),

where the following applies to the groups occurring:

Ch is any desired chromophoric group;
$A^F$ is selected on each occurrence, identically or differently, from

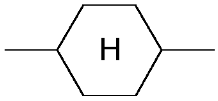 , 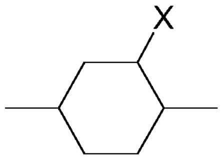 , 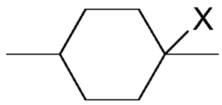 ,

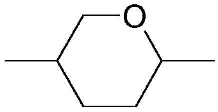 , 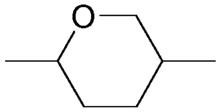 , 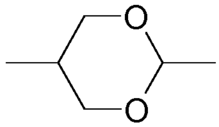 ,

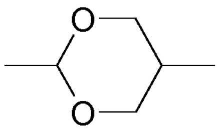 , 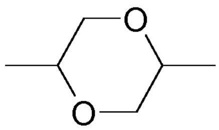 , 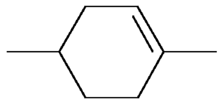 ,

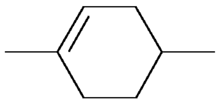 , 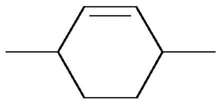 , 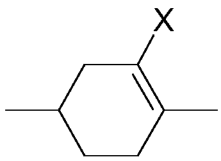 ,

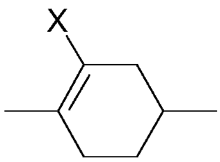 , 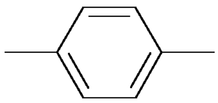 , 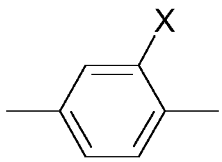 ,

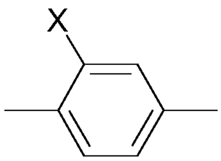 , 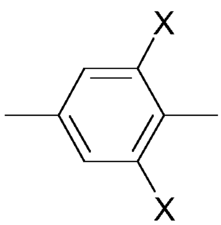 , 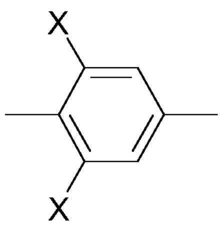 ,

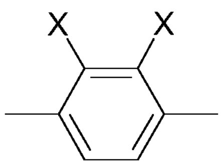 , 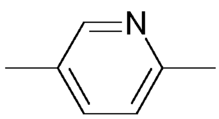 , 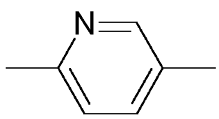 ,

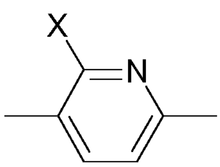 , 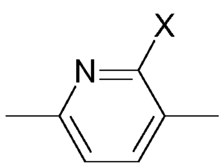 , 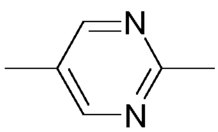 ,

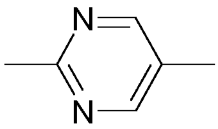 , 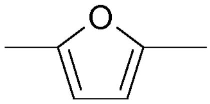 , 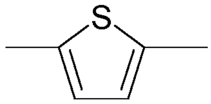 ,

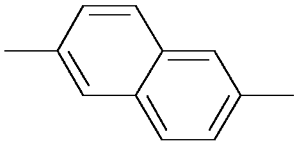 , 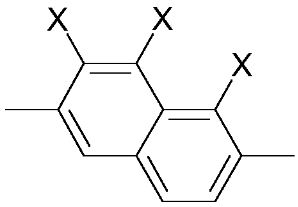 ,

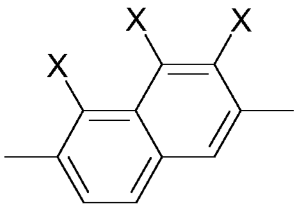 , 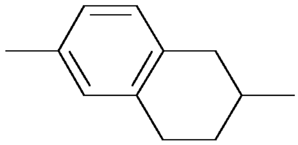 ,

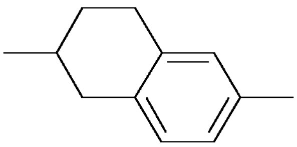 , 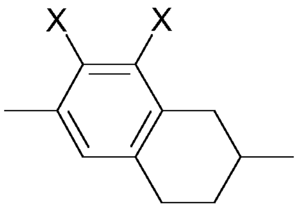 ,

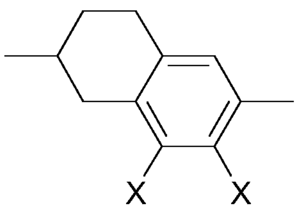 , 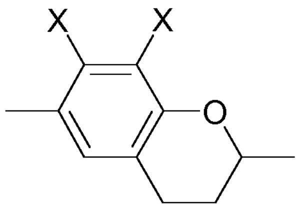 ,

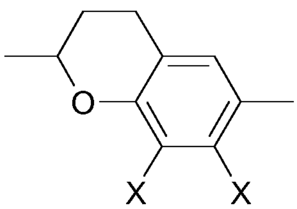 , 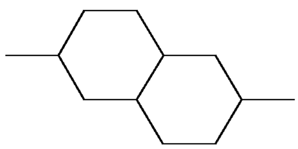 ,

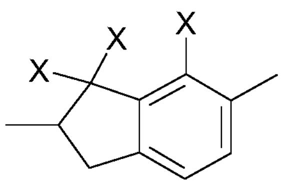 ,

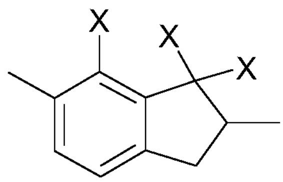 , 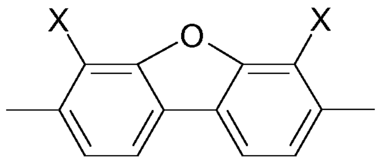 ,

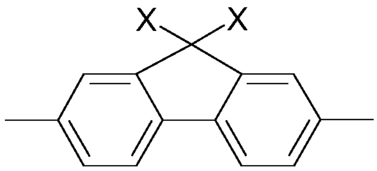 , 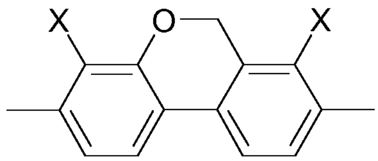

and

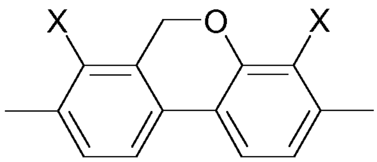 ;

X is selected on each occurrence, identically or differently, from F, Cl, CN, alkyl groups having 1 to 10 C atoms, alkoxy groups having 1 to 10 C atoms and thioalkoxy groups having 1 to 10 C atoms, where one or more hydrogen atoms in the alkyl, alkoxy and thioalkoxy groups may be replaced by F or Cl, and where one or more $CH_2$ groups in the alkyl, alkoxy and thioalkoxy groups may be replaced by O or S;
$R^F$ is identical or different on each occurrence and is selected from H, F, Cl, CN, NCS, $R^1$-O-CO-, $R^1$-CO-O-,alkyl groups having 1 to 10 C atoms, alkoxy groups having 1 to 10 C atoms, thioalkoxy groups having 1 to 10 C atoms, alkenyl groups having 2 to 10 C atoms, alkenyloxy groups having 2 to 10 C atoms and thioalkenyloxy groups having 2 to 10 C atoms, where one or more H atoms in the alkyl, alkoxy, thioalkoxy, alkenyl and alkenyloxy groups may be replaced by F, Cl or CN, and where one or more $CH_2$ groups in the alkyl, alkoxy, thioalkoxy, alkenyl and alkenyloxy groups may be replaced by O, S, -O-CO- or -CO-O-;
$R^1$ is selected on each occurrence, identically or differently, from alkyl groups having 1 to 10 C atoms, in which one or more hydrogen atoms may be replaced by F or Cl, and in which one or more $CH_2$ groups may be replaced by O or S;
$Z^F$ is selected on each occurrence, identically or differently, from -CO-O-, -O-CO-, $-CF_2-CF_2-$, $-CF_2-O-$, $-O-CF_2-$, $-CH_2-CH_2-$, -CH=CH-, -CF=CF-, -CF=CH-, -CH=CF-, -C≡C-, $-OCH_2-$, $-CH_2O-$ and single bonds; and
i is on each occurrence, identically or differently, 1, 2 or 3.

**13.** Liquid-crystalline material according to Claim 12, **characterised in that** the group Ch conforms to one of the following formulae (Ch-1) and (Ch-2):

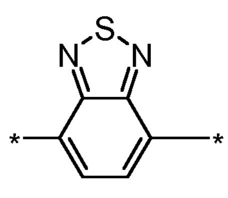

formula (Ch-1)

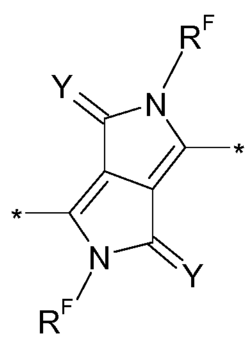

formula (Ch-2),

where the groups are in each case bonded to the remainder of the compound of the formula (F) via the bonds labelled with *,
where the groups may be substituted at each of the free positions by radicals $R^F$;
where Y is selected on each occurrence, identically or differently, from O and $NR^F$; and
where $R^F$ is defined as in Claim 12.

**14.** Liquid-crystalline material according to one or more of Claims 1 to 13, **characterised in that** its dielectric anisotropy $\Delta\varepsilon$ is greater than 3.

**15.** Use of the liquid-crystalline material according to one or more of Claims 1 to 14 in an optical switching device.

**16.** Device for the homogeneous regulation of the passage of light through an area, containing a liquid-crystalline material according to one or more of Claims 1 to 14.

**17.** Device according to Claim 16, **characterised in that** the liquid-crystalline material is present in a switching layer.

**18.** Device according to Claim 16 or 17, **characterised in that** it is suitable for the regulation of the passage of light in the form of daylight from the environment into a room.

**19.** Device according to one or more of Claims 16 to 18, **characterised in that** it is electrically switchable.

**20.** Device according to one or more of Claims 16 to 19, **characterised in that** it does not include a polariser.

**21.** Window containing a device according to one or more of Claims 16 to 20.

**Revendications**

**1.** Matériau cristallin liquide présentant un point de clarification supérieur à 95°C et présentant une anisotropie diélectrique positive $\Delta\varepsilon$, comprenant un ou plusieurs composé(s) de colorant F et un ou plusieurs composé(s) de la formule (IA) ou (IB)

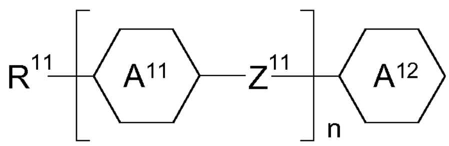

formule (IA)

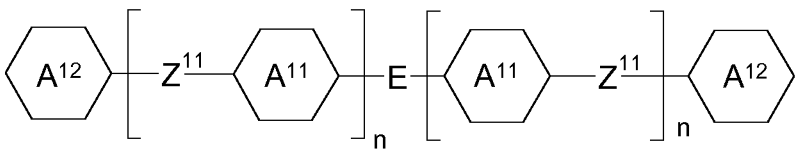

formule (IB) ;

dans lesquelles ce qui suit s'applique aux groupes et aux indices qui sont rencontrés :

$A^{11}$ est sélectionné, pour chaque occurrence de manière identique ou différente, parmi

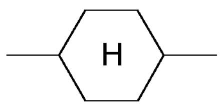 , 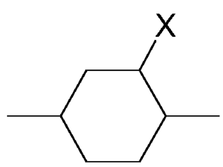 , 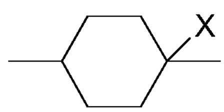 ,

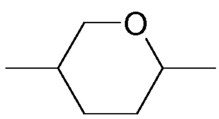 , 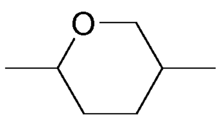 , 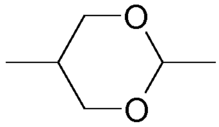 ,

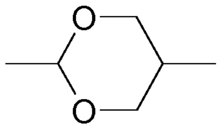 , 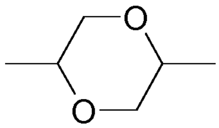 , 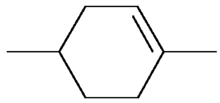 ,

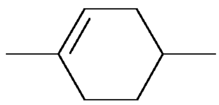 , 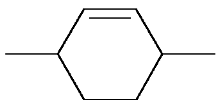 , 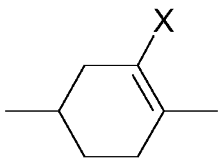 ,

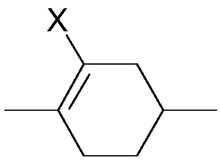 , 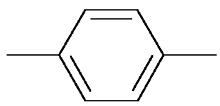 , 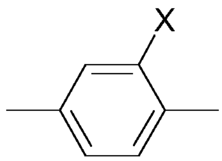 ,

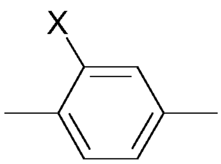 , 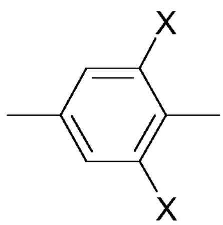 , 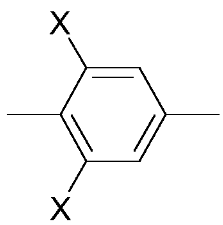 ,

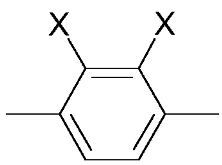 , 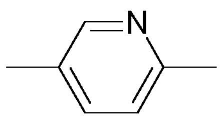 , 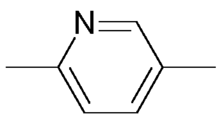 ,

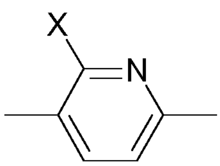 , 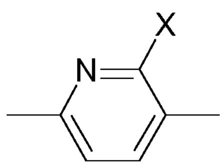 , 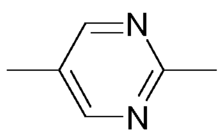 ,

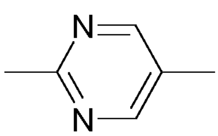 , 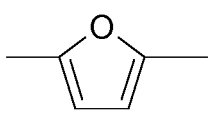 , 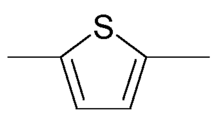 ,

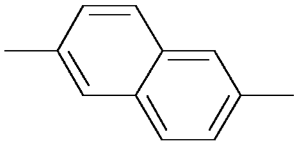 , 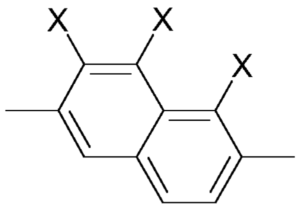 ,

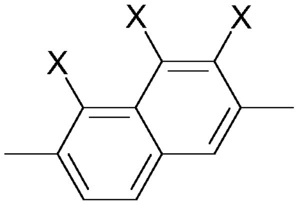 , 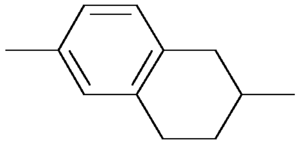 ,

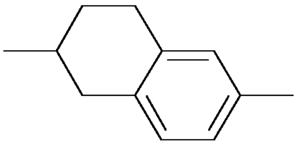 , 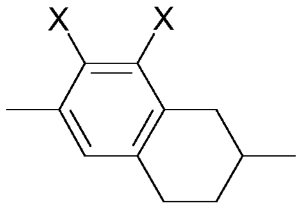 ,

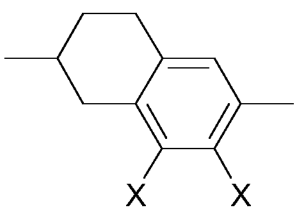 , 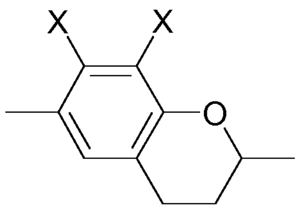 ,

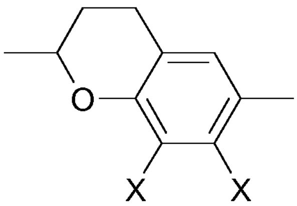 , 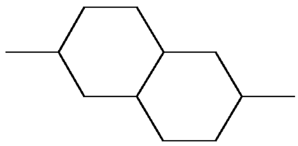 , 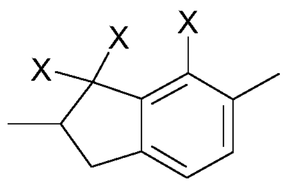 ,

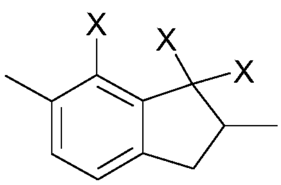 , 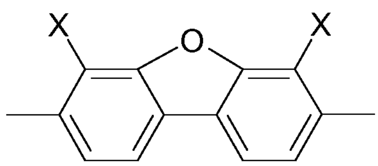 ,

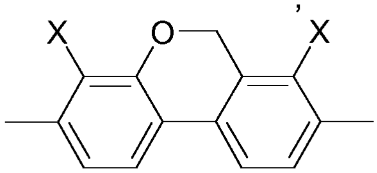 et 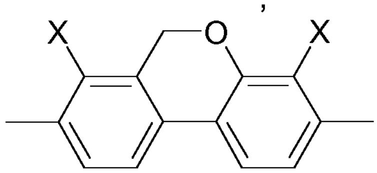 ;

X est sélectionné, pour chaque occurrence de manière identique ou différente, parmi F, Cl, CN, les groupes alkyle qui comportent de 1 à 10 atome(s) de C, les groupes alcoxy qui comportent de 1 à 10 atome(s) de C et les groupes thioalcoxy qui comportent de 1 à 10 atome(s) de C, où un ou plusieurs atome(s) d'hydrogène dans les groupes alkyle, alcoxy et thioalcoxy peut/peuvent être remplacé(s) par F ou par Cl, et où un ou plusieurs groupe(s) $CH_2$ dans les groupes alkyle, alcoxy et thioalcoxy peut/peuvent être remplacé(s) par O ou par S ;
$A^{12}$ est, pour chaque occurrence de manière identique ou différente, un groupe d'une formule (A12A) ou (A12B)

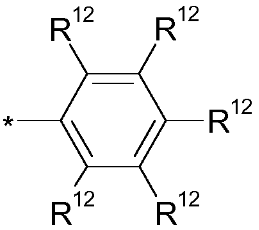

formule (A12A)

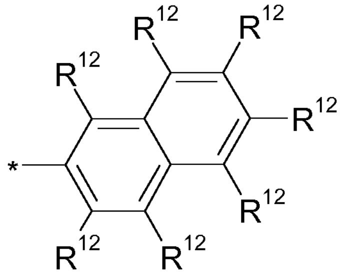

formule (A12B) ;

dans lesquelles le lien qui est étiqueté à l'aide de * représente la liaison sur le groupe $Z^{11}$ ;
$Z^{11}$ est sélectionné, pour chaque occurrence de manière identique ou différente, parmi -CO-O-, -O-CO-, $-CF_2-CF_2-$, $-CF_2-O-$, $-O-CF_2-$, $-CH_2-CH_2-$, -CH=CH-, -CF=CF-, -CF=CH-, -CH=CF-, -C≡C-, $-OCH_2-$, $-CH_2O-$ et des liaisons simples ;
E est sélectionné parmi les groupes alkylène qui comportent de 3 à 12 atomes de C, où un ou plusieurs atome(s) de H dans les groupes alkylène peut/peuvent être remplacé(s) par F, Cl, $-Si(R^1)_2OSi(R^1)_2OSi(R^1)_3$, $Si(R^1)_3$ ou CN, et où un ou plusieurs groupe(s) $CH_2$ dans les groupes alkylène peut/peuvent être remplacé(s) par $CR^1=CR^1$, C≡C, $Si(R^1)_2$, $Si(R^1)_2O$, O, S, -O-CO- ou -CO-O- ;
$R^{11}$ est sélectionné parmi H, F, Cl, CN, NCS, $R^1$-O-CO-, $R^1$-CO-O-, les groupes alkyle qui comportent de 1 à 10 atome(s) de C, les groupes alcoxy qui comportent de 1 à 10 atome(s) de C, les groupes thioalcoxy qui comportent de 1 à 10 atome(s) de C, les groupes alkényle qui comportent de 2 à 10 atomes de C, les groupes alkényloxy qui comportent de 2 à 10 atomes de C et les groupes thioalkényloxy qui comportent de 2 à 10 atomes de C, où un ou plusieurs atome(s) de H dans les groupes alkyle, alcoxy, thioalcoxy, alkényle et alkényloxy peut/peuvent être remplacé(s) par F, Cl, $-Si(R^1)_2OSi(R^1)_2OSi(R^1)_3$, $Si(R^1)_3$ ou CN, et où un ou plusieurs groupe(s) $CH_2$ dans les groupes alkyle, alcoxy, thioalcoxy, alkényle et alkényloxy peut/peuvent être remplacé(s) par $Si(R^1)_2$, $Si(R^1)_2O$, O, S, -O-CO-, -CO-O- ou une unité $A^{11}$ ;
$R^1$ est sélectionné, pour chaque occurrence de manière identique ou différente, parmi les groupes alkyle qui comportent de 1 à 10 atome(s) de C, où un ou plusieurs atome(s) d'hydrogène peut/peuvent être remplacé(s) par F, Cl, $-Si(R^1)_2OSi(R^1)_2OSi(R^1)_3$, $Si(R^1)_3$ ou CN, et où un ou plusieurs groupe(s) $CH_2$ peut/peuvent être remplacé(s) par $Si(R^1)_2$, $Si(R^1)_2O$, O ou S ;
$R^{12}$ est sélectionné, pour chaque occurrence de manière identique ou différente, parmi H, F, Cl, CN, NCS, $CF_3$, $CF_2CF_3$, $CHF_2$, $CH_2F$, $CH=CF_2$, CH=CFH, CH=CH(CN), $OCF_3$, $OC(CF_3)_3$, $OCF_2CF_3$, $OCHF_2$, $OCH_2F$, $O-CH=CF_2$, O-CH=CFH, $O-CF_2-CF=CF_2$, $OSF_5$, $SF_5$, $SCF_3$, $SCF_2CF_3$, $SCHF_2$, $SCH_2F$, $S-CH=CF_2$, S-CH=CFH, $R^1$-O-CO-, $R^1$-CO-O-, les groupes alkyle qui comportent de 1 à 10 atome(s) de C, les groupes alcoxy qui comportent de 1 à 10 atome(s) de C, les groupes thioalcoxy qui comportent de 1 à 10 atome(s) de C, les groupes alkényle qui comportent de 2 à 10 atomes de C, les groupes alkényloxy qui comportent de 2 à 10 atomes de C et les groupes thioalkényloxy qui comportent de 2 à 10 atomes de C, où un ou plusieurs atome(s) de H dans les groupes alkyle, alcoxy, thioalcoxy, alkényle et alkényloxy peut/peuvent être remplacé(s) par F, par Cl ou par CN, et où un ou plusieurs groupe(s) $CH_2$ dans les groupes alkyle, alcoxy, thioalcoxy, alkényle et alkényloxy peut/peuvent être remplacé(s) par O, par S, par -O-CO- ou par -CO-O- ;
où au moins un radical $R^{12}$ dans le groupe $A^{12}$ est sélectionné parmi F, Cl, CN, NCS, $CF_3$, $CF_2CF_3$, $CHF_2$, $CH_2F$, $CH=CF_2$, CH=CFH, CH=CH(CN), $OCF_3$, $OC(CF_3)_3$, $OCF_2CF_3$, $OCHF_2$, $OCH_2F$, $O-CH=CF_2$, O-CH=CFH, $O-CF_2-CF=CF_2$, $OSF_5$, $SF_5$, $SCF_3$, $SCF_2CF_3$, $SCHF_2$, $SCH_2F$, $S-CH=CF_2$ et S-CH=CFH ; et
n est, pour chaque occurrence de manière identique ou différente, 1, 2, 3 ou 4 ;

où le matériau cristallin liquide ne comprend pas le composé

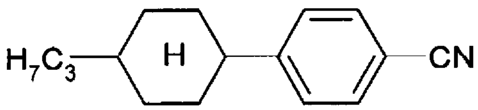

du tout ou le comprend selon une proportion d'au plus 10 % en poids.

2. Matériau cristallin liquide selon la revendication 1, **caractérisé en ce que** l'indice n est, pour chaque occurrence de manière identique ou différente, 2 ou 3.

3. Matériau cristallin liquide selon la revendication 1 ou 2, **caractérisé en ce que** le composé de la formule (IA) est conforme à une formule (IA-1), (IA-2), (IA-3) ou (IA-4)

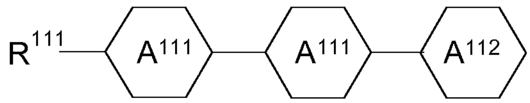

formule (IA-1)

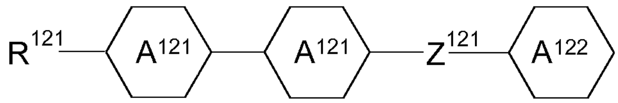

formule (IA-2)

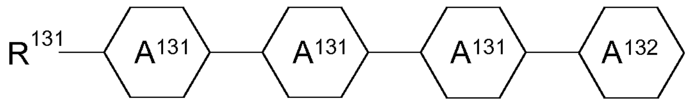

formule (IA-3)

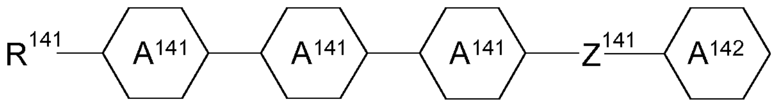

formule (IA-4)

dans lesquelles ce qui suit s'applique aux groupes qui sont rencontrés,
$R^{111}$, $R^{121}$, $R^{131}$, $R^{141}$ sont définis de façon similaire à $R^{11}$ selon la revendication 1 ;
$Z^{121}$, $Z^{141}$ sont sélectionnés parmi -CO-O-, -O-CO-, $-CF_2-CF_2-$, $-CF_2-O-$, $-O-CF_2-$, $-CH_2-CH_2-$, $-OCH_2-$ et $-CH_2O-$ ;
$A^{111}$, $A^{121}$, $A^{131}$, $A^{141}$ sont identiques ou différents pour chaque occurrence et sont définis de façon similaire à $A^{11}$ selon la revendication 1 ;
$A^{112}$, $A^{122}$, $A^{132}$, $A^{142}$ sont sélectionnés parmi

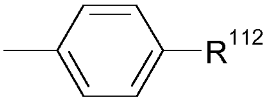

,

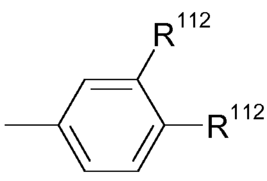

et

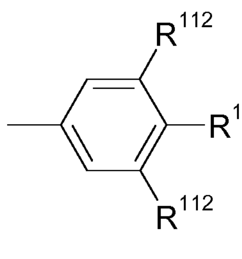

;

$R^{112}$ est sélectionné, pour chaque occurrence de manière identique ou différente, parmi F, $CF_3$, $CF_2CF_3$, $CHF_2$, $CH_2F$, $OCF_3$, $OCF_2CF_3$, $OCHF_2$, $OCH_2F$, $SF_5$ et $OSF_5$.

4. Matériau cristallin liquide selon la revendication 3, **caractérisé en ce que** $A^{112}$, $A^{122}$, $A^{132}$, $A^{142}$ sont sélectionnés parmi

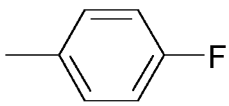 , 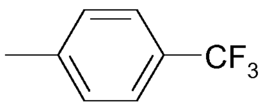 , 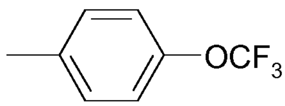 ,

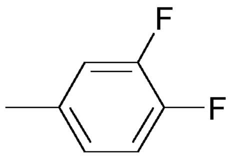 , 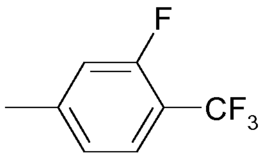 , 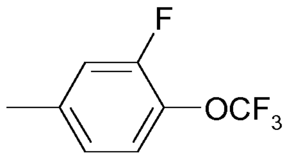 ,

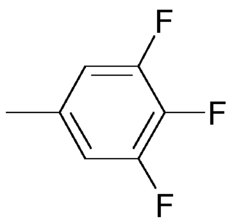 , 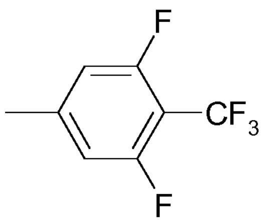 et 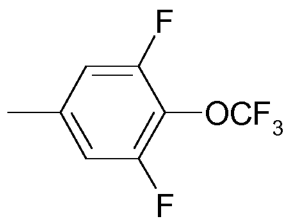 .

5. Matériau cristallin liquide selon une ou plusieurs des revendications 1 à 4, **caractérisé en ce que** le composé de la formule (IA) ou (IB) est présent à l'intérieur selon une proportion totale de 70 % en poids à 90 % en poids.

6. Matériau cristallin liquide selon une ou plusieurs des revendications 1 à 5, **caractérisé en ce qu'**il comprend un ou plusieurs composé(s) tricyclique(s) dans lequel/lesquels les trois cycles sont tous aromatiques, selon une proportion totale d'au moins 1% en poids.

7. Matériau cristallin liquide selon une ou plusieurs des revendications 1 à 6, **caractérisé en ce qu'**il comprend un ou plusieurs composé(s) d'une formule (II)

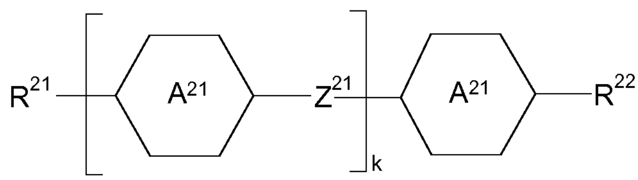

formule (II) ;

dans laquelle ce qui suit s'applique aux groupes et aux indices qui sont rencontrés :

$A^{21}$ est sélectionné, pour chaque occurrence de manière identique ou différente, parmi

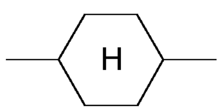 , 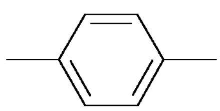 ;

$Z^{21}$ est sélectionné, pour chaque occurrence de manière identique ou différente, parmi -CO-O-, -O-CO-, $-CF_2-CF_2-$, $-CF_2-O-$, $-O-CF_2-$, $-CH_2-CH_2-$, -CH=CH- et des liaisons simples ;
$R^{21}$, $R^{22}$ sont sélectionnés, pour chaque occurrence de manière identique ou différente, parmi les groupes

alkyle qui comportent de 1 à 10 atome(s) de C et les groupes alkényle qui comportent de 1 à 10 atome(s) de C ; k est égal à 1, 2, 3 ou 4.

**8.** Matériau cristallin liquide selon une ou plusieurs des revendications 1 à 7, **caractérisé en ce qu'**il comprend des composés qui contiennent un ou plusieurs groupe(s) cyano selon une proportion d'au plus 10 % en poids.

**9.** Matériau cristallin liquide selon une ou plusieurs des revendications 1 à 8, **caractérisé en ce qu'**il comprend au moins deux composés de colorant différents F, lesquels couvrent chacun différentes régions du spectre de la lumière, ce qui donne globalement l'impression d'une couleur noire pour le matériau.

**10.** Matériau cristallin liquide selon une ou plusieurs des revendications 1 à 9, **caractérisé en ce qu'**il comprend deux composés de colorant différents F ou plus, et ces composés sont soit tous positivement dichroïques, soit tous négativement dichroïques.

**11.** Matériau cristallin liquide selon une ou plusieurs des revendications 1 à 10, **caractérisé en ce que** les composés de colorant F sont sélectionnés parmi les composés azo, les anthraquinones, les composés de méthine, les composés d'azométhine, les composés de mérocyanine, les naphtoquinones, les tétrazines, les benzothiadiazoles, les pyrrométhènes et les dicétopyrrolopyrroles.

**12.** Matériau cristallin liquide selon une ou plusieurs des revendications 1 à 11, **caractérisé en ce que** les composés de colorant F sont conformes à une formule (F)

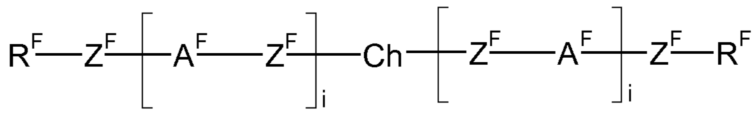

formule (F) ;

dans laquelle ce qui suit s'applique aux groupes qui sont rencontrés :

Ch est un quelconque groupe chromophore souhaité ;
$A^F$ est sélectionné, pour chaque occurrence de manière identique ou différente, parmi

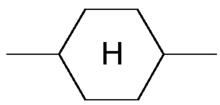 , 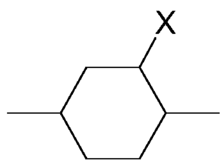 , 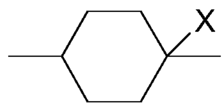 ,

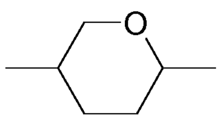 , 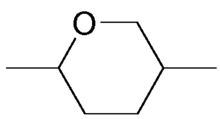 , 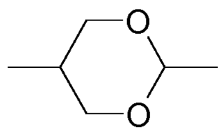 ,

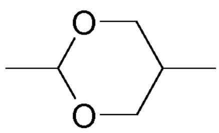 , 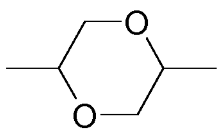 , 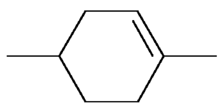 ,

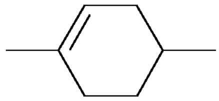 , 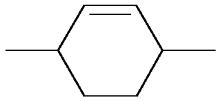 , 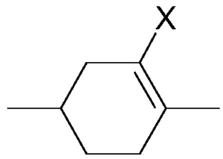 ,

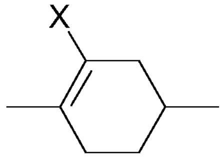 , 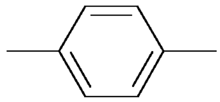 , 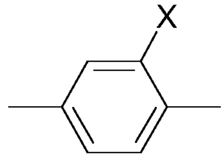 ,

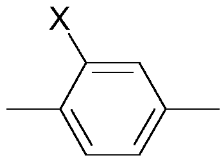 , 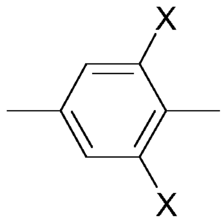 , 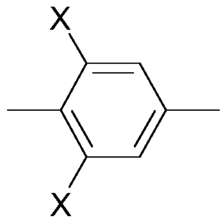 ,

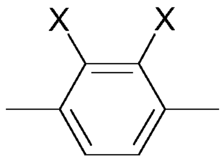 , 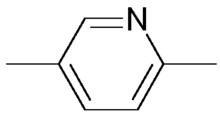 , 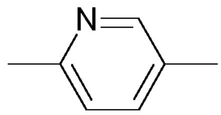 ,

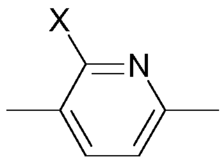 , 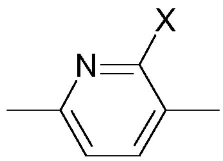 , 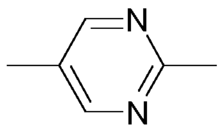 ,

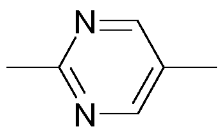 , 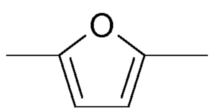 , 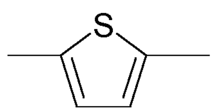 ,

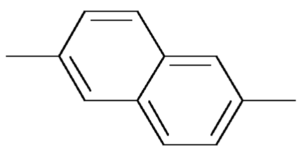 , 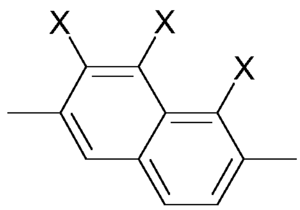 ,

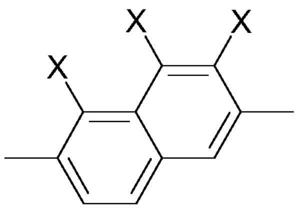 , 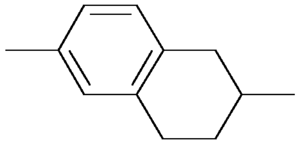 ,

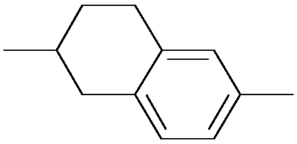 , 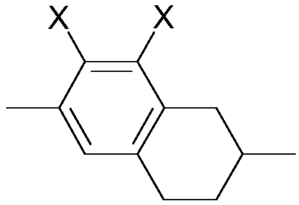 ,

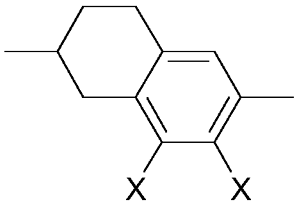 , 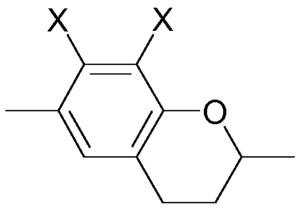 ,

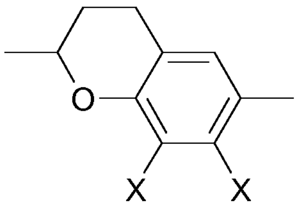 , 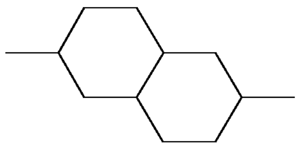 ,

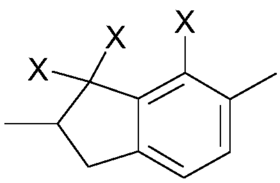 ,

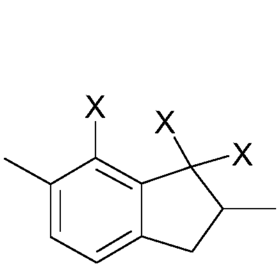 , 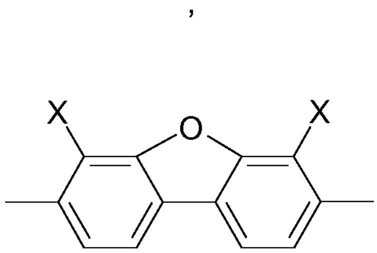 ,

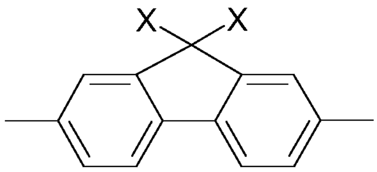

,

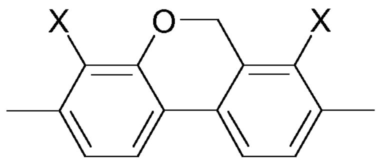

et

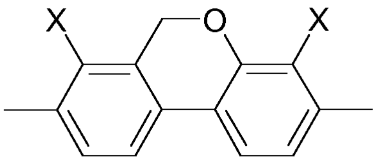

;

X est sélectionné, pour chaque occurrence de manière identique ou différente, parmi F, Cl, CN, les groupes alkyle qui comportent de 1 à 10 atome(s) de C, les groupes alcoxy qui comportent de 1 à 10 atome(s) de C et les groupes thioalcoxy qui comportent de 1 à 10 atome(s) de C, où un ou plusieurs atome(s) d'hydrogène dans les groupes alkyle, alcoxy et thioalcoxy peut/peuvent être remplacé(s) par F ou par Cl, et où un ou plusieurs groupe(s) $CH_2$ dans les groupes alkyle, alcoxy et thioalcoxy peut/peuvent être remplacé(s) par O ou par S ;
$R^F$ est identique ou différent pour chaque occurrence et est sélectionné parmi H, F, Cl, CN, NCS, $R^1$-O-CO-, $R^1$-CO-O-, les groupes alkyle qui comportent de 1 à 10 atome(s) de C, les groupes alcoxy qui comportent de 1 à 10 atome(s) de C, les groupes thioalcoxy qui comportent de 1 à 10 atome(s) de C, les groupes alkényle qui comportent de 2 à 10 atomes de C, les groupes alkényloxy qui comportent de 2 à 10 atomes de C et les groupes thioalkényloxy qui comportent de 2 à 10 atomes de C, où un ou plusieurs atome(s) de H dans les groupes alkyle, alcoxy, thioalcoxy, alkényle et alkényloxy peut/peuvent être remplacé(s) par F, par Cl ou par CN, et où un ou plusieurs groupe(s) $CH_2$ dans les groupes alkyle, alcoxy, thioalcoxy, alkényle et alkényloxy peut/peuvent être remplacé(s) par O, par S, par -O-CO- ou par -CO-O- ;
$R^1$ est sélectionné, pour chaque occurrence de manière identique ou différente, parmi les groupes alkyle qui comportent de 1 à 10 atome(s) de C, où un ou plusieurs atome(s) d'hydrogène peut/peuvent être remplacé(s) par F ou par Cl, et où un ou plusieurs groupes $CH_2$ peut/peuvent être remplacé(s) par O ou par S ;
$Z^F$ est sélectionné, pour chaque occurrence de manière identique ou différente, parmi -CO-O-, -O-CO-, $-CF_2-CF_2-$, $-CF_2-O-$, $-O-CF_2-$, $-CH_2-CH_2-$, -CH=CH-, -CF=CF-, -CF=CH-, -CH=CF-, -C≡C-, $-OCH_2-$, $-CH_2O-$ et des liaisons simples ; et
i est, pour chaque occurrence de manière identique ou différente, 1, 2 ou 3.

**13.** Matériau cristallin liquide selon la revendication 12, **caractérisé en ce que** le groupe Ch est conforme à l'une des formules (Ch-1) et (Ch-2) qui suivent :

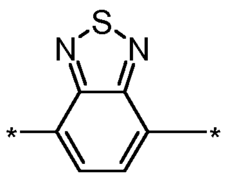

formule (Ch-1)

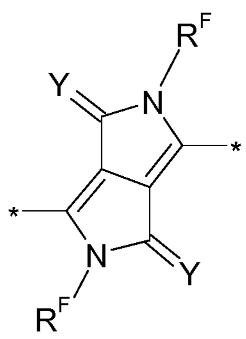

formule (Ch-2),

dans lesquelles les groupes sont dans chaque cas liés au reste du composé de la formule (F) via les liens qui sont étiquetés à l'aide de *,
où les groupes peuvent être substitués au niveau de chacune des positions libres par des radicaux $R^F$ ;

où Y est sélectionné, pour chaque occurrence de manière identique ou différente, parmi O et $NR^F$ ; et où $R^F$ est défini tel que selon la revendication 12.

**14.** Matériau cristallin liquide selon une ou plusieurs des revendications 1 à 13, **caractérisé en ce que** son anisotropie diélectrique $\Delta\varepsilon$ est supérieure à 3.

**15.** Utilisation du matériau cristallin liquide selon une ou plusieurs des revendications 1 à 14 dans un dispositif de commutation optique.

**16.** Dispositif pour la régulation homogène du passage de la lumière au travers d'une zone surfacique, contenant un matériau cristallin liquide selon une ou plusieurs des revendications 1 à 14.

**17.** Dispositif selon la revendication 16, **caractérisé en ce que** le matériau cristallin liquide est présent à l'intérieur d'une couche de commutation.

**18.** Dispositif selon la revendication 16 ou 17, **caractérisé en ce qu'**il convient pour la régulation du passage de la lumière se présentant sous la forme de la lumière du jour qui provient de l'environnement et qui arrive à l'intérieur d'une pièce.

**19.** Dispositif selon une ou plusieurs des revendications 16 à 18, **caractérisé en ce qu'**il peut être commuté électriquement.

**20.** Dispositif selon une ou plusieurs des revendications 16 à 19, **caractérisé en ce qu'**il n'inclut pas de polariseur.

**21.** Vitre contenant un dispositif selon une ou plusieurs des revendications 16 à 20.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2009141295 A
- WO 2014090367 A
- EP 14000141
- WO 2013097919 A1
- US 20070218216 A1
- JP 2003104976 A
- WO 2014135240 A2
- WO 2014180525 A1
- US 5762824 A
- WO 2014187529 A
- EP 13005918
- EP 34832 A
- EP 44893 A
- EP 48583 A
- EP 54217 A
- EP 56492 A
- EP 59036 A
- GB 2065158 A
- GB 2065695 A
- GB 2081736 A
- GB 2082196 A
- GB 2094822 A
- GB 2094825 A
- JP OS55123673 A
- DE 3017877
- DE 3040102
- DE 3115147
- DE 3115762
- DE 3150803
- DE 3201120
- DE 3307238
- DE 3126108
- DE 3202761
- EP 43904 A
- DE 3123519
- WO 822054 A
- GB 2079770 A
- JP OS5657850 A
- JP OS56104984 A
- US 4308161 A
- US 4308162 A
- US 4340973 A
- US 7038745 B
- US 6099758 A
- US 20110043732 A
- US 7023602 B
- WO 2012052100 A


### In der Beschreibung aufgeführte Nicht-Patentliteratur


- **B. JELLE et al.** *Solar Energy Materials & Solar Cells,* 2012, 1-28
- **B. BAHADUR.** Liquid Crystals - Applications and Uses. World Scientific Publishing, 1992, vol. 3
- **T. UCHIDA ; C. SHISHIDO ; H. SEKI ; M. WADA.** *Mol. Cryst. Lig. Cryst.,* 1977, vol. 39, 39-52
- **H. SEKI ; C. SHISHIDO ; S. YASUI ; T. UCHIDA.** *Jpn. J. Appl. Phys.,* 1982, vol. 21, 191-192
- **D. S. KLIGER et al.** Polarized Light in Optics and Spectroscopy. Academic Press, 1990
- Merck Liquid Crystals, Physical Properties of Liquid Crystals. Merck KGaA, November 1997
- Merck Liquid Crystals, Physical Properties of Liquid Crystals. Merck KGaA, Deutschland, November 1997
- **H. SEIBERLE et al.** SID. 1992, vol. 92, 25 ff